# EUROPEAN PATENT APPLICATION

(11) **EP 2 211 309 A1**
(43) Date of publication of application: **28.07.2010**
(21) Application number: 10075094.2
(22) Date of filing: 12.05.2001
(51) Int. Cl.: G07C 9/00

(54) **Authentication token and authentication system**

(30) Priority: 12.01.2001 JP 2001005002; 12.01.2001 JP 2001004998; 12.01.2001 JP 2001005033; 02.04.2001 JP 2001103058; 02.04.2001 JP 2001103066; 03.04.2001 JP 2001104331
(62) Divisional of application: 01250162.3
(71) Applicant: Nippon Telegraph and Telephone Corporation, Chiyoda-ku Tokyo 100-8116 (JP)
(72) Inventor: Shigematsu, Satoshi, Tokyo 180-8585 (JP); Saito, Kenichi, Tokyo 180-8585 (JP); Machida, Katsuyuki, Tokyo 180-8585 (JP); Hatano, Takahiro, Tokyo 180-8585 (JP); Kyuragi, Hakaru, Tokyo 180-8585 (JP); Unno, Hideyuki, Tokyo 180-8585 (JP); Suto, Hiroki, Tokyo 180-8585 (JP); Nakanishi, Mamoru, Tokyo 180-8585 (JP); Fujii, Koji, Tokyo 180-8585 (JP); Morimura, Hiroki, Tokyo 180-8585 (JP); Shimamura, Toshishige, Tokyo 180-8585 (JP); Adachi, Takuya, Tokyo 180-8585 (JP); Ikeda, Namiko, Tokyo 180-8585 (JP)
(74) Representative: Wenzel & Kalkoff

(57) **Abstract**

An authentication system for executing user authentication, which is necessary when a user is to use a service providing apparatus (102) for providing a predetermined service, by using biometrical information of a user. The system comprises an authentication token (101) and a service providing apparatus (102).
The authentication token (101) is normally held by a user and, when the user is to use said service providing apparatus, connected to said service providing apparatus (102) to perform user authentication on the basis of biometrical information of the user. The authentication token (101) comprises a personal collation unit (111) for performing collation on the basis of the biometrical information detected from the user to check whether the user is an authentic user, a storage circuit (112) for storing a password (112A) of said authentication token (101) and token identification information (112B) for identifying said authentication token, and a first communication unit (113) for, when the personal collation result indicates that the collation is successful, transmitting the password and token identification information in said storage circuit (112) to said service providing apparatus (102) as communication data. The personal collation unit (111) and first communication unit (113) are integrated. The token further comprises a detachably attachable protocol conversion unit (31,41) for converting the communication data from said first communication unit (14,113) into a data format receivable and decodable by the service providing apparatus and transmitting the communication data to the service providing apparatus.
The service providing apparatus (102) comprises a second communication unit (121) for receiving the password and token identification information, a database (122) for storing the token identification information and password in advance in association with each other, a collation circuit (123) for collating the password contained in the communication data with a password obtained from the database using the token identification information as a key, and a processing unit (124) for executing predetermined processing when the collation by the collation circuit is successful thereby providing a service to the user.

## Description

### Background of the Invention

The present invention relates to an authentication token and authentication system and, more particularly, to an authentication token and authentication system for authenticating an authentic user using human biometrical information, and applications using the authentication token.

In a highly information-oriented society, it is required to strictly authenticate a user while keeping affinity with information processing. Especially, such a strong demand has arisen for a door way monitoring system, information management system for handling important information such as personal information, or a settlement system for electronic payment.

To meet this requirement, extensive studies and examinations of authentication systems for authenticating a person on the basis of electronically detected unique biometrical information have been done based on a semiconductor device manufacturing technology or information processing technology,

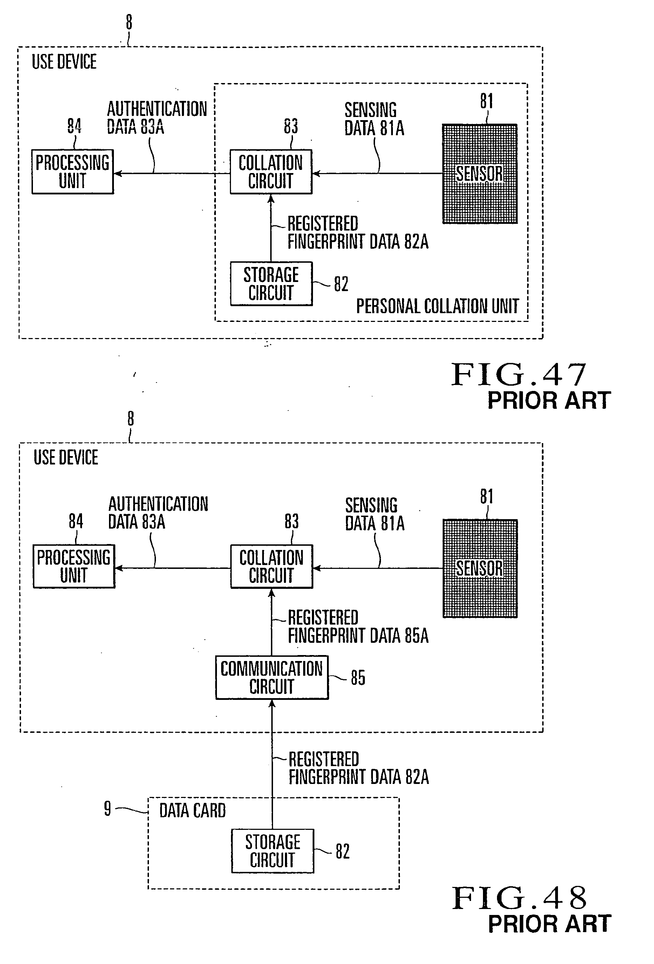

For a conventional authentication system, as shown in Fig. 47, a sensor 81, storage circuit 82, and collation circuit 83 are provided in a use device 8 which provides a predetermined service by a processing unit 84 when, e.g., user authentication is obtained. The sensor 81 electronically detects biometrical information such as a fingerprint and outputs obtained sensing data 81A to the collation circuit 83. The storage circuit 82 stores information to be collated with the user's biometrical information as registered fingerprint data 82A.

The collation circuit 83 collates the registered fingerprint data 82A read out from the storage circuit 82 with the sensing data 81A from the sensor 81, thereby performing user authentication. The authentication result is output to the processing unit 84 as authentication data 83A. The processing unit 84 provides a predetermined service to the user only when the authentication data 83A from the collation circuit 83 indicates that authentication is successful.

Alternatively, only the storage circuit 82 may be separately provided in a portable data card 9, as shown in Fig. 48. In this case, the data card 9 of each user is connected to the use device 8, and the registered fingerprint data 82A stored in the storage circuit 82 is loaded to the collation circuit 83 as registered fingerprint data 85A through a communication circuit 85 provided in the use device 8, and collated.

However, such a conventional authentication system has the following problems because the sensor 81 for detecting the biometrical information of a user and the collation circuit 83 for performing collation are arranged in the use device 8, and information to be collated with the user's biometrical information, i.e., the registered fingerprint data 82A stored in the storage circuit 82 is loaded to the collation circuit 83 in the use device 8 and collated with the sensing data 81A.

According to the former system (Fig. 47), ① unless the fingerprint data 82A of the user is registered in advance in the storage circuit 82 in the use device 8, even the authentic user cannot receive the service. ② To store registered fingerprint data of a number of users in all devices for providing the service, the distribution method and storage method become complex and large-scaled, resulting in an increase in cost or degradation in safety. ③ The system in which the fingerprint data of the user is registered in the device is mentally hard to accept because the user's privacy is lost.

In the latter authentication system (Fig. 48), problems ① to ③ can be avoided because the user himself/herself holds and manages the registered data by the data card 9. However, ④ since the registered fingerprint data of the user is transmitted to the service device at the time of collation, measures against data leakage are necessary, resulting in bulky system. ⑤ Since the sensor circuit 81 for detecting biometrical information is shared by many unspecified users, malfunction of the sensor 81 makes all services of the device unavailable. ⑥ To detect, e.g., a fingerprint, the body must be partially brought into contact with the sensor 81 that is shared by many people, which poses a problem of sanitation for users, and to solve this problem, the system becomes bulky.

### Summary of the Invention

It is therefore the principal object of the present invention to provide an authentication token, authentication system, and application thereof, which can prevent registered data to be used for collation from leakage, minimize the influence of sensor malfunction, and keeping satisfactory sanitary environment for users.

It is another object of the present invention to provide an authentication token, authentication system, and application thereof, which can prevent any illicit use of service and correctly authenticate a user.

In order to achieve the above objects, according to the present invention, there is provided an authentication token which is normally held by a user and, when the user is to use a use device for executing predetermined processing in accordance with authentication data of the user, connected to the use device to perform user authentication on the basis of biometrical information of the user, comprising a personal collation unit including a sensor for detecting the biometrical information of the user and outputting a detection result as sensing data, a storage unit which stores in advance registered data to be collated with the biometrical information of the user, and a collation unit for collating the registered data stored in the storage unit with the sensing data from the sensor and outputting a collation result as authentication data representing a user authentication result, and a communication unit for transmitting the authentication data from the personal collation unit to the use device as communication data, wherein the personal collation unit and communication unit are integrated.

### Brief Description of the Drawings

Fig. 1 is a block diagram showing an authentication token and authentication system according to the first embodiment of the present invention;
Figs. 2A to 2D are views showing the outer appearance of the authentication token shown in Fig. 1;
Figs. 3A and 3B are views showing a detailed example of a sensor shown in Figs. 1 and 2, in which Fig. 3A is a sectional view, and Fig. 3B is a circuit diagram showing the capacitance detection circuit of the sensor;
Figs. 4A to 4C are timing charts for explaining the operation of the capacitive detection circuit of the sensor shown in Fig. 3B;
Fig. 4D is a view showing a modification of a storage circuit shown in Fig. 1;
Fig. 5 is a block diagram showing an authentication token and authentication system according to the second embodiment of the present invention;
Fig. 6 is a block diagram showing an authentication token and authentication system according to the third embodiment of the present invention;
Fig. 7 is a block diagram showing an authentication system according to the fourth embodiment of the present invention;
Fig. 8 is a block diagram showing an authentication system according to the fifth embodiment of the present invention;
Fig. 9 is a block diagram showing an authentication system according to the sixth embodiment of the present invention;
Fig. 10 is a block diagram showing an authentication system according to the seventh embodiment of the present invention;
Fig. 11 is a block diagram showing an authentication system according to the eighth embodiment of the present invention;
Fig. 12 is a view showing the outer appearance of a fingerprint authentication storage to which the present invention is applied;
Fig. 13 is a block diagram showing the arrangement of the fingerprint authentication storage shown in Fig. 12;
Fig. 14 is a flow chart showing the operation of the fingerprint authentication storage and authentication token according to the ninth embodiment shown in Figs. 12 and 13 in storing an article;
Fig. 15 is a flow chart showing the operation of the fingerprint authentication storage and authentication token according to the ninth embodiment shown in Figs. 12 and 13 in taking out the stored article;
Fig. 16 is a flow chart showing the operation of a fingerprint authentication storage and authentication token according to the 10th embodiment in storing an article;
Fig. 17 is a flow chart showing the operation of a fingerprint authentication storage and authentication token according to the 11th embodiment in storing an article;
Fig. 18 is a flow chart showing the operation of the fingerprint authentication storage and authentication token according to the 11th embodiment in taking out the stored article;
Fig. 19 is a view showing a fingerprint authentication storage according to the 12th embodiment;
Fig. 20 is a block diagram showing the arrangement of the fingerprint authentication storage shown in Fig. 19;
Fig. 21 is a flow chart showing the main operation of the fingerprint authentication storage and authentication token shown in Fig. 19;
Fig. 22 is a flow chart showing the main operation of the fingerprint authentication storage and authentication token shown in Fig. 19;
Fig. 23 is a block diagram showing the arrangement of the 13th embodiment in which the present invention is applied to a gate opening/closing system;
Fig. 24 is a flow chart showing the operation of the gate opening/closing system shown in Fig. 23;
Fig. 25 is a flow chart showing the operation of the gate opening/closing system shown in Fig. 23;
Fig. 26 is a block diagram showing the arrangement of the 14th embodiment in which the present invention is applied to a gate opening/closing system;
Fig. 27 is a flow chart showing the operation of the gate opening/closing system according to the 14th embodiment;
Fig. 28 is a block diagram showing the arrangement of a gate opening/closing system according to the 15th embodiment;
Fig. 29 is a block diagram showing the arrangement of a system according to the 16th embodiment in which the present invention is applied to an automatic teller machine;
Fig. 30 is a flow chart showing the operation of the automatic teller machine and authentication token according to the 16th embodiment in withdrawing cash;
Fig. 31 is a flow chart showing the operation of an automatic teller machine according to the 17th embodiment in depositing cash;
Figs. 32A and 32B are views showing the outer appearance of the 18th embodiment in which the present invention is applied to a portable terminal system;
Fig. 33 is a block diagram showing the arrangement of the portable terminal device according to the 18t embodiment;
Fig. 34 is a flow chart showing the operation of the portable terminal system according to the 18th embodiment;
Fig. 35 is a flow chart showing the operation of a portable terminal system according to the 19th embodiment;
Fig. 36 is a block diagram showing the arrangement of an authentication system according to the 20th embodiment of the present invention;
Fig. 37 is a block diagram showing the arrangement of an encryption circuit in a biometrical information recognition integrated circuit shown in Fig. 36;
Fig. 38 is a flow chart showing the operation of a service providing apparatus shown in Fig. 36;
Fig. 39 is a flow chart showing the operation of the biometrical information recognition integrated circuit shown in Fig. 36;
Fig. 40 is a block diagram showing the arrangement of an authentication system according to the 21st embodiment of the present invention;
Fig. 41 is a block diagram showing the arrangement of an encryption circuit in a biometrical information recognition integrated circuit shown in Fig. 40;
Fig. 42 is a flow chart showing the operation of a service providing apparatus shown in Fig. 40;
Fig. 43 is a flow chart showing the operation of the biometrical information recognition integrated circuit shown in Fig. 40;
Fig. 44 is a block diagram showing the arrangement of an authentication system according to the 22nd embodiment of the present invention;
Fig. 45 is a flow chart showing the operation of a service providing apparatus shown in Fig. 44;
Fig. 46 is a flow chart showing the operation of a biometrical information recognition integrated circuit shown in Fig. 44;
Fig. 47 is a block diagram showing a conventional authentication system; and
Fig. 48 is a block diagram showing another conventional authentication system.

### Description of the Preferred Embodiments

Embodiments of the present invention will be described next with reference to the accompanying drawings.

### First Embodiment

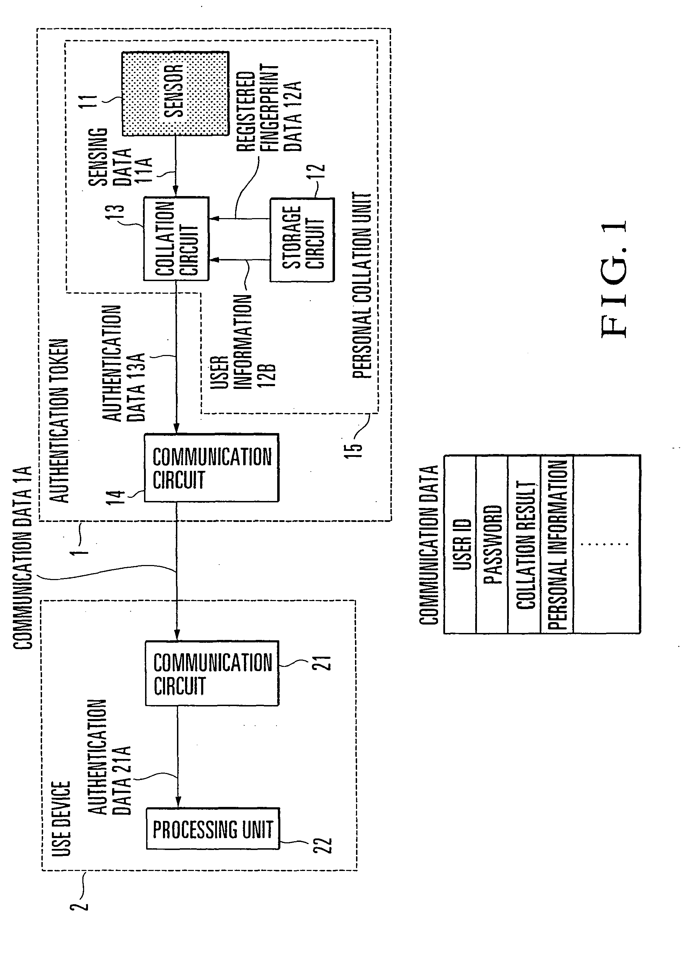

Fig. 1 shows a first embodiment of the present invention. This authentication system is constituted by a use device 2 for providing a service when user authentication is obtained, and an authentication token 1 which is normally held by a user and connected to the use device 2 in providing a service to authenticate the user using the biometrical information of the user.

In the present invention, a token indicates a compact and lightweight device portable by a user, and an authentication token means a token having a function of authenticating the user. In the example to be described below, a fingerprint is used as biometrical information. As biometrical information, a voiceprint, iris, palm shape (finger joint length), vein pattern, face layout pattern, or the like can also be used.

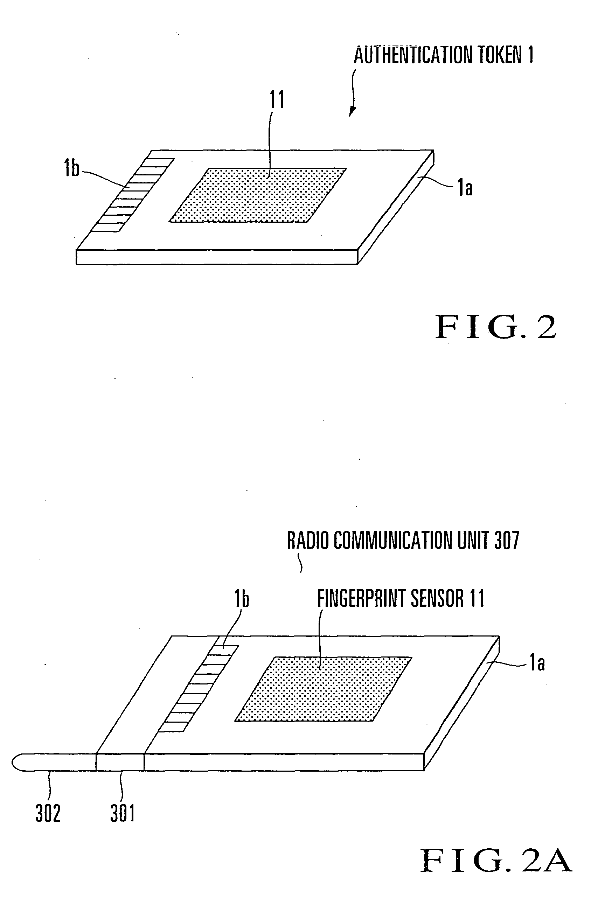

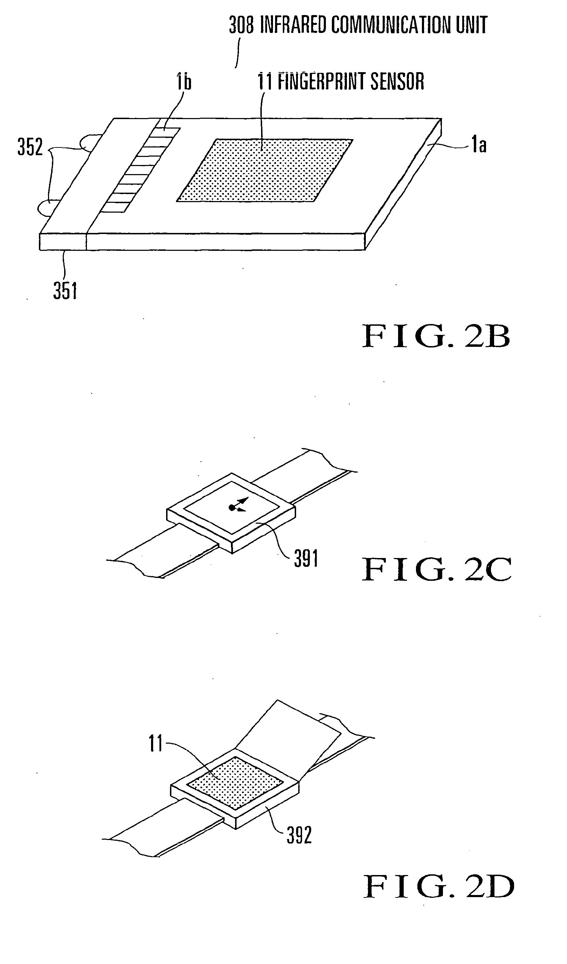

The authentication token 1 has a sensor 11 for reading a fingerprint (biometrical information), a storage circuit 12 for storing registered fingerprint data 12A and user information 12B of the user, a collation circuit 13 for collating sensing data 11A representing the read result by the sensor 11 with the registered fingerprint data 12A stored in the storage circuit 12, and a communication circuit 14 for externally communicating from the authentication token 1 authentication data 13A containing the collation result by the collation circuit 13 as communication data 1A. The authentication token 1 formed by integrating these circuit sections is detachably connected to the use device 2, as shown in Fig. 2. The sensor 11, storage circuit 12, and collation circuit 13 construct a personal collation unit 15.

Referring to Fig. 2, a main body section 1a includes the sensor 11, storage circuit 12, collation circuit 13, and communication circuit 14. A terminal or connector 1b is connected to the use device.

The use device 2 has a communication circuit 21 for receiving the communication data 1A from the authentication token 1, and a processing unit 22 for providing a service to the user only when the collation result contained in the received communication data 1A represents matching. Various applications can be used as the processing unit, including a lock apparatus, gate opening/closing system, automatic teller machine, and a portable terminal apparatus such as a portable telephone (to be described later).

The operation of the first embodiment will described next with reference to Fig. 1.

The user stores in the storage circuit 12 of his/her authentication token 1 the registered fingerprint data 12A of his/her own and the user information 12B containing a password and personal information for use of the service in advance.

To use the use device 2, the user connects his/her authentication token 1 to the use device 2 and places a finger on the sensor 11. The sensor 11 of the authentication token 1 reads the fingerprint of the user and outputs the sensing data 11A. The sensing data 11A is collated with the registered fingerprint data 12A of the storage circuit 12 by the collation circuit 13. The authentication data 13A containing the collation result is output. At this time, the collation circuit 13 reads out the user information 12B containing the user ID, password, and personal information stored in the storage circuit 12 in advance and outputs the authentication data 13A containing the user information 12B.

The communication circuit 14 transmits to the use device 2 the authentication data 13A from the collation circuit 13 as the communication data 1A. The communication circuit 21 of the use device 2 receives the communication data 1A transmitted from the communication circuit 14 of the authentication token 1 and outputs authentication data 21A that has the same contents as those of the authentication data 13A. The processing unit 22 receives the authentication data 21A and refers to the collation result contained in the authentication data 21A. If the collation result represents matching, the processing unit 22 executes predetermined processing desired by the user.

In the embodiment shown in Fig. 1, the sensor 11 for detecting the fingerprint of the user and outputting the detection result as sensing data, the storage circuit 12 which stores in advance the registered fingerprint data 12A to be collated with the fingerprint of the user, the collation circuit 13 for collating the sensing data 11A from the sensor 11 with the registered fingerprint data 12A stored in the storage circuit 12 and outputting the collation result as authentication data, and the communication circuit 14 for transmitting the authentication data from the collation circuit 13 to the use device 2 as the communication data 1A are integrated into the authentication token 1.

When the user wants to use the use device 2 for executing predetermined processing in accordance with authentication, the authentication token 1 is connected to the use device 2, user authentication is done in the authentication token 1 on the basis of the biometrical information of the user, and the use device 2 is notified of the result.

The use device 2 has the communication circuit 21 for receiving the communication data 1A transmitted from the authentication token 1 and outputting the data as the authentication data 21A, and the processing unit 22 for executing predetermined processing on the basis of the collation result contained in the authentication data 21A from the communication circuit 21 so that the predetermined processing is executed on the basis of the authentication result in the authentication token 1 of each user, which is provided separately from the use device 2.

Hence, unlike the prior art in which the sensor for detecting the biometrical information of a user and the collation circuit for performing collation are arranged in the use device, and the user's registered data is held and managed by the user himself/herself with the data card, the registered data is not externally output from the authentication token, so the registered data for collation can be prevented from leakage. In addition, since the sensor need not be shared by many unspecified users, and the sensors of authentication tokens individually held by users are used, sensor malfunction does not affect other users. Furthermore, even when part of the body, e.g., the skin surface of a finger must be partially brought into contact with the sensor to detect biometrical information, a satisfactory sanitary environment can be maintained for the user.

To make the authentication token 1 easy to hold, various circuits including the sensor, storage circuit, and collation circuit are integrated, i.e., accommodated in a single case. In this case, these various circuits may be formed on a single board. When a technique of forming these various circuits as a one-chip semiconductor device (e.g., Japanese Patent Laid-Open No. 2000-242771) is used, a very small authentication token can be implemented.

Since the user information 12B containing the user ID, password, and personal information is stored in the storage circuit 12 in advance, and the authentication data 13A containing these pieces of information is transmitted to the use device 2, the processing unit 22 of the use device 2 can determine whether processing can be executed by checking the user information 12B contained in the authentication data, e.g., the user ID or password. Hence, authentication can be done in accordance with a reference corresponding to the importance of processing to be executed by the use device. In addition when the personal information contained in the user information 12B, such as the name, address, telephone number, account number, or credit card number is used for processing, the user need not input personal information necessary for processing, and the operation load on the user can be greatly reduced.

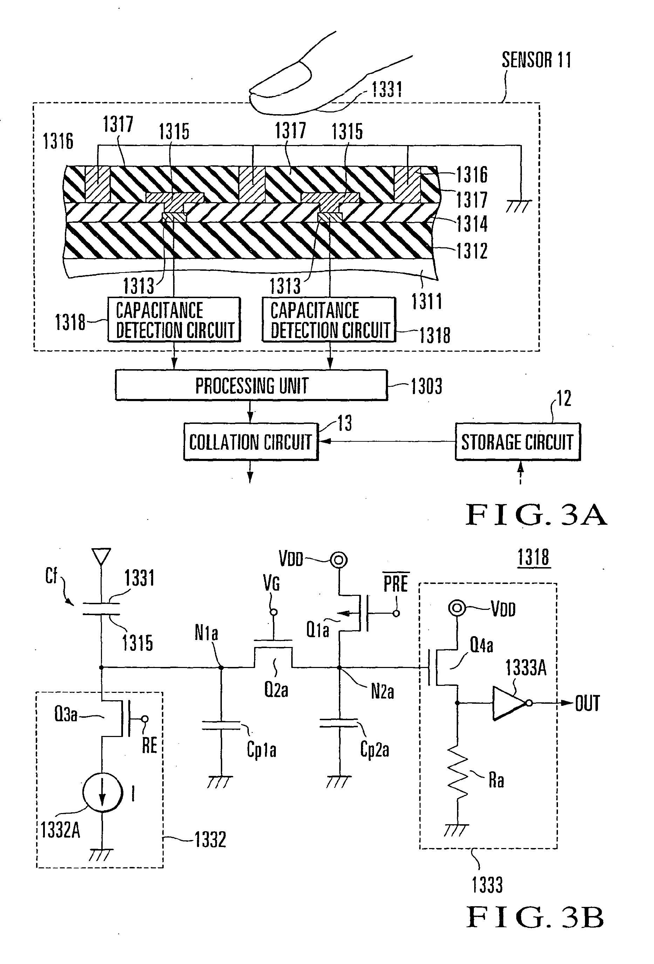

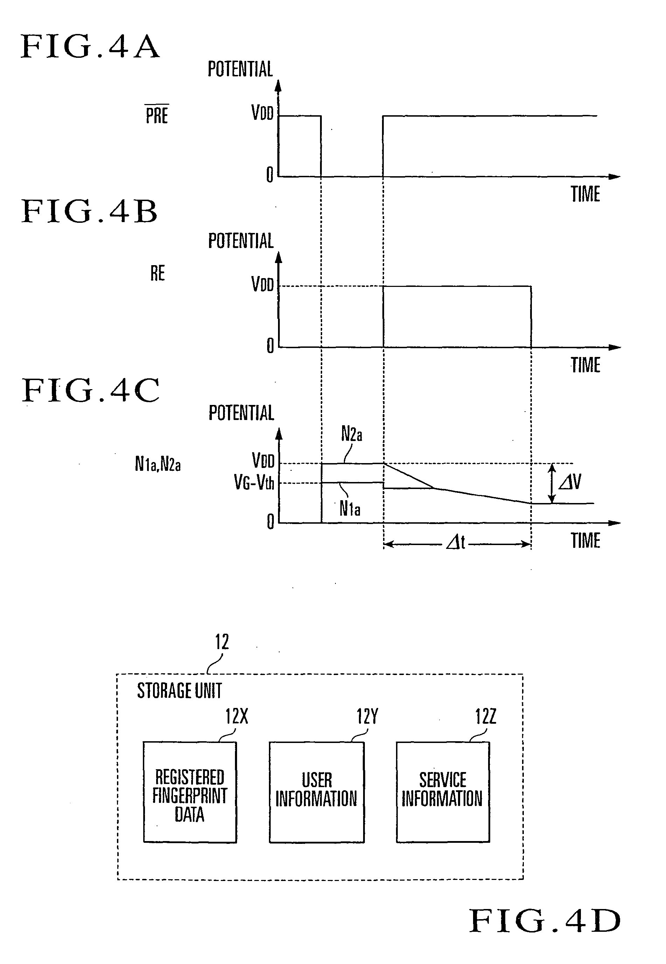

Specific examples of the authentication token 1 will be described with reference to Figs. 3A, 3B, and 4A to 4C.

Fig. 3A schematically shows the sectional structure of the sensor 11 of the authentication token 1. The sensor 11 has, e.g., a plurality of 80-µm square sensor electrodes 1315 and a matrix-shaped ground electrode 1316 on an interlayer dielectric film 1314 formed on an underlying insulating film 1312 on a semiconductor substrate 1311 formed from, e.g., silicon. The plurality of sensor electrodes 1315 and the ground electrode 1316 are flush with each other on a single plane defined by the surface of the interlayer dielectric film 1314.

The plurality of sensor electrodes 1315 are formed at an interval of 150 µm and covered by a passivation film 1317 formed on the interlayer dielectric film 1314. The sensor electrodes 1315 are made of Au and have a thickness of about 1 µm. Since the thickness of the passivation film 1317 is about 3 µ m, the passivation film 1317 having a thickness of about 2 (= 3 - 1) µm is present on the sensor electrodes 1315. The passivation film 1317 is made of an insulating material such as polyimide that has a relative permittivity of about 4.0.

An interconnection 1313 connected to the sensor electrodes 1315 via through holes is formed on the underlying insulating film 1312. Capacitance detection circuits 1318 for detecting capacitances formed on the sensor electrodes 1315 are formed on the semiconductor substrate 1311.

Each capacitance detection circuit 1318 is connected to a corresponding sensor electrode 1315 by the above-described interconnection 1313. The capacitance detection circuits 1318 are provided for the respective sensor electrodes 1315 to detect capacitances formed between the sensor electrodes 1315 and part of an object (finger) to be recognized.

The output side of each capacitance detection circuit 1318 is connected to a processing circuit 1303 which converts the capacitance formed on each sensor electrode 1315 into a halftone image and outputs fingerprint data to the collation circuit 13.

Each capacitance detection circuit 1318, collation circuit 13, and storage circuit 12 are formed, e.g., on the semiconductor substrate 1311 under a corresponding sensor electrode 1315. This allows a one-chip authentication token 1. Another example of such a one-chip structure is disclosed in, e.g., Japanese Patent Laid-Open No. 2000-292771.

Fig. 3B shows the detailed structure of the capacitance detection circuit 1318 shown in Fig. 3A. An electrostatic capacitance Cf is formed between skin 1331 of a finger and the sensor electrode 1315 shown in Fig. 3A. The sensor electrode 1315 that forms the capacitance Cf is connected to the drain terminal of an NMOS transistor Q3a. The source terminal of the transistor Q3a is connected to the input side of a current source 1332A of a current I.

The source terminal of an NMOS transistor Q2a (first element) is connected to a node N1a between the sensor electrode 1315 and the transistor Q3a. The gate terminal of an NMOS transistor Q4a, which has a drain terminal to which a power supply voltage VDD is applied and a source terminal grounded through a resistor Ra, is connected to a node N2a between the drain terminal of the transistor Q2a and the drain terminal of a PMOS transistor Q1a (first switch means). An inverter gate 1333A is connected to the source terminal of the transistor Q4a.

Signals P̅R̅E̅ and RE are applied to the gate terminals of the transistors Q1a and Q3a, respectively. A bias voltage VG is applied from a constant voltage source to the gate terminal of the transistor Q2a. Let Vth be the threshold voltage between the gate and the source, which turns off the transistor Q2a. The voltages VDD and VG are set such that VDD > VG - Vth.

The nodes N1a and N2a have parasitic capacitances Cp1a and Cp2a, respectively. The current source 1332A and transistor Q3a form a signal generation circuit 1332. The transistor Q4a, resistor Ra, and inverter gate 1333A form an output circuit 1333.

Figs. 4A to 4C explain the operation of the capacitance detection circuit 1318. Fig. 4A shows a change in potential of the signal P̅R̅E̅ for controlling the transistor Q1a, Fig. 4B shows a change in potential of the signal RE for controlling the transistor Q3a, and Fig. 4C shows changes in potentials at the nodes N1a and N2a.

First, the signal P̅R̅E̅ of high level (VDD) is applied to the gate terminal of the transistor Q1a, and the signal RE of low level (GND) is applied to the gate terminal of the transistor Q3a. Hence, both the transistors Q1a and Q3a are off at this time.

In this state, when the signal P̅R̅E̅ changes from high level to low level, the transistor Q1a is turned on. Since the transistor Q3a is kept off, and the signal generation circuit 1332 is kept off, the potential at the node N2a is precharged to VDD.

The node N1a is charged until the gate-source voltage of the transistor Q2a reaches the threshold voltage Vth to turn off the transistor Q2a. The potential at the node N1a is precharged to VG - Vth.

When the precharge is ended, and the signal P̅R̅E̅ changes to high level, the transistor Q1a is turned off. When the signal RE simultaneously changes to high level, the transistor Q3a is turned on to change the signal generation circuit 1332 to the operative state.

When the charges accumulated at the node N1a by the current source 1332A are removed, and the potential at the node N1a slightly lowers, the gate-source voltage of the transistor Q2a becomes higher than the threshold voltage Vth to turn on the transistor Q2a. With this operation, the charges at the node N2a are also removed, and the potential at the node N2a starts dropping.

Let Δt be the period while the signal RE is at high level. A potential drop amount ΔV at the node N1a after the elapse of Δt is given by VDD - (VG - Vth) + IΔt/(Cf + Cpla). The parasitic capacitance Cp2a is assumed to be much smaller than the parasitic capacitance Cp1a.

Since the current I of the current source 1332A, period Δt, and parasitic capacitances Cp1a and Cp2a are constant, the potential drop amount ΔV is determined by the value Cf of capacitance generated between the sensor electrode 1315 and the skin surface 1331 of the finger to be recognized. This capacitance value Cf is determined by the distance between the sensor electrode 1315 and the skin surface 1331 of the finger and therefore changes depending on the three-dimensional pattern of the fingerprint. Hence, the magnitude of the potential drop amount ΔV changes depending on the three-dimensional pattern of the fingerprint. Since the potential drop amount ΔV is supplied to the output circuit 1333 as an input signal, the output circuit 1333 receives the potential drop amount ΔV and outputs a signal that reflects the three-dimensional pattern of the fingerprint.

The output signal from each capacitance detection circuit 1318 is output to the collation circuit 13 through the processing circuit 1303 as the above-described fingerprint image data. The collation circuit 13 compares and collates the fingerprint image data with the registered fingerprint image data stored in the storage circuit 12 in advance, thereby authenticating the user.

Fig. 4D shows a modification of the storage circuit 12 of the authentication token 1. The storage circuit 12 in the authentication token 1 may have three separated storage areas 12X, 12Y, and 12Z to store various kinds of information.

In this example, the registered fingerprint data 12A to be used for fingerprint authentication is stored in the storage area 12X, and the user (personal) information 12B (e.g., name, address, year/month/day of birth, and credit card number) of the token holder is stored in the storage area 12Y.

Pieces of service information related to the service (e.g., password, identification information of the authentication token, date and time of use, coin locker door number, gate opening/closing, title of concert, ATM account number, password for electronic commerce, telephone directory, and e-mail address) are stored in the storage area 12Z.

Generally, in the authentication token 1, only the registered fingerprint data 12A is stored in the token, and only the personal authentication result is output externally from the token. According to this arrangement, however, the system to which the authentication token can be applied is limited.

However, when various kinds of information are stored, as shown in Fig. 4D, these pieces of information or processed information obtained by processing the pieces of information can be transmitted/received to/from the use device 2, and various services can be received using the authentication token.

### Second Embodiment

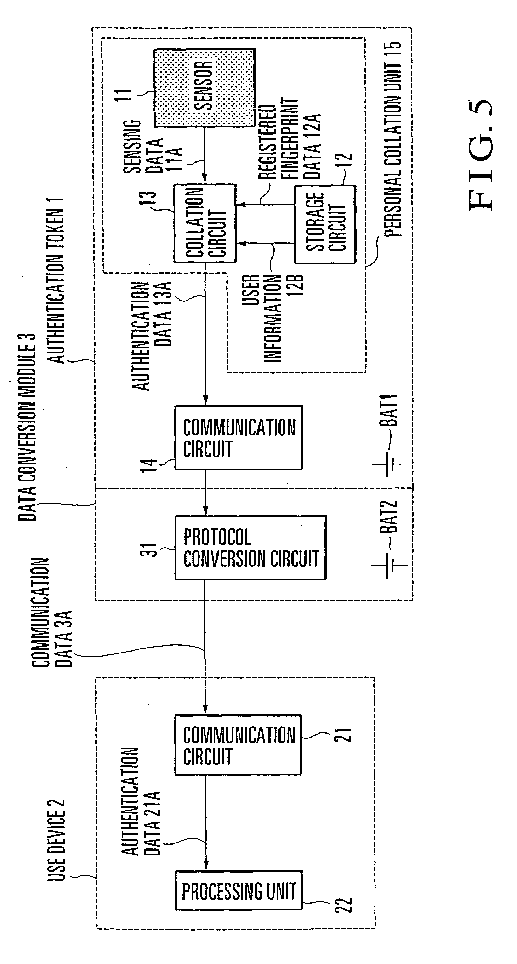

Fig. 5 shows a second embodiment of the present invention in which a data conversion module 3 is added to the output side of an authentication token 1 in the authentication system of the first embodiment.

The data conversion module 3 incorporates a protocol conversion circuit 31 for converting communication data output from a communication circuit 14 of the authentication token 1 into a data format that can be received and decoded by a use device 2.

Since the desired use device 2 and authentication token 1 are connected through the data conversion module 3 which can be detachably attached to the authentication token 1, user authentication can be done using a single authentication token even for use devices that employ different data formats. In addition, when data conversion modules corresponding to various formats are prepared and easily attached/detached to/from the authentication token, the user can use various use devices by a single authentication token and need not hold a plurality of authentication tokens. One data conversion module may be shared by a plurality of users.

In the above-described example, the data conversion module 3 is detachably attached to the authentication token 1. However, the protocol conversion circuit 31 may be provided in the authentication token 1. In this case, the system can be made more compact.

### Third Embodiment

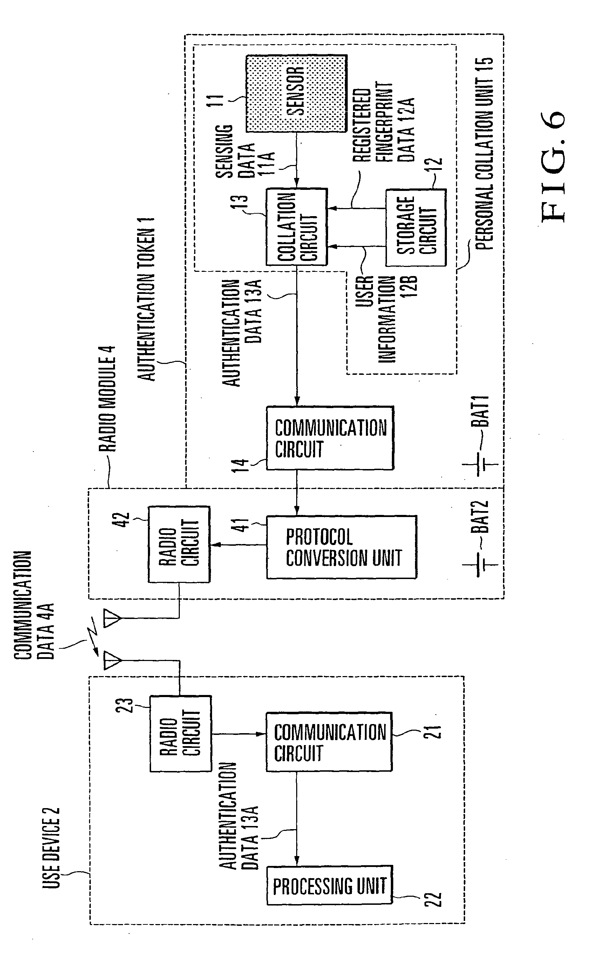

Fig. 6 shows the arrangement of a third embodiment of the present invention, in which a radio module 4 is added to the output side of an authentication token 1 in the authentication system according to the first embodiment.

The radio module 4 has a protocol conversion unit 41 for converting communication data output from a communication circuit 14 of the authentication token 1 into a data format that can be received and decoded by a use device 2, and a radio circuit 42 for transmitting the communication data from the protocol conversion unit 41 to the use device 2 through a radio section. In this case, the use device 2 side must also have a radio circuit 23.

Since the desired use device 2 and authentication token 1 are connected using the radio module 4 that can be detachably attached to the authentication token 1, the user can execute user authentication using the authentication token 1 and receive the service, e.g., at hand without directly connecting the authentication token 1 to the use device 2. Hence, the load on the user at the time of authentication by operation of connecting the authentication token 1 to the use device 2 or operation of performing authentication using the authentication token 1 connected to the use device 2 can be greatly reduced.

In addition, when a radio module compatible to various kinds of communication protocols is prepared and easily attached/detached to/from the authentication token, the user can use various use devices by a single authentication token. One radio module may be shared by a plurality of users.

When the use device 2 and authentication token 1 use the same communication protocol, the protocol conversion unit 41 of the radio module 4 may be omitted. In place of the radio circuit 42, a communication circuit capable of data communication through a radio section, such as an infrared communication circuit or ultrasonic communication circuit, may be used.

In the above-described example, the radio module 4 is detachably attached to the authentication token 1. The radio circuit 42 and protocol conversion unit 41 may be prepared in the authentication token 1. In this case, the system can be made more compact. An encryption scheme may be used for authentication data or communication data to be exchanged between the authentication token 1 and the use device 2. This method can be applied to the above embodiments.

In the above-described first, second, and third embodiments, power to the authentication token 1, data conversion module 3, or radio module 4 may be supplied from a battery provided in the authentication token. Figs. 5 and 6 show batteries BAT1, BAT2, and BAT3. Alternatively, when the authentication token 1 is being connected to the use device 2, power may be supplied from a power supply in the authentication token 1 to the authentication token 1. When the authentication token 1 which uses a chargeable secondary battery as an internal battery is being connected to the use device 2, the secondary battery may be charged using the power supply in the use device 2.

Power supply to the authentication token 1, data conversion module 3, or radio module 4, or charging the secondary battery from the use device may be done using a non-contact power supply technique used for, e.g., a non-contact card.

Power supply to the authentication token 1 is not limited to the above arrangements.

In the above-described second embodiment, power to the respective circuits in the data conversion module 3 or authentication token 1 may be supplied using a battery provided in the data conversion module 3. A chargeable secondary battery may be used as the battery in the data conversion module 3, and the secondary battery may be charged using the power supply of the use device 2.

In the above-described third embodiment, power to the respective circuits in the radio module 4 or authentication token 1 may be supplied using a battery provided in the radio module 4. A chargeable secondary battery may be used as the battery in the radio module 4, and the secondary battery may be charged using the power supply of the use device 2.

As described above, in the present invention, a sensor for detecting biometrical information of a user and outputting the detection result as sensing data, a storage circuit which stores in advance registered data to be collated with the biometrical information of the user, a collation circuit for collating the sensing data from the sensor with the registered data stored in the storage circuit and outputting the collation result representing the user authentication result as authentication data, and a communication circuit for transmitting the authentication data from the collation circuit to the use device as the communication data are integrated into an authentication token. The authentication token is normally held by the user and, when the user will use the use device, the authentication token is connected to the use device to authenticate the user on the basis of the biometrical information of the user.

Hence, unlike the prior art in which the sensor for detecting the biometrical information of a user and the collation circuit for performing collation are arranged in the use device, and the user's registered data is held and managed by the user himself/herself with the data card, the registered data is not externally output from the authentication token, so the registered data for collation can be prevented from leakage. In addition, since the sensor is not shared by many unspecified users, and a sensor is prepared for each of authentication tokens individually held by users, sensor malfunction does not affect other users. Furthermore, even when part of the body, e.g., the skin surface of a finger must be partially brought into contact with the sensor to detect biometrical information, a satisfactory sanitary environment can be maintained for the user.

### Fourth Embodiment

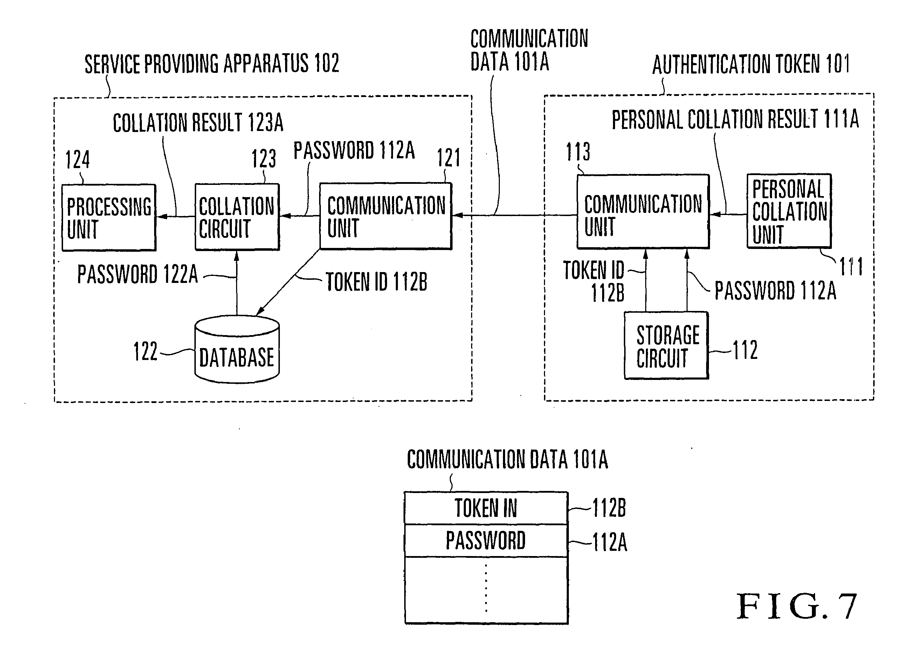

A fourth embodiment of the present invention shown in Fig. 7 will be described next with reference to the accompanying drawings.

This authentication system shown in Fig. 7 is constituted by a service providing apparatus 102 for providing a service to the user, and an authentication token 101 held by a user and connected to the service providing apparatus 102 in providing a service to authenticate the user.

The authentication token 101 has a personal collation unit 111 for performing collation based on the biometrical information of a user to check whether the user is an authentic user, a storage circuit 112 for storing information such as a token ID (token identification information) 112B for identifying the authentication token 101, and a password 112A, and a communication unit (first communication unit) 113 for, only when a personal collation result 111A by the personal collation unit 111 indicates that the collation is successful, transmitting externally from the token the token ID 112B and password 112A stored in the storage circuit 112 as commination data 101A. The personal collation unit 111 used here has the same arrangement as that described in the above embodiments, which includes a sensor 11 for acquiring a fingerprint image, a storage circuit 12 for storing the fingerprint image of the user or registered data representing the characteristic feature of the fingerprint image, and a collation circuit 13 for collating the registered data with the fingerprint image from the user and outputting the collation result, and the operation of the personal collation unit 111 is also the same as in the above-described arrangements.

As shown in Fig. 7, the service providing apparatus 102 has a communication unit (second communication unit) 121 for receiving the commination data 101A from the authentication token 101, a database (first database) 122 for searching for a password 122A that is registered in advance using the token ID 112B contained in the received commination data 101A as a key, a collation circuit 123 for collating the password 112A contained in the received commination data 101A with the obtained password 122A, and a processing unit 124 for determining the service to be provided to the user on the-basis of a collation result 123A by the collation circuit 123 and executing processing for the service.

Before the user receives the service, the authentication token is registered in the service providing apparatus 102.

First, the authentication token 101 of the user is connected to the service providing apparatus 102, and the personal collation unit 111 performs personal collation. If the personal collation result 111A indicates that the collation is successful, the token ID 112B and password 112A stored in the storage circuit 112 are transmitted from the communication unit 113 to the service providing apparatus 102 as the commination data 101A. The communication unit 121 of the service providing apparatus 102 registers in the database 122 the password 112A contained in the received commination data 101A in association with the token ID 112B.

When the password 112A corresponding with the token ID 112B is not registered in the database 122, the service providing apparatus 102 may automatically register the password 112A. The service providing apparatus 102 may be set in a registration receiving state by predetermined operation from an operation input section (not shown).

The authentication token 101 side may transmit information representing a registration request together with the password 112A and token ID 112B.

When the user will use the service providing apparatus 102, the authentication token 101 of the user is connected to the service providing apparatus 102, and the personal collation unit 111 performs personal collation. When the personal collation result 111A represents that the collation is successful, the token ID 112B and password 112A stored in the storage circuit 112 are transmitted from the communication unit 113 to the service providing apparatus 102 as the commination data 101A, as in registration.

In the service providing apparatus 102, the password 122A registered in the above-described way is detected from the database 122 using, as a key, the token ID 112B contained in the commination data 101A received through the communication unit 121, and collated with the password 112A contained in the commination data 101A by the collation circuit 123. Only when the collation result 123A indicates that the collation is successful, the processing unit 124 executes predetermined processing, and the service is provided to the user.

As described above, in this embodiment, instead of transmitting the personal collation result by the authentication token 101, only when the personal collation result by the authentication token 101 shows that the collation is successful, the password and token ID stored in the authentication token 101 in advance are transmitted, the password from the authentication token is collated with the password registered in the service providing apparatus 102 in correspondence with the token ID, and the service is provided on the basis of the collation result. Unlike the prior art in which the service is provided on the basis of the successful collation result from the authentication token, forgery of the authentication token is difficult, and any illicit use of the service can be prevented. In addition, since the authentication token information is used, the user can be specified, and a service can be provided in accordance with the user.

### Fifth Embodiment

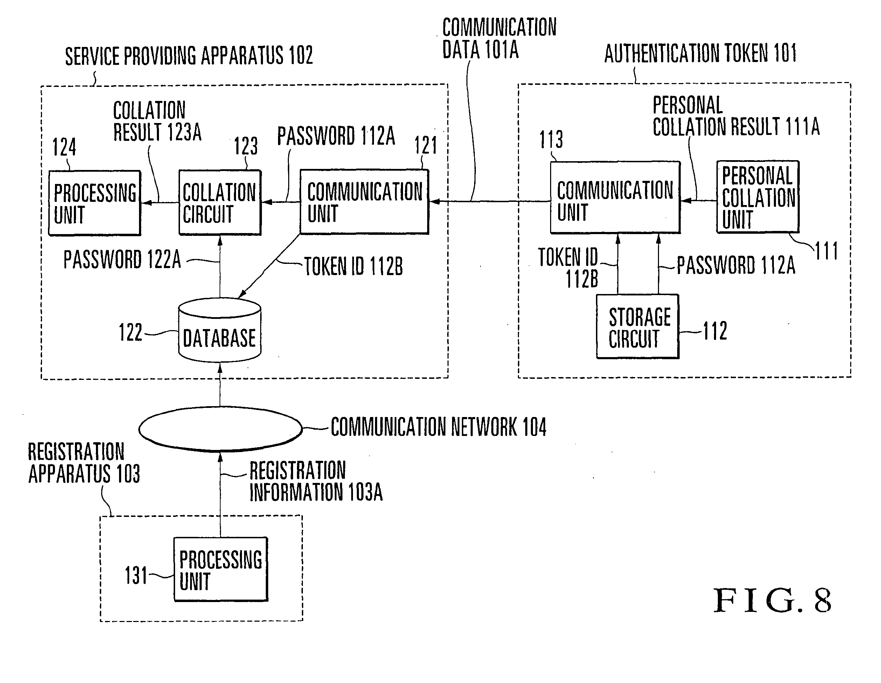

A fifth embodiment shown in Fig. 8 will be described next. The fifth embodiment is different from the above-described fourth embodiment in that a registration apparatus 103 for transmitting registration information 103A to a database 122 of a service providing apparatus 102 through a communication network 104 is added. A personal collation unit 111 used here has the same arrangement as that described in the above embodiments, which includes a sensor 11 for acquiring a fingerprint image, a storage circuit 12 for storing the fingerprint image of the user or registered data representing the characteristic feature of the fingerprint image, and a collation circuit 13 for collating the registered data with the fingerprint image from the user and outputting the collation result, and the operation of the personal collation unit 111 is also the same as in the above-described arrangements.

The registration apparatus 103 has a processing unit 131 so that the registration information 103A, i.e., a set of a token ID and password can be transmitted to the databases 122 of one or more service providing apparatuses 102 through the communication network 104 to update the databases 122.

When the registration apparatus 103 is added, authentication token registration processing for each service providing apparatus 102 as in the above-described fourth embodiment can be unitarily performed for a plurality of service providing apparatuses 102. For example, in an authentication system such as a door way monitoring system, a plurality of service providing apparatuses 102 are arranged at doors of a building or at doors of the respective rooms to execute door way monitoring. Hence, when this embodiment is applied, the authentication tokens of individual users can be easily registered in a plurality of service providing apparatuses 102 by the registration apparatus 103, and the operation load required for authentication token registration processing can be greatly reduced.

### Sixth Embodiment

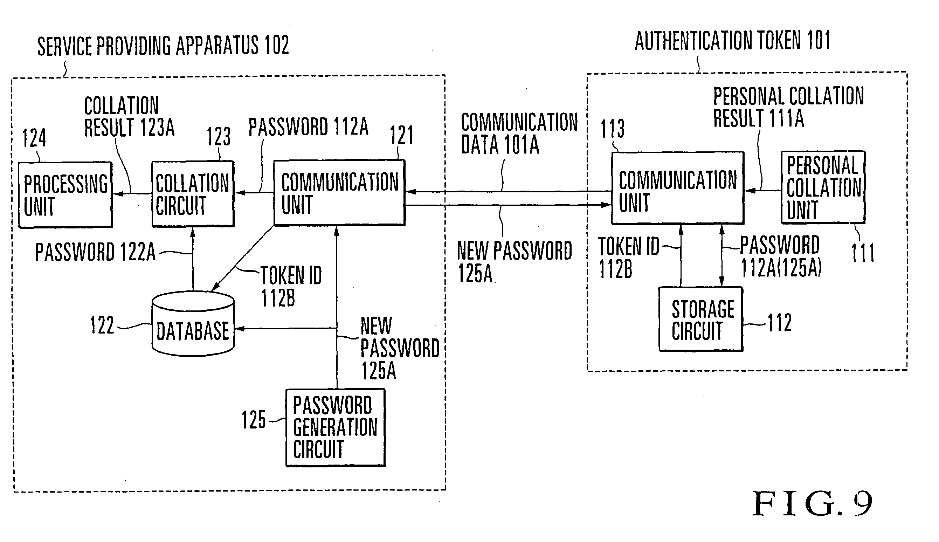

A sixth embodiment will be described next with reference to Fig. 9. The sixth embodiment is different from the above-described fourth embodiment shown in Fig. 7 in that a password generation circuit 125 is added to a service providing apparatus 102, and the password of an authentication token 101 is updated by a new password 125A from the password generation circuit 125. A personal collation unit 111 used here has the same arrangement as that described in the above embodiments, which includes a sensor 11 for acquiring a fingerprint image, a storage circuit 12 for storing the fingerprint image of the user or registered data representing the characteristic feature of the fingerprint image, and a collation circuit 13 for collating the registered data with the fingerprint image from the user and outputting the collation result, and the operation of the personal collation unit 111 is also the same as in the above-described arrangements.

In the system shown in Fig. 9, the authentication token 101 is registered in the service providing apparatus 102 before use of a service, and to use the service, a token ID 112B and password 112A are transmitted to the service providing apparatus 102 as commination data 101A when the personal collation is successful, and if it is checked by the service providing apparatus 102 that the password 112A is an authentic password, the service providing apparatus 102 provides the service.

The passwords are collated by a collation circuit 123 in the service providing apparatus 102. When the collation result indicates that the collation is successful, the password generation circuit 125 generates the new password 125A and transmits it from a communication unit 121 to the authentication token 101, and also updates a password 122A stored in a database 122 in the same manner.

In the authentication token 101, the new password 125A is received by a communication unit 113 to update the password 112A in a storage circuit 112.

Since the password generation circuit 125 is added to the service providing apparatus 102 to update the password in the authentication token 101 to the new password after the password collation is successful, the password in the authentication token 101 is updated every time the user receives the service.

Hence, even when the password leaks to a third party, the authentication token can hardly be forged because the password for the next use is updated, so a safe system can be implemented.

### Seventh Embodiment

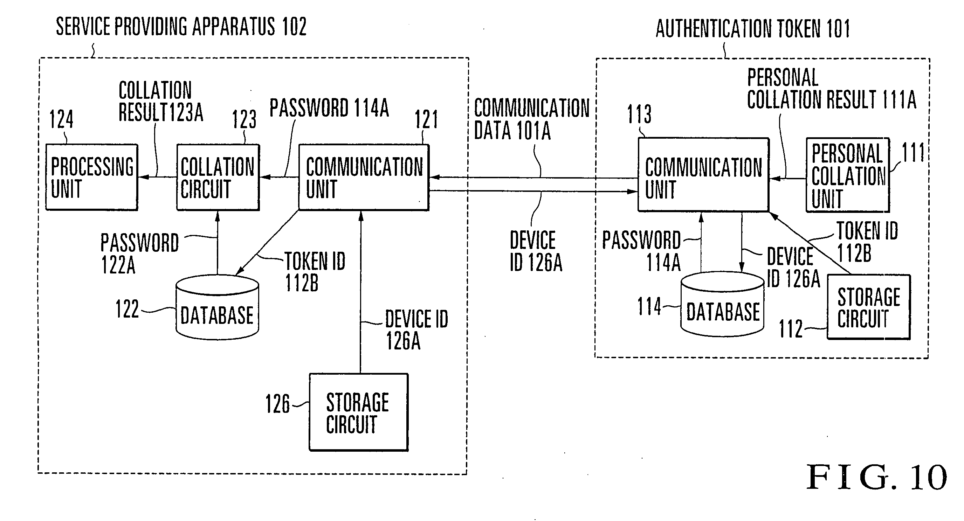

A seventh embodiment of the present invention will be described next with reference to Fig. 10. This embodiment shown in Fig. 10 is different from the above-described fourth embodiment in that a database (second database) 114 for storing a password is added to an authentication token 101 to manage the password in correspondence with the device ID of a service providing apparatus 102. A personal collation unit 111 used here has the same arrangement as that described in the above embodiments, which includes a sensor 11 for acquiring a fingerprint image, a storage circuit 12 for storing the fingerprint image of the user or registered data representing the characteristic feature of the fingerprint image, and a collation circuit 13 for collating the registered data with the fingerprint image from the user and outputting the collation result, and the operation of the personal collation unit 111 is also the same as in the above-described arrangements.

In this system, the authentication token 101 is registered in the service providing apparatus 102 before use of a service, as in the first or fourth embodiment. At this time of registration, an arbitrary password, e.g.,. an initial password 114A registered in the database 114 in advance is used. The service providing apparatus 102 registers a set of a token ID 112B and password 114A in a database 122 and transmits a device ID 126A stored in a storage circuit 126 in advance to the authentication token 101. In the authentication token 101, the set of the device ID 126A and password 114A from the service providing apparatus 102 are registered in the database 114.

To use the service, the authentication token 101 is connected to the service providing apparatus 102, and then, the device ID 126A is transmitted from the service providing apparatus 102 to the authentication token 101.

In the authentication token 101, the personal collation unit 111 performs user collation, and when a personal collation result 111A indicates that the collation is successful, the password 114A is searched from the database 114 using, as a key, the device ID 126A received from the service providing apparatus 102 by the communication unit 113. The password 114A and token ID 112B are transmitted to the service providing apparatus 102 as commination data 101A, and if it is checked by the service providing apparatus 102 that the password is an authentic password, the service providing apparatus 102 provides the service, as in the above-described embodiment.

As described above, since the database 114 is prepared in the authentication token 101 to manage the password for the device ID of each service providing apparatus 102, the password transmitted from the authentication token 101 can be individually set for each service providing apparatus, and each service providing apparatus can selectively use a plurality of passwords.

With this arrangement, even when one password leaks, any illicit use of services other than the service which uses that password can be prevented. For this reason, it is more difficult to forge the authentication token, and a safer system can be implemented.

### Eighth Embodiment

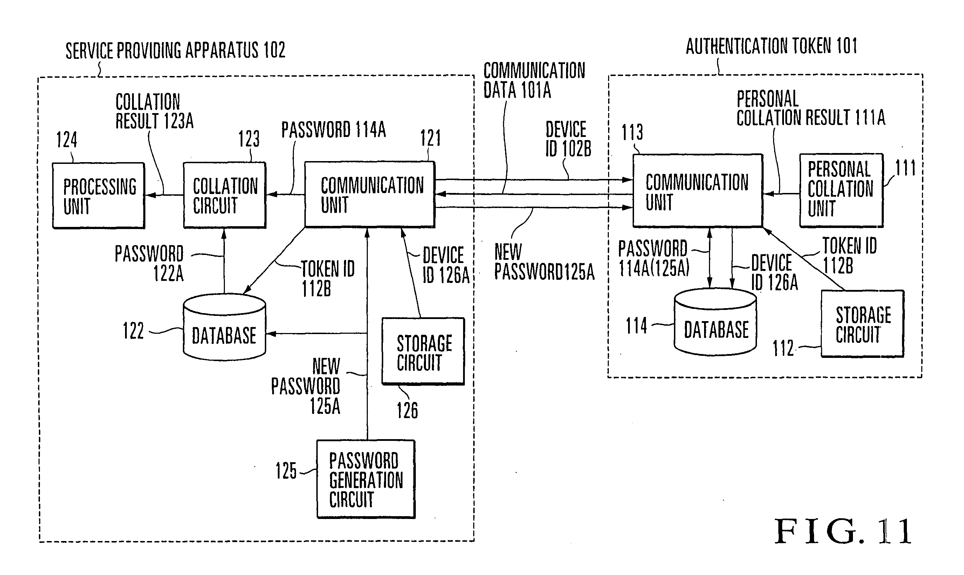

An eighth embodiment of the present invention shown in Fig. 11 will be described next. In the eighth embodiment shown in Fig. 11, the seventh embodiment shown in Fig. 10 is applied to the above-described sixth embodiment shown in Fig. 9. The eighth embodiment is different from the seventh embodiment in that a password generation circuit 125 is added to the service providing apparatus 102, and a database 114 for storing a password is added to an authentication token 101.

As the order of processes, first, a password 114A and token ID 112B of the authentication token 101 are registered in a database 122 of the service providing apparatus 102, and a device ID 126A from the service providing apparatus 102 and password 114A are stored in the database 114 in association with each other, as described in the seventh embodiment shown in Fig. 10.

To use the service, after the authentication token 101 is connected to the service providing apparatus 102, the personal collation unit 111 performs user collation. When the user collation is successful, the password 114A is searched from the database 114 using, as a key, the device ID 126A from the service providing apparatus 102, and the password 114A and token ID 112B are transmitted to the service providing apparatus 102 as commination data 101A.

When the collation by a collation circuit 123 in the service providing apparatus 102 is successful, the service is provided and a new password 125A from the password generation circuit 125 is transmitted to the authentication token 101. In the authentication token 101, the new password 125A and device ID 126A are stored in the database 114 in association with each other.

Since the password is managed in the authentication token 101 in association with the device ID of the service providing apparatus 102, different passwords can be set for the service providing apparatuses, as in the seventh embodiment shown in Fig. 10. In addition, since the password is updated every time the user receives the service, a new password can always be set for each service, as in the sixth embodiment shown in Fig. 9. Even if the password leaks, illicit use of the service can be prevented.
Forgery of the authentication token becomes more difficult, and a safer system can be implemented.

The service providing apparatus 102 or authentication token 101 in the above-described embodiments shown in Figs. 7 to 11 can be constructed using a computer. In this case, the functions of the units and circuits in the service providing apparatus 102 or authentication token 101 are implemented by cooperation of hardware resources and programs (software resources) executed by a microprocessor for controlling the hardware resources. The programs may be recorded on a recording medium such as a ROM, hard disk, or CD-ROM and loaded to the microprocessor and executed as needed.

As described above, in the embodiments shown in Figs. 7 to 11, an authentication token which is normally held by a user and, when the user is to use a service providing apparatus, connected to the service providing apparatus to authenticate the user on the basis of biometrical information of the user is prepared. In this authentication token, the password of the authentication token and token identification information for identifying the authentication token are stored in advance, collation is performed to confirm that the user is an authentic user on the basis of biometrical information detected from the user, and when the collation result indicates that the collation is successful, the password and token identification information are transmitted to the service providing apparatus as commination data. In the service providing apparatus, the token identification information and password of the authentication token are stored in the first database in advance in association with each other, the password contained in the communication data received from the authentication token is collated with the password obtained from the first database using the token identification information as a key, and the service is provided to the user on the basis of the collation result.

Hence, unlike the prior art in which the service is provided on the basis of the successful collation result from the authentication token, it is difficult to forge the authentication token, and any illicit use of the service can be prevented. In addition, when the authentication token information is used, the user can be specified, and service can be provided in accordance with the user.

### Ninth Embodiment

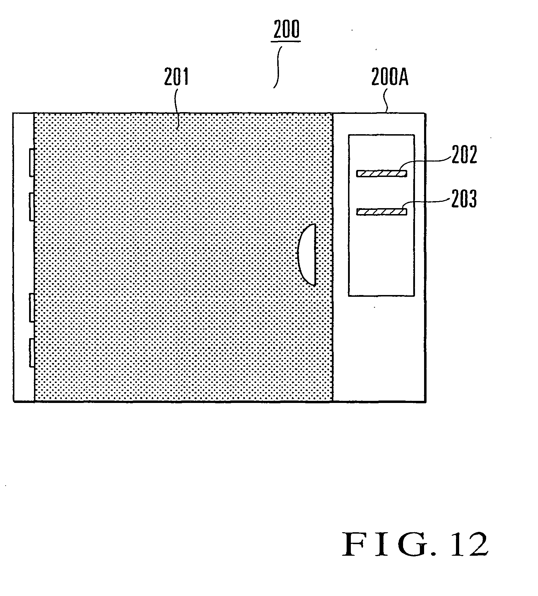

Figs. 12 to 14 show a ninth embodiment in which the present invention is applied to a biometrical information authentication storage. A fingerprint authentication storage 200 has a door 201 of a main body 200A, a coin slot 202 for receiving coins, and a slot 203 for receiving an authentication token (to be described later), as shown in Fig. 12, and therefore can store articles in the main body 200A.

An authentication token 1 to be inserted into the slot 203 of the fingerprint authentication storage 200 is a compact and lightweight device that can be held and carried by a user, and has a structure with, e.g., a fingerprint sensor 11, storage circuit 12, collation circuit 13, and communication circuit 14, as shown in Figs. 1 and 2.

The main body 200A of the fingerprint authentication storage 200 has a processing unit 211 for detecting a coin put into the coin slot 202 and executing predetermined processing and also, when the authentication token 1 is inserted into the slot 203, authenticating fingerprint information from the authentication token 1, a storage unit 212 connected to the processing unit 211, and a lock control unit 213 connected to the processing unit 211 to lock/unlock the door 201 under the control of the processing unit 211, as shown in Fig. 12.

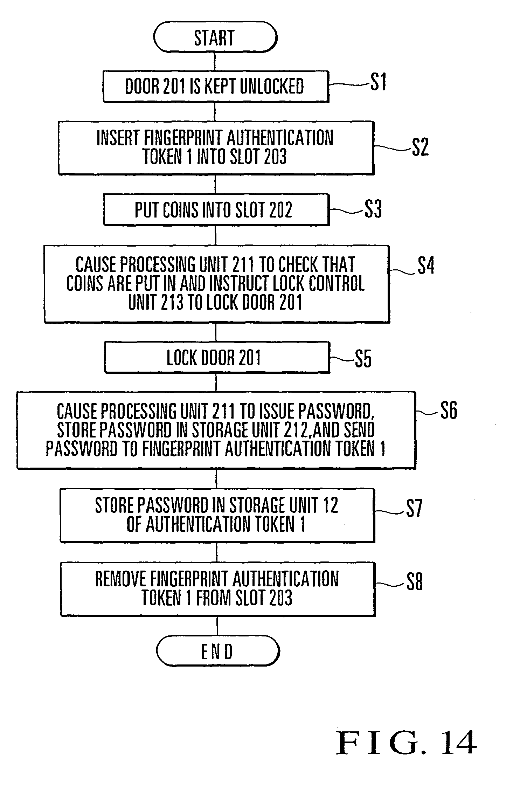

The operations of the fingerprint authentication storage 200 having the above arrangement and the fingerprint authentication token 1 will be described next on the basis of the flow charts shown in Figs. 14 to 18.

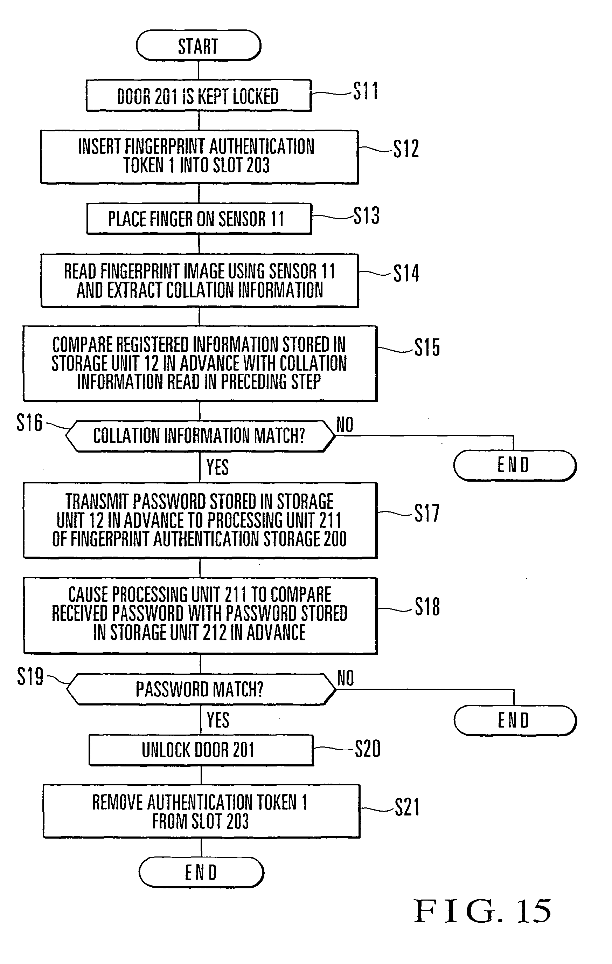

The operation of the ninth embodiment shown in the flow charts of Figs. 14 and 15 will be described first. Fig. 14 shows operation for storing an article in the fingerprint authentication storage 200. When a user intends to store an article of his/her own, he/she opens the door 201 of the fingerprint authentication storage 200, which is kept unlocked as in step S1, stores the article in the main body 200A, and closes the door 201. The fingerprint authentication token 1 is inserted into the slot 203 (step S2), and coins of a predetermined amount are put into the coin slot 202 (step S3).

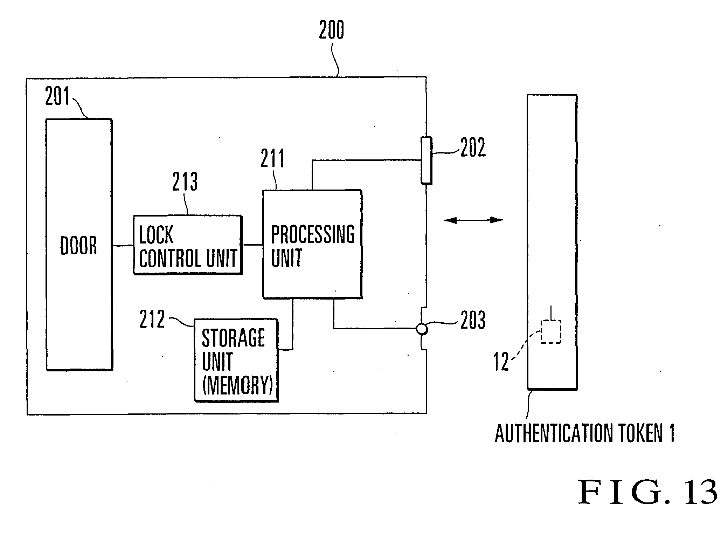

The processing unit 211 shown in Fig. 13 checks that the coins of a predetermined amount are put in and instructs the lock control unit 213 to lock the door 201 (step S4). The door 201 is locked to the main body 200A (step S5). After that, the processing unit 211 issues a password and stores it in the storage unit 212 and also sends the password to the fingerprint authentication token 1 (step S6).

In the fingerprint authentication token 1, the password is stored in the storage unit 12 shown in Fig. 13 in addition to the arrangement of the above-described embodiment (step S7). In this case, referring to Fig. 13, the authentication token 1 sends the password received from the storage 200 to the storage unit 12 through a communication circuit or another processing unit. After the password is stored in the storage unit 12 of the fingerprint authentication token 1, the user removes the authentication token 1 from the slot 203 of the fingerprint authentication storage 200 and holds the authentication token (step S8).

Operation when the user takes out the article stored in the fingerprint authentication storage 200 will be described next on the basis of the flow chart shown in Fig. 15.

When the user wants to take out the article stored in the fingerprint authentication storage 200, the door 201 of the storage 200 is kept locked to the main body 200A (step S11). In this case, the user inserts the fingerprint authentication token 1 of his/her own into the slot 203 (step S12) and places a finger on the fingerprint sensor 11 of the fingerprint authentication token 1 (step S13).

The fingerprint authentication token 1 reads the fingerprint image detected by the sensor 11, processes the image as image data, and extracts feature data from the fingerprint image data as collation information (step S14). Collation information representing a feature portion in the user's fingerprint image data detected by the fingerprint sensor 11 is registered in the storage unit 12 of the authentication token 1 in advance. The collation circuit 13 compares the registered information stored in the storage unit 12 with the collation information extracted in step S14 (step S15).

If the two pieces of collation information do not match, the processing is ended. If the two pieces of collation information match, i.e.,. YES in step S16, the authentication token 1 transmits the password stored in the storage unit 12 in advance to the processing unit 211 (Fig. 13) of the fingerprint authentication storage 200 (step S17). In this case, the processing unit 211 compares the password received from the authentication token 1 with the password stored in the storage unit 212 (step S18).

If the two passwords do not match, the processing is ended. If the two passwords match, i.e., YES in step S19, the processing unit 211 controls the lock control unit 213 and causes it to unlock the door 201 from the main body 200A (step S20). The door 201 can be opened, and the user can take out the article stored in the main body 200A by himself/herself. After that, the user removes his/her authentication token 1 from the slot 203 (step S21).

As described above, when the user stores an article in the fingerprint authentication storage 200, puts in coins of a predetermined amount, and inserts the authentication token 1 into the slot 203, the fingerprint authentication storage 200 locks the door 201 shown in Figs. 12 and 13, issues a password and stores it in the internal storage unit 212, sends the password to the authentication token 1, and causes the storage unit 12 to store the password. On the other hand, to take out the stored article, the user inserts the authentication token 1 into the storage 200. When the user's fingerprint image detected by the sensor 11 of the authentication token 1 matches that registered in the token 1 in advance, the password is transmitted from the token 1 to the fingerprint authentication storage 200 side. When the password matches that stored in the fingerprint authentication storage 200, the fingerprint authentication storage 200 unlocks the door 201.

### 10th Embodiment

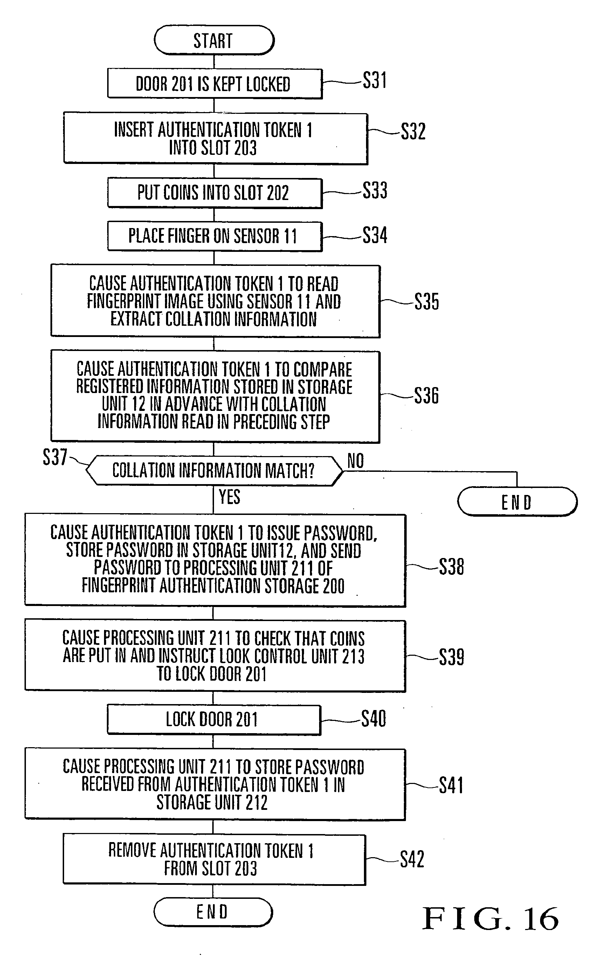

Fig. 16 shows the flow chart of a 10th embodiment, which shows operation of storing an article in a fingerprint authentication storage 200.

When a user is to store an article of his/her own, he/she opens a door 201, which is kept unlocked from a main body 200A as in step S31, stores the article in the main body 200A, and closes the door 201. An authentication token 1 is inserted into a slot 203 (step S32), and coins of a predetermined amount are put into a coin slot 202 (step S33). The user also places a finger on a sensor 11 of the authentication token 1 (step S34).

The authentication token 1 reads the fingerprint image detected by the sensor 11, processes the image as image data, and extracts feature data from the fingerprint image data as collation information (step S35). A collation circuit 13 (Fig. 1) compares registered information stored in a storage unit 12 with the collation information extracted in step S35 (step S36).

If the two pieces of collation information do not match, the processing is ended. If the two pieces of collation information match, i.e.,. YES in step S37, the authentication token 1 issues a password and stores it in the storage unit 12 and also sends the password to a processing unit 211 of the fingerprint authentication storage 200 (step S38). In this case, the processing unit 211 checks that the coins of a predetermined amount are put in and instructs a lock control unit 213 to lock the door 201 (step S39). The door 201 is locked to the main body 200A (step S40). After that, the processing unit 211 stores the password received from the authentication token 1 in a storage unit 212 (step S41). After the password is stored in the storage unit 212 of the fingerprint authentication storage 200, the user removes the authentication token 1 from the slot 203 of the fingerprint authentication storage 200 and holds the authentication token (step S42).

As described in the 10th embodiment, when the user is to store an article, the authentication token 1 issues a password when fingerprint authentication in the authentication token 1 is successful, stores the password in the authentication token 12 of its own, transmits the password to the fingerprint authentication storage 200, causes the storage unit 212 to store the password, and causes the fingerprint authentication storage 200 to lock the coin slot 202. When the user is to take out the stored article, the same operation as in the flow chart of Fig. 15 is performed. That is, the door 201 is unlocked on the basis of password matching between the fingerprint authentication storage 200 and the authentication token 1.

In the ninth and 10th embodiments, the door 201 of the fingerprint authentication storage 200 is unlocked using a password. This password may be either a one-time password or an identification number assigned to the fingerprint authentication storage 200 or authentication token 1 in advance.

### 11th Embodiment

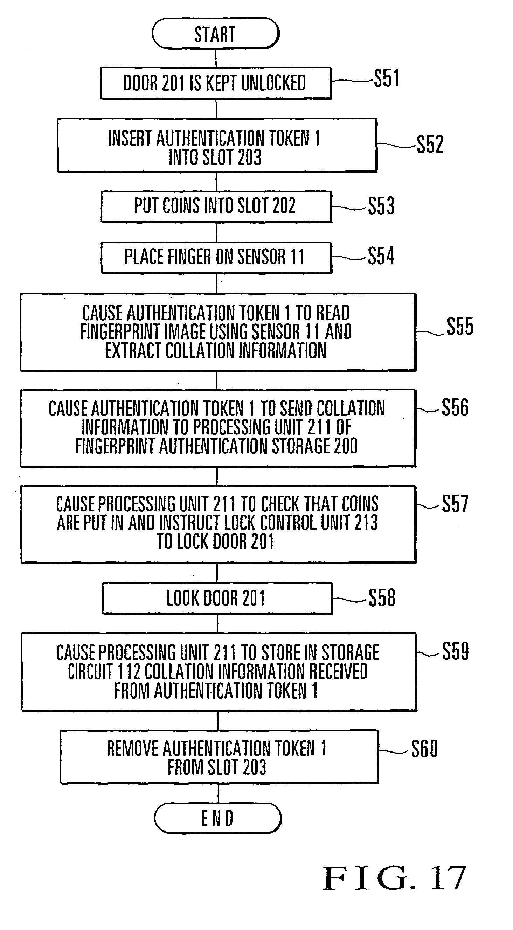

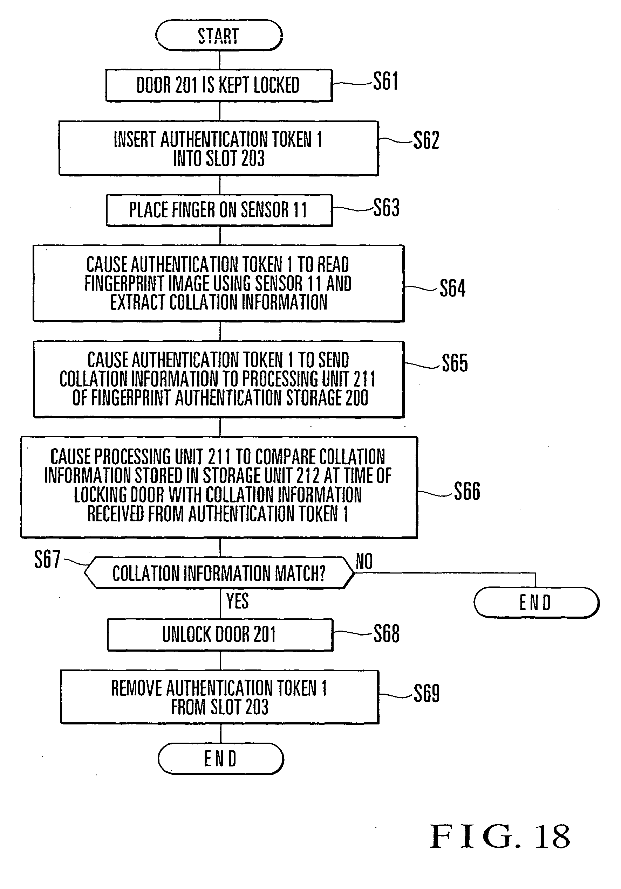

In the ninth and 10th embodiments, the door 201 is unlocked on the basis of password matching between the fingerprint authentication storage 200 and the authentication token 1. In an 11th embodiment shown in the flow charts of Figs. 17 and 18, a door 201 is unlocked on the basis of user's fingerprint image matching between a fingerprint authentication storage 200 and an authentication token 1.

Operation shown in Fig. 17 in storing an article in the fingerprint authentication storage 200 will be described first. When a user wants to store his/her article, he/she opens the door 201 of the fingerprint authentication storage 200, which is kept unlocked as in step S51, stores the article in a main body 200A, and closes the door 201. The authentication token 1 is inserted into a slot 203 (step S52), and coins of a predetermined amount are put into a coin slot 202 (step S53). The user places a finger on a sensor 11 of the authentication token 1 (step S54).

The authentication token 1 reads the fingerprint image detected by the sensor 11, processes the image as image data, and extracts feature data from the fingerprint image data as collation information (step S55). The extracted collation information is sent to a processing unit 211 of the fingerprint authentication storage 200 (step S56). The processing unit 211 checks that the coins of the predetermined amount are put in and instructs a lock control unit 213 to lock the door 201 (step S57). The door 201 is locked to the main body 200A (step S58). After that, the processing unit 211 stores the collation information received from the authentication token 1 in a storage unit 212 (step S59). After the collation information is stored in the storage unit 212 of the fingerprint authentication storage 200 in this way, the user removes the authentication token 1 from the slot 203 of the fingerprint authentication storage 200 and holds the token (step S60).

Operation when the user is to take out the article thus saved in the fingerprint authentication storage 200 will be described next on the basis of the flow chart of Fig. 18.

When the user is to take out the article stored in the fingerprint authentication storage 200, the door 201 of the storage 200 is kept locked (step S61). In this case, the user inserts the authentication token 1 of his/her own into the slot 203 (step S62) and places a finger on the sensor 11 of the authentication token 1 (step S63).

The authentication token 1 reads the fingerprint image detected by the sensor 11, processes the image as image data, and extracts feature data from the fingerprint image data as collation information (step S64). The extracted collation information is sent to the processing unit 211 of the fingerprint authentication storage 200 (step S65). In this case, the processing unit 211 compares the collation information stored in the storage unit 212 at the time of locking the door 201 with the collation information received from the authentication token 1 in step S65 (step S66).

If the two pieces of collation information do not match, the processing is ended. If the two pieces of collation information match, i.e.,. YES in step S67, the processing unit 211 controls the lock control unit 213 to unlock the door 201 (step S68). The user can open the door 201 and take out the article stored by himself/herself. After that, the user removes his/her authentication token 1 from the slot 203 (step S69).

As described above, in the 11th embodiment, in storing an article, the door 201 is locked, and simultaneously, the fingerprint image of the user is transmitted from the authentication token 1 to the fingerprint authentication storage 200 and stored. In taking out the article, the fingerprint authentication storage 200 compares the user's fingerprint image received from the authentication token 1 with the stored fingerprint image, and if the two images match, unlocks the door 201.

### 12th Embodiment

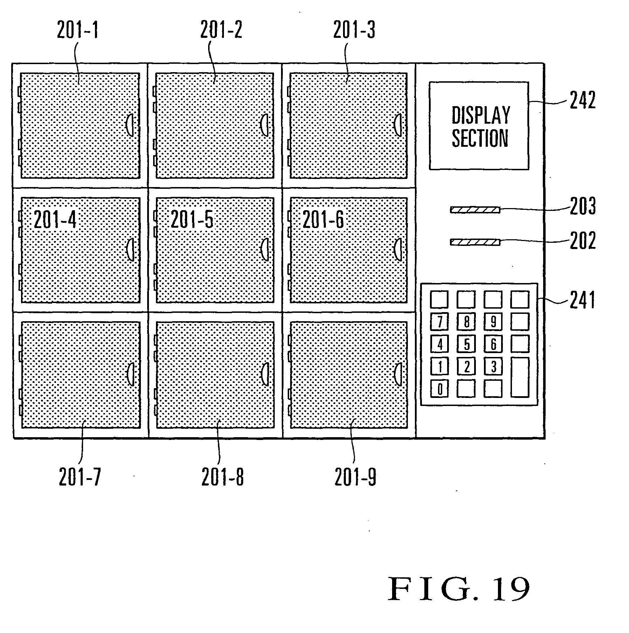

Fig. 19 shows a fingerprint authentication storage according to a 12th embodiment. In the above-described ninth to 11th embodiments, in storing an article, one storage section is prepared in the storage 200. In the 12th embodiment, however, a fingerprint authentication storage 200 has a plurality of (nine) storage sections capable of independently storing articles, and a plurality of doors 201-1 to 201-9 are arranged in correspondence with the storing sections. The fingerprint authentication storage 200 also has a ten-key pad 241 for designating one of the doors 201-1 to 201-9, and a display section 242 for displaying various kinds of information.

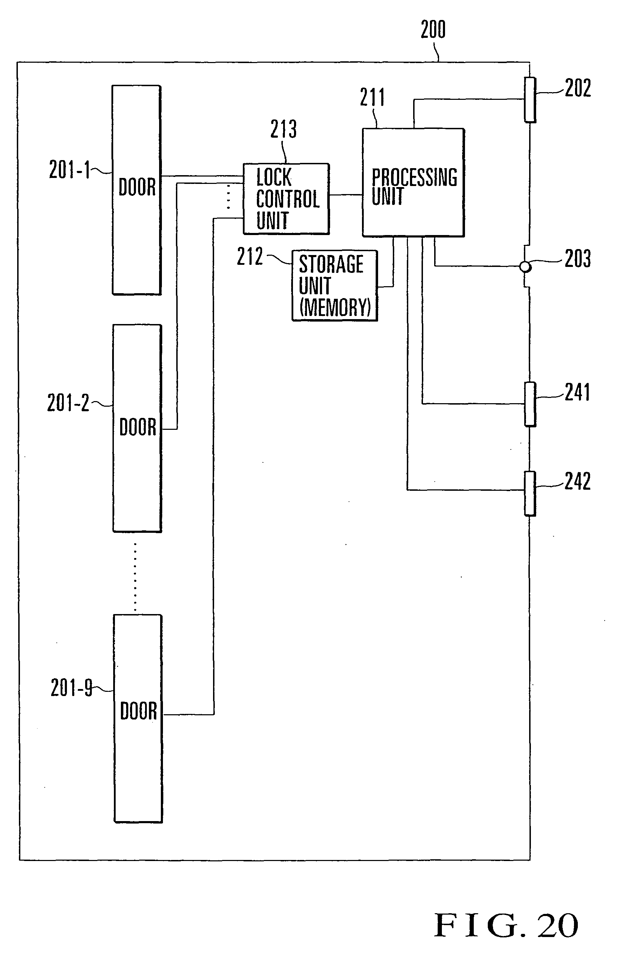

Fig. 20 shows the arrangement of the fingerprint authentication storage 200 shown in Fig. 19. The fingerprint authentication storage 200 has the above-described processing unit 211, storage unit 212, and lock control unit 213. The lock control unit 213 is connected to the plurality of doors 201-1 to 201-9 to lock/unlock the doors 201-1 to 201-9. The processing unit 211 executes predetermined processing upon detecting coins put into a coin slot 202, and when an authentication token 1 is inserted into a slot 203, processing authentication information from the authentication token 1 and also controls operation input from the ten-key pad 241 and display on the display section 242.

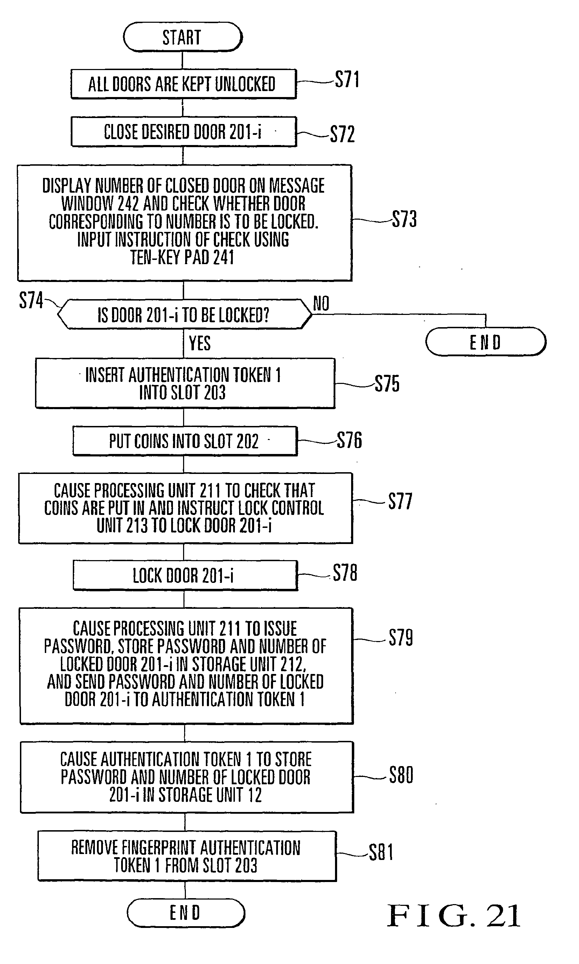

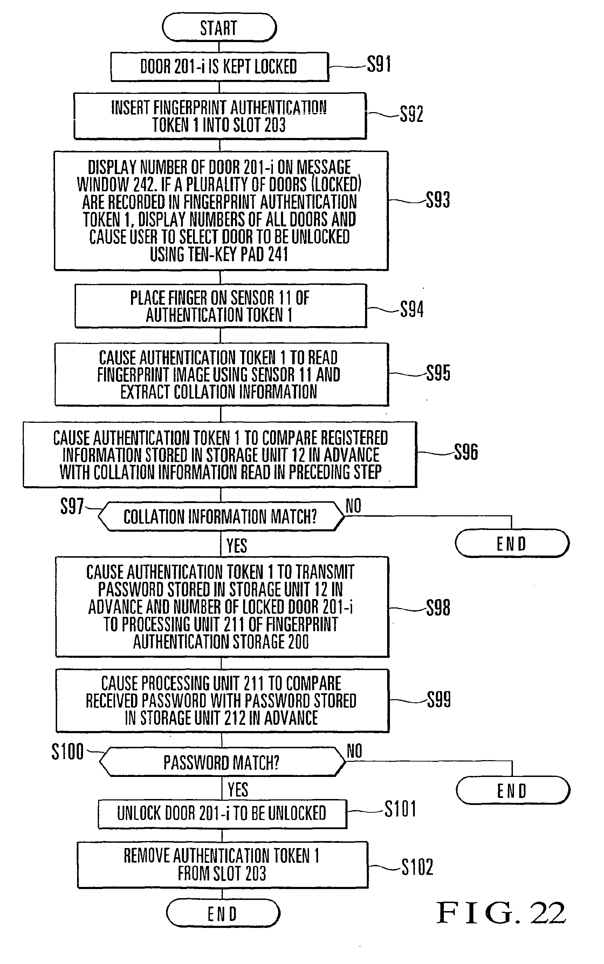

Operation of the main part of the fingerprint authentication storage 200 having the above arrangement will be described next with reference to the flow charts shown in Figs. 21 and 22. First, operation of locking the door 201 will be described on the basis of the flow chart shown in Fig. 21.

When the user is to store an article of his/her own, he/she opens the door 201-i of the fingerprint authentication storage 200, which is kept unlocked as in step S71, stores the article in a corresponding storage section, and closes the door 201-i (step S72).

The processing unit 211 detects it and displays the number of the closed door 201-i on the display window of the display section 242. The user checks the display and, to lock the door, presses a number key or keys of the ten-key pad 241 corresponding to the number of the door 201-i (step S73).

It is determined "YES" in step S74, and the flow advances to step S75. In step S75, the authentication token 1 is inserted into the slot 203. In step S76, coins of a predetermined amount are put into the slot 202.

The processing unit 211 checks that the coins of a predetermined amount are put in and instructs the lock control unit 213 to lock the door 201-i (step S77). The door 201-i is locked to a main body 200A (step S78). After that, the processing unit 211 issues a password and stores the password and the number of the locked door 201-i in the storage unit 212 and also sends the password and the number of the locked door 201-i to the authentication token 1 (step S79).

The authentication token 1 receives the password and the number of the locked door 201-i and stores them in a storage unit 12 (step S80). After the password and the number of the locked door 201-i are stored in the storage unit 12 of the authentication token 1, the user removes the authentication token 1 from the slot 203 of the fingerprint authentication storage 200 and holds the authentication token (step S81).

Operation of unlocking the door 201 will be described next on the basis of the flow chart shown in Fig. 22.

When the user is to take out his/her article stored in the storage section of the fingerprint authentication storage 200, the door 201-i of the storage section is kept locked (step S91). In this case, the user inserts the authentication token 1 of his/her own into the slot 203 (step S92). The number of the door 201-i, which is stored in the storage unit 12 of the authentication token 1, is read out and displayed on the display section 242. When the numbers of a plurality of doors are stored in the storage unit 12, all these numbers are displayed on the display section 242 as the numbers of the locked doors. In this case, the user selectively inputs the number of the door to be unlocked using the corresponding number key or keys of the ten-key pad 241 (step S93). The user places a finger on a sensor 11 of the authentication token 1 (step S94).

The authentication token 1 reads the fingerprint image detected by the sensor 11, processes the image as image data, and extracts feature data from the fingerprint image data as collation information (step S95). The authentication token 1 compares the registered information stored in the storage unit 12 with the collation information extracted in step S95 (step S96). If the two pieces of collation information do not match, the processing is ended. If the two pieces of collation information match, i.e.,. YES in step S97, the authentication token 1 transmits the password and the number of the locked doors 201-i, which are stored in the storage unit 12 in advance, to the processing unit 211 of the fingerprint authentication storage 200 (step S98). In this case, the processing unit 211 compares the password received from the authentication token 1 with the password stored in the storage unit 212 (step S99).

If the two passwords do not match, the processing is ended. If the two passwords match, i.e., YES in step S100, the processing unit 211 controls the lock control unit 213 and causes it to unlock the door 201-i from the main body 200A (step S101). The door 201-i can be opened, and the user can take out the article stored in the storage section by himself/herself. In this case, the processing unit 211 erases the number of the door 201-i, which is stored in the storage unit 212. After that, the user removes his/her authentication token 1 from the slot 203 (step S102).

As described above, when the user stores an article in the fingerprint authentication storage 200, puts in coins of a predetermined amount, and inserts the authentication token 1 into the slot 203, the fingerprint authentication storage 200 locks the door 201, and simultaneously, issues a password, stores it in the storage unit 212 of its own, sends the password to the authentication token 1, and stores the password in the storage unit 12. In taking out the stored article, when the user inserts the authentication token 1 to the storage 200, and the user's fingerprint image detected by the sensor 11 of the authentication token 1 matches the fingerprint image registered in the authentication token 1 in advance, the password is transmitted from the authentication token 1 to the fingerprint authentication storage 200 side. When the password matches that stored in the fingerprint authentication storage 200, the door 201 is unlocked.

In this embodiment, the door of the article storage is locked/unlocked on the basis of authentication of the user using the fingerprint authentication token. When such a fingerprint authentication storage is applied to an article storage such as a coin locker, the conventional scheme applied to such an article storage, i.e., lock/unlock based on use of a key, can be abolished. Hence, any illicit unlocking of an article storage based on use of a missing key can be prevented. In addition, even when a third party is going to unlock the article storage using a fingerprint authentication token, the fingerprint image of the third party is different from that of the authentic user, and the door of the article storage cannot be unlocked. For this reason, the article storage can be prevented from being unlocked by a third party.

Figs. 14 to 18 show mere examples of step execution orders. The step execution orders may be changed unless it conflicts with the overall operation.

In the embodiments shown in Figs. 12 to 22, the sensor 11, collation circuit 13, and storage unit 12 in the authentication token 1 are constructed as one chip, as shown in Figs. 2 to 4. In addition to the above example, the collation circuit 13 may be connected to the one-chip fingerprint sensor 11 through a bus, and the storage unit 12 may be connected to the collation circuit 13 through a bus. Alternatively, the sensor 11 and collation circuit 13 may be constructed as one chip, and this one-chip structure may be connected to the storage unit 12 through a bus.

When signals to be exchanged between the authentication token 1 and the fingerprint authentication storage 200 are encrypted on the transmitting side, and the encrypted data are decrypted on the receiving side, the security of the system can be improved.

In the above embodiments, the article storage is unlocked on the basis of fingerprint authentication. However, the article storage may be unlocked by authenticating the user on the basis of biometrical information unique to the user, such as finger size, palm shape, vein pattern, facial feature, iris, and voiceprint, or the signature (handwriting) of the user.

As described above, according to the embodiments shown in Figs. 12 to 22, biometrical information authentication storage capable of locking or unlocking the door of the main body in storing an article in the main body or taking out the article stored in the main body, and also unlocking the door on the basis of authentication of the biometrical information of the user is provided. The biometrical information authentication storage has a drive means for locking/unlocking the door, a storage means for storing the biometrical information of the user, and a processing means. The processing means controls the drive means on the basis of matching between the information stored in the storage means and detected information from a sensor for detecting the biometrical information of the user so as to unlock the door. When such a biometrical information authentication storage is applied to an article storage such as a coin locker, the conventional scheme applied to such an article storage, i.e., lock/unlock based on use of a key, can be abolished. Hence, any illicit unlock of an article storage based on use of a missing key can be prevented. In addition, even when a third party is going to unlock the article storage using the sensor, the biometrical information of the third party is different from that of the authentic user, which is stored in the storage means, and the door of the article storage cannot be unlocked. For this reason, the article storage can be prevented from being unlocked by a third party.

The storage means stores the fingerprint image of the user. A fingerprint sensor for detecting the user's fingerprint image is arranged as the sensor. In storing an article in the main body, the processing means locks the door upon receiving the fingerprint image from the fingerprint authentication token that incorporates the fingerprint sensor, and stores the received fingerprint image in the storage means. In taking out the article stored in the main body, the processing means receives the user's fingerprint image transmitted from the fingerprint authentication token, and when the received fingerprint image matches the information stored in the storage means, unlocks the door. Hence, the article storage can be prevented from being unlocked by a third party, and the security improves.

In storing an article in the main body, when the fingerprint authentication token is inserted into the main body, the processing means locks the door, generates a password, and transmits the password to the fingerprint authentication token and causes it to store the password. In taking out the article stored in the main body, when a password based on matching between the registered fingerprint image and the fingerprint image detected by the sensor, which is output from the fingerprint authentication token, is received, and the received password matches the password in the storage means, the processing means unlocks the door. Hence, the storage can be prevented from being unlocked by a third party other than the user who has stored the article, and the security improves.

In storing an article in the main body, when a password based on matching between the registered fingerprint image and the fingerprint image detected by the sensor, which is output from the fingerprint authentication token, is received, the processing means locks the door and stores the received password in the storage means. In taking out the article stored in the main body, when a password based on matching between the registered fingerprint image and the fingerprint image detected by the sensor, which is output from the fingerprint authentication token, is received, and the received password matches the password in the storage means, the processing means unlocks the door. Hence, the storage can be prevented from being unlocked by a third party other than the user who has stored the article, and the security improves.

### 13th Embodiment

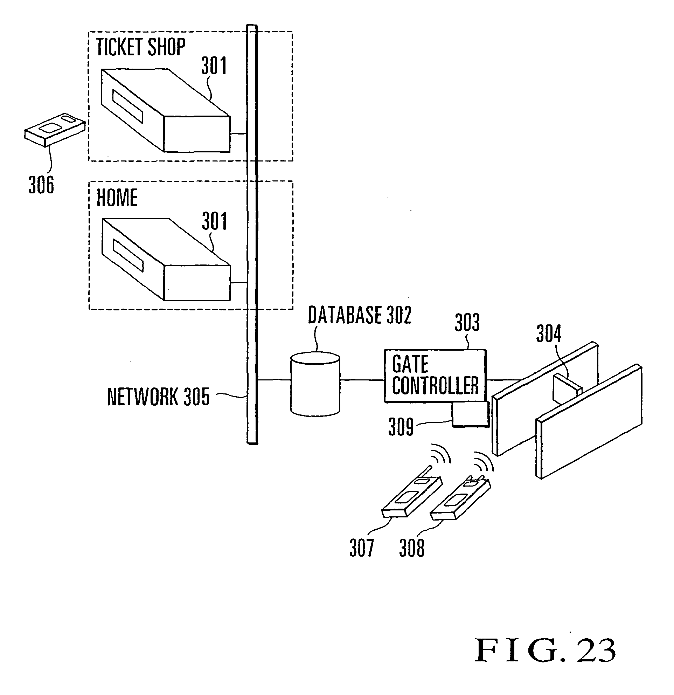

Fig. 23 shows the arrangement of a 13th embodiment in which the present invention is applied to a gate opening/closing system. This system opens/closes a gate for a concert hall or stadium.

Referring to Fig. 23, this system comprises cradles 301 which are installed at a ticket shop and user's home, and upon receiving a fingerprint authentication token (to be described later) and a ticket charge paid by the user, generates a password and causes the fingerprint authentication token to store the password, a database 302 connected to the cradles 301 through a network 305, a gate controller 303 connected to the database 302 and arranged near a gate 304 for a concert hall or stadium to control opening/closing of the gate 304, a fingerprint authentication token 306, a radio communication unit 307, an infrared communication unit 308, and a radio/infrared signal reception unit 309 arranged near the gate 304 to receive a signal from the radio communication unit 307 or infrared communication unit 308 and output the signal to the gate controller 303.

The fingerprint authentication token 306 to be inserted into the cradle 301 is a compact and lightweight device that can be held and carried by a user, and has the same structure as in Fig. 2.

The radio communication unit 307 is formed by connecting an adapter 311 to an authentication token 1, as shown in Fig. 2A. The adapter 311 incorporates a radio signal generation circuit for converting the output signal from the authentication token 1 into a radio signal. An antenna 312 is connected to the radio signal generation circuit.

The infrared communication unit 308 is formed by connecting an adapter 351 to the authentication token 1, as shown in Fig. 2B. The adapter 351 incorporates an infrared signal generation circuit for converting the output signal from the authentication token 1 into an infrared signal. An infrared source 352 is connected to the infrared signal generation circuit.

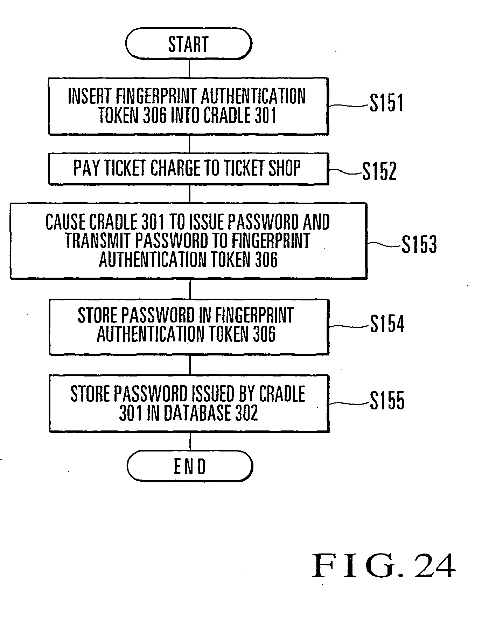

The operation of the gate opening/closing system using the authentication token having the above structure will be described next with reference to the flow charts shown in Figs. 24 to 27. The following description will be made mainly about the authentication token 306. A description of the radio communication unit 307 or infrared communication unit 308 will be added as needed.

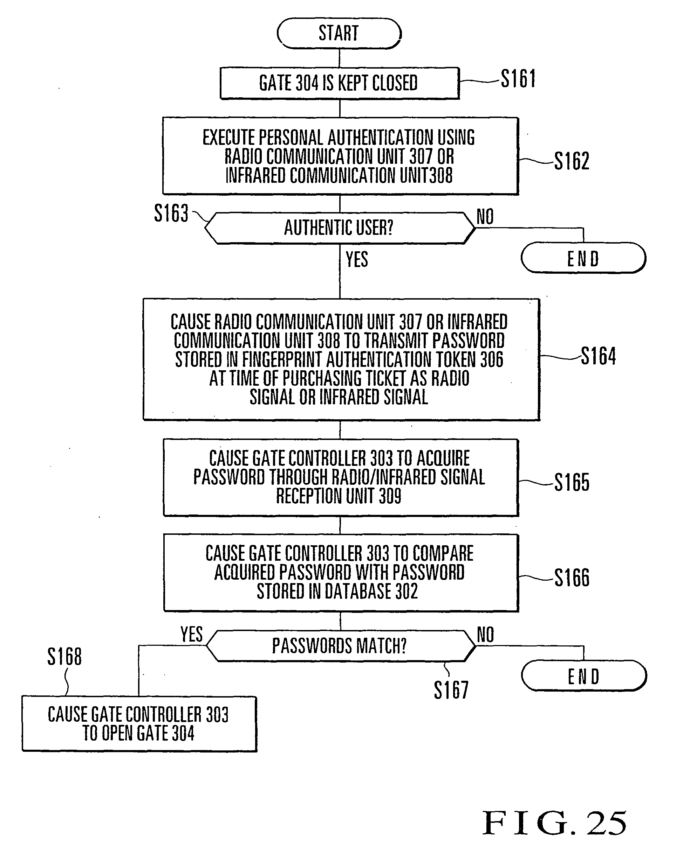

Referring to Figs. 24 and 25, if a user wants to go to, e.g., a concert at a concert hall, he/she will buy a ticket in advance. In this case, the user inserts his/her fingerprint authentication token 306 into the cradle 301 at, e.g., the ticket shop or home in step S151 of Fig. 24 and pays the ticket charge to the ticket shop (step S152).

The cradle 301 issues a password and transmits it to the authentication token 306 (step S153). The authentication token 306 receives the password and stores it in a storage unit 12 (step S154). The authentication token 306 transmits the issued password to the database 302 through the network 305 and makes the database 302 store the password (step S155).

The user who has paid the ticket charge and held the fingerprint authentication token 306 in which the password is recorded goes to the concert hall on the day of concert. In this case, the user holds the above-described authentication token 306 as the radio communication unit 307 or infrared communication unit 308 that has the adapter shown in Fig. 2A or 2B.

Fig. 25 shows the operation of the system at this time.

The entrance gate 304 of the concert hall is kept closed, as in step S161. The user presses a finger against a sensor 11 of the radio communication unit 307 or infrared communication unit 308 to perform personal authentication (step S162). In this case, the radio communication unit 307 or infrared communication unit 308 compares and collates the fingerprint detected by the sensor 11 with the registered fingerprint data in the storage unit 12. If the two fingerprints match, i.e., YES in step S163, the radio communication unit 307 or infrared communication unit 308 converts the password stored in the authentication token 306 at the time of ticket purchase into a radio signal or infrared signal and transmits it to the radio/infrared signal reception unit 309 near the gate 304 (step S164). The password by the radio signal or infrared signal is received by the radio/infrared signal reception unit 309.

The gate controller 303 acquires the password through the radio/infrared signal reception unit 309 (step S165) and compares the acquired password with the password stored in the database 302 (step S166). If the two passwords match, i.e., YES in step S167, the gate 304 is opened (step S168), and the user can enter the concert hall. This also applies to spectator sports in a stadium.

As described above, when the user pays the charge for a concert ticket, the password is stored in the database 302 and the authentication token 306 of the user . At the entrance of the concert hall, the user is checked by the authentication token 306 held by the user. When the user is authenticated, and the password is transmitted from the authentication token 306 to the radio/infrared signal reception unit 309 near the entrance gate 304, the gate controller 303 that has received the password through the radio/infrared signal reception unit 309 compares the password with that in the database 302, and when the two passwords match, opens the entrance gate 304. Consequently, since no ticket is required to enter the concert hall or stadium, personnel for ticket check are unnecessary, and the user can easily enter the concert hall or stadium. Even when the authentication token 306 of the user is stolen, and a third party attempts to illicitly enter the hall using the fingerprint authentication token 306, the illicit entrance of the third party can be prevented because the fingerprint image of the user is different from that of the third party. When the fingerprint authentication token 306 is lost, the ticket can be reissued by executing the same procedure as that shown in Fig. 24 using a new fingerprint authentication token.

### 14th Embodiment

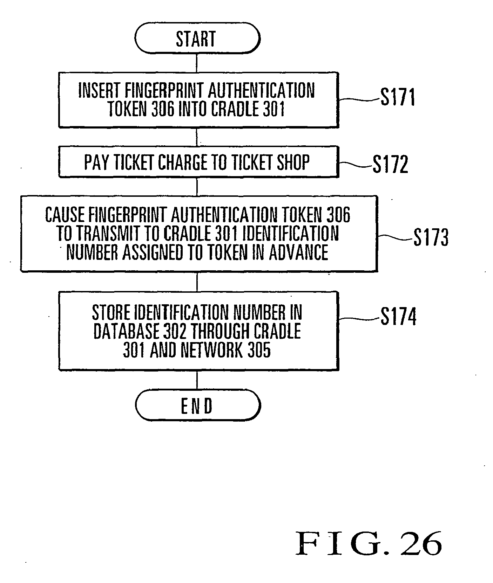

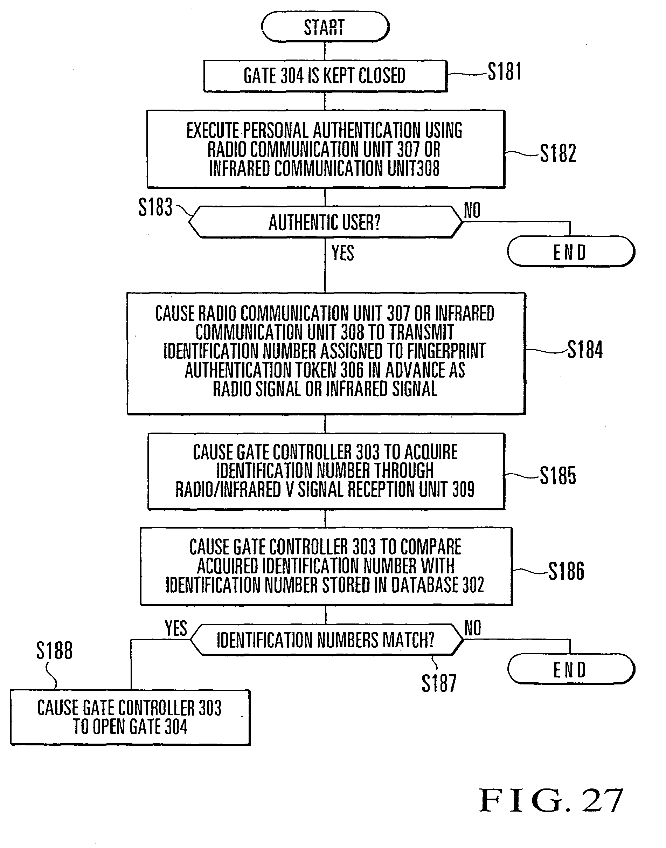

The operation of a system according to a 14th embodiment will be described next with reference to Figs. 26 and 27.

If a user wants to go to, e.g., a concert at a concert hall, he/she inserts his/her authentication token 306 into a cradle 301 at the ticket shop or home in step S171 of Fig. 26 and pays the ticket charge to the ticket shop in advance (step S172).

The fingerprint authentication token 306 transmits to the cradle 301 an identification number assigned to a storage unit 12 in advance (step S173). The cradle 301 receives the identification number, transmits the received identification number to a database 302 through a network 305, and makes the database 302 store the identification number (step S174).

The user who has paid the ticket charge and held the authentication token 306 whose identification number is stored in the database 302 goes to the concert hall on the day of concert. In this case, the user holds the above-described authentication token 306 as a radio communication unit 307 or infrared communication unit 308 that has an adapter shown in Fig. 2A or 2B.

Fig. 27 shows the operation of the system at this time.

An entrance gate 304 of the concert hall is kept closed, as in step S181. The user presses a finger against a sensor 11 of the radio communication unit 307 or infrared communication unit 308 to perform personal authentication (step S182). In this case, the radio communication unit 307 or infrared communication unit 308 compares the fingerprint detected by the sensor 11 with the registered fingerprint data in a storage unit 12 by a comparison circuit 13. If the two fingerprints match, i.e., YES in step S183, the radio communication unit 307 or infrared communication unit 308 converts the identification number assigned to the fingerprint authentication token 306 in advance into a radio signal or infrared signal and transmits it to a radio/infrared signal reception unit 309 near the gate 304 (step S184). The identification number by the radio signal or infrared signal is received by the radio/infrared signal reception unit 309.

The gate controller 303 acquires the identification number through the radio/infrared signal reception unit 309 (step S185) and compares the acquired identification number with the identification number stored in the database 302 (step S186). If the two identification numbers match, i.e., YES in step S187, the gate 304 is opened (step S188), and the user can enter the concert hall. This also applies to spectator sports in a stadium.

As described above, when the user pays the charge for a concert ticket, the identification number assigned to the user's authentication token 306 is stored in the database 302. At the entrance of the concert hall, the user is checked by the authentication token 306 held by the user. When the user is authenticated, and the identification number is transmitted from the authentication token 306 to the radio/infrared signal reception unit 309 near the entrance gate 304, the gate controller 303 that has received the identification number through the radio/infrared signal reception unit 309 compares the identification number with that in the database 302, and when the two identification numbers match, opens the entrance gate 304. Consequently, since no ticket is required to enter the concert hall or stadium, personnel for ticket check are unnecessary, and the user can easily enter the concert hall or stadium. Even when the fingerprint authentication token 306 of the user is stolen, and a third party attempts to illicitly enter the site using the authentication token 306, the illicit entrance of the third party can be prevented because the fingerprint image of the user is different from that of the third party. When the fingerprint authentication token 306 is lost, the ticket can be reissued by executing the same procedure as that shown in Fig. 26 again using a new authentication token.

In the above embodiments, the gate 304 is opened using a password or identification number. However, a one-time password may be used.

In the above embodiments, when the user is passing through the entrance gate 304, the password or identification number by the radio signal or infrared signal is transmitted from the radio communication unit 307 or infrared communication unit 308. When a cradle connected to the gate controller 303 and capable of receiving the fingerprint authentication token 306 is prepared near the gate 304, the user can pass through the gate 304 only by the fingerprint authentication token 306.

In these above embodiments, at the time of ticket purchase, the user inserts the authentication token 306 into the cradle 301 at the ticket shop or home. When a radio/infrared signal reception unit is arranged in the cradle 301 at the ticket shop or home, the ticket can be purchased by the radio communication unit 307 or infrared communication unit 308.

In the above embodiments, the radio communication unit 307 having the structure shown in Fig. 2A is used as a radio communication unit. However, a radio communication unit having a wristwatch shape, or a bracelet or pendant shape as shown in Figs. 2C and 2D may be used. Referring to Figs. 2C and 2D, the sensor 11 is arranged on the surface of a dial 391, and an antenna 392 is arranged around the sensor 11. Fig. 2C shows the normal state, and Fig. 2D shows the fingerprint authentication state. The infrared communication unit 308 may also have the same structure as that of the radio communication unit described above.

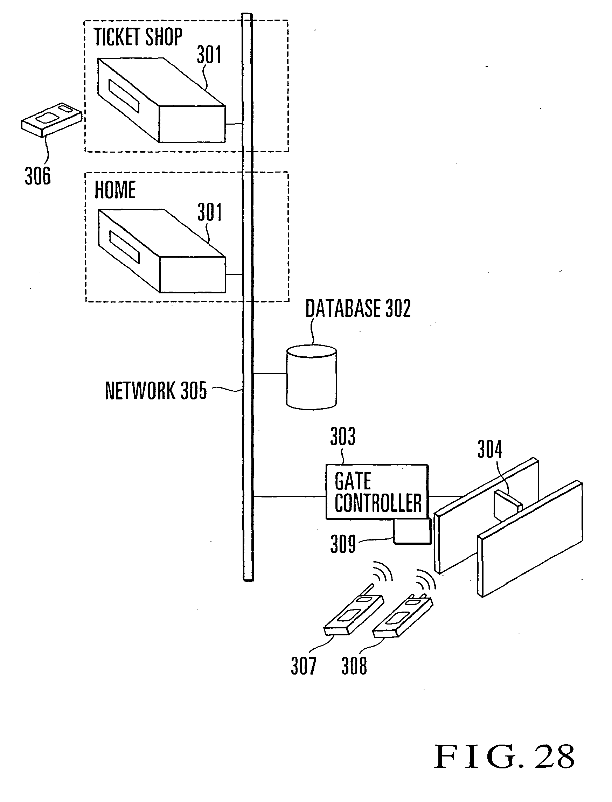

In the above embodiments, the database 302 and gate controller 303 are connected through a dedicated line, as shown in Fig. 23. However, as shown in Fig. 28, the database 302 and gate controller 303 may be connected through the network 305.

The database 302 includes a server function, although not illustrated in Figs. 23 and 28. The server function need not always be integrated with the database 302 as long as it is connected to the network 305. The cradle 301 or gate controller 303 may replace the server function. In addition, instead of controlling the entire system by a single server, processing may be distributed to the cradle 301 and gate controller 303.

When signals to be exchanged between the authentication token 306 and the cradle 301, between the cradle 301 and the database 302, between the database 302 and the gate controller 303, and between the radio/infrared signal reception unit 309 and the radio communication unit 307 or infrared communication unit 308 are encrypted on the transmitting side, and the encrypted data are decrypted on the receiving side, the security of the system can be improved.

In the above embodiments, opening/closing of the gate 304 is controlled on the basis of fingerprint authentication. However, gate 304 may be opened upon authenticating the user on the basis of biometrical information unique to the user, such as a finger size, palm shape, vein pattern, facial feature, iris, and voiceprint, or the signature (handwriting) of the user.

As described above, according to the embodiments shown in Figs. 23 to 28, for a gate opening/closing system for opening/closing the entrance gate for a site, an authentication token for authenticating a user on the basis of biometrical information of the user, and a database which stores identification information of the user when he/she has prepaid the admission for the hall are prepared. When the user is to enter the hall, the user is authenticated by the authentication token. When the user's identification information stored in the authentication token in advance is output from the authentication token, the identification information is received. If the received identification information is stored in the database, the entrance gate is opened. Since no ticket is required to enter the concert hall or stadium, personnel for ticket check are unnecessary, and the user can easily enter the concert hall or stadium. Even when the authentication token of the user is stolen, and a third party attempts to illicitly enter the site using the authentication token, the illicit entrance of the third party can be prevented because the biometrical information of the user is different from that of the third party. Hence, entrance of the user can be properly managed.

### 16th Embodiment

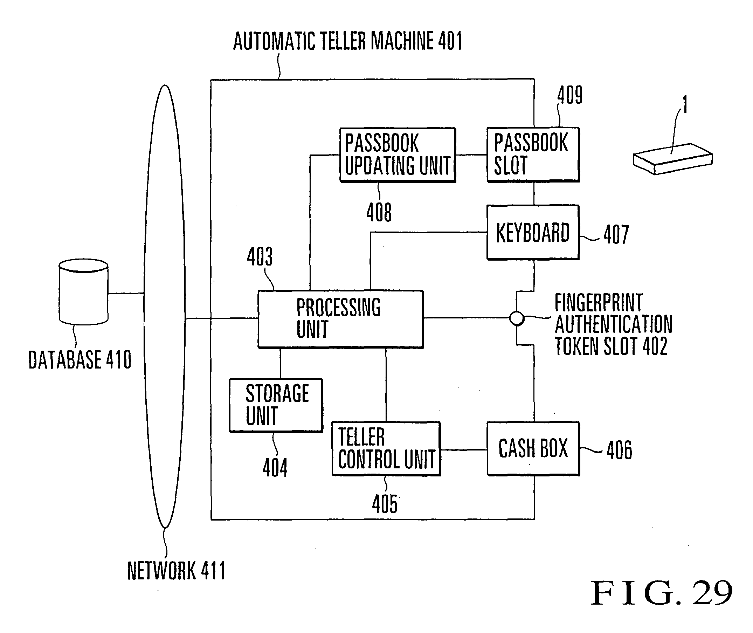

Fig. 29 shows the arrangement of a system in which the present invention is applied to a biometrical information authentication automatic teller machine. An automatic teller machine 401 is installed in a bank or the like, and authenticates whether a user is authentic by collating the user's fingerprint as the biometrical information of the user, and when the user is authenticated, provides various services to, e.g., allow the user to withdraw cash. The automatic teller machine 401 is connected to a database 410 through a network 411. Although not illustrated in Fig. 29, the database 410 may be connected to the network 411 through a server.

As shown in Fig. 29, the automatic teller machine 401 has a slot 402 for receiving an authentication token 1, and a processing unit 403 for executing authentication processing for fingerprint information from the authentication token 1. The processing unit 403 is connected to a storage unit 404, a teller control unit 405 for depositing/withdrawing cash for a user, and a passbook updating unit 408 for writing the outstanding balance or the like on a passbook inserted to a slot 409.

The authentication token 1 to be inserted into the slot 402 of the automatic teller machine 401 is a compact and lightweight device that can be held and carried by a user, and has a main body section la, as shown in Figs. 1 and 2. The main body section 1a has a sensor 11, storage unit 12, collation circuit 13, and terminal 1b as a connection terminal to the automatic teller machine 401.

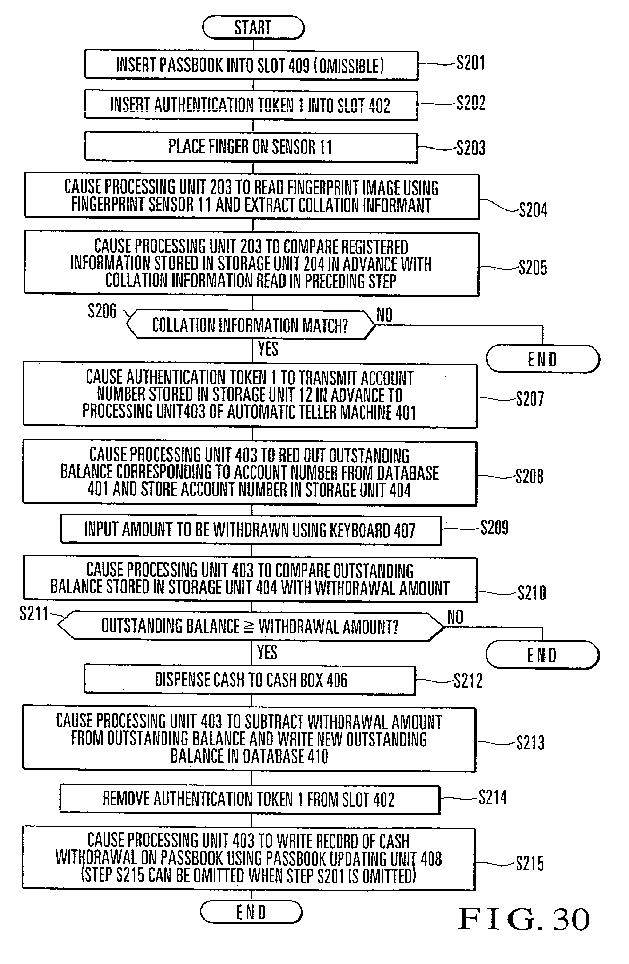

The operation of the automatic teller machine 401 in depositing/withdrawing cash will be described next with reference to the flow chart shown in Fig. 30.

Fig. 30 shows operation corresponding to cash withdrawal by a user.

When a user wants to withdraw cash from the automatic teller machine 401, he/she inserts his/her passbook into the slot 409 in step S201. If the user requests no outstanding balance update on his/her passbook, the operation in step S201 is omitted. Subsequently, the user inserts the authentication token 1 of his/her own into the slot 402 (step S202) and places a finger on the sensor 11 of the authentication token 1 (step S203).

The authentication token 1 reads the fingerprint image detected by the sensor 11, processes the image as image data, and extracts feature data from the fingerprint image data as collation information (step S204). Collation information representing the feature portion in the fingerprint image data of the user, which is detected by the sensor 11 and processed in advance, is registered in the storage unit 12 of the authentication token 1. The authentication token 1 compares the registered information with the collation information extracted in step S204 (step S205).

If the two pieces of collation information do not match, the processing is ended. If the two pieces of collation information match, i.e.,. YES in step S206, the authentication token 1 transmits the user's bank account number stored in the storage unit 12 in advance to the processing unit 403 of the automatic teller machine 401 (step S207). An outstanding balance is stored in the database 410 in correspondence with the account number of each user. Upon receiving the account number transmitted from the authentication token 1, the processing unit 403 of the automatic teller machine 401 acquires an outstanding balance corresponding to the received account number from the database 410 through the network 411 and stores the outstanding balance in the storage unit 404 (step S208).

When the user inputs a desired withdrawal amount by operating a keyboard 407 (step S209), the processing unit 403 of the automatic teller machine 401 compares the outstanding balance stored in the storage unit 404 with the withdrawal amount based on the user's input operation (step S210). If NO in step S211, the processing is ended. If the outstanding balance is equal to or more than the withdrawal amount, i.e., YES in step S211, the teller control unit 405 is controlled and made to dispense cash corresponding to the withdrawal amount (step S212).

In this case, the processing unit 403 of the automatic teller machine 401 writes, in the database 410 through the network 411, an outstanding balance obtained by subtracting the withdrawal amount from the outstanding balance stored in the storage unit 404 (step S213). After that, the user removes the authentication token 1 from the slot 402 (step S214). When the passbook of the user has been inserted, the processing unit 403 controls the passbook updating unit 408 to record the user's cash withdrawal amount and the like on the passbook (step S215).

In the 16th embodiment, the fingerprint data of each user is registered in the fingerprint token 1 of the user, and also the account number of the user is stored in the token. When fingerprint data read by the sensor 11 of the fingerprint token 1 matches the registered data, the stored account number is transmitted to the automatic teller machine 401. Upon receiving the account number, the automatic teller machine 401 acquires an outstanding balance corresponding to the account number from the database 410 and dispenses cash according to the outstanding balance. Consequently, since the registered fingerprint data of the user is not loaded in the machine, unlike the conventional automatic teller machine, the user need not worry about misuse of the fingerprint data by the bank. In addition, since the fingerprint sensor is not shared by a plurality of users, unlike the conventional automatic teller- machine, the fingerprint remaining on the fingerprint sensor can be prevented from being illicitly used by a third party to easily forge the fingerprint.

In this embodiment, the fingerprint data and account number of the user are registered in the storage unit 12 of the authentication token 1. The storage unit 12 may also store user's personal information such as the user's name, address, telephone number, and personnel information. In this case, the personal information can be used for various services such that, in, e.g. using a remittance service, the name, address, and telephone number of the remitter are automatically added.

### 17th Embodiment

Fig. 17 shows a 17th embodiment and operation corresponding to cash deposit by a user.

When a user wants to deposit his/her cash in an automatic teller machine 401, he/she inserts his/her passbook into a slot 409 in step S221. If the user requests no outstanding balance update on his/her passbook, the operation in step S221 is omitted. Subsequently, the user inserts an authentication token 1 of his/her own into a slot 402 (step S222).

The authentication token 1 transmits the user's bank account number stored in a storage unit 12 in advance to a processing unit 403 of the automatic teller machine 401 (step S223). Upon receiving the account number, the processing unit 403 acquires an outstanding balance corresponding to the account number from a database 410 and stores the outstanding balance in a storage unit 404 (step S224) and opens a cash box 406. As the cash box 406 is opened, the user deposits the cash in the cash box 406 (step S225).

In this case, the processing unit 403 of the automatic teller machine 401 adds the amount deposited in step S225 to the user's outstanding balance stored in the storage unit 404 and records the total amount as the new outstanding balance in correspondence with the account number in the database 410 (step S226). After that, the user removes the authentication token 1 from the slot 402 (step S227). When the passbook of the user has been inserted, the processing unit 403 controls a passbook updating unit 408 to record the user's cash deposit amount and the like on the passbook (step S228).

In the 17th embodiment, when the authentication token 1 is inserted into the automatic teller machine 401, the authentication token 1 transmits the user's account number to the automatic teller machine 401 side. In this case, the fingerprint image of the user may be read by a sensor 11 of the authentication token 1, and when the read fingerprint data matches registered fingerprint data in a storage unit 12, the user's account number may be transmitted to the automatic teller machine 401 side. With this arrangement, the security in depositing cash improves.

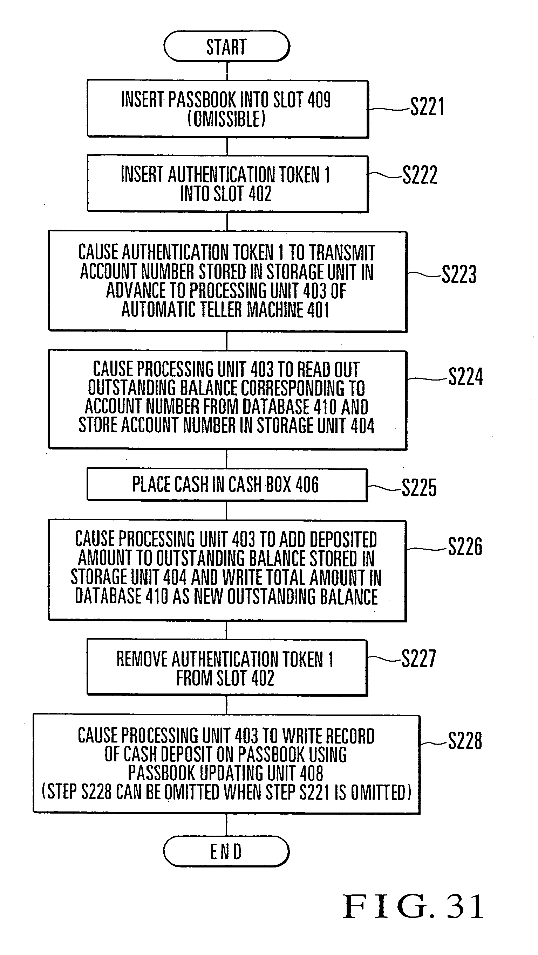

The operations of main parts of the above embodiments have been described above with reference to the flow charts in Figs. 30 and 31. The step execution orders may be appropriately changed unless it conflicts with the overall operation.

In the above embodiments, the cash withdrawing and cash depositing operations by the automatic teller machine 401 have been described. Even when the embodiments are applied to another service such as remittance or transfer, the same effect as described above can be obtained.

In the above embodiments, personal authentication is performed using the authentication token 1, thereby permitting use of the automatic teller machine. For this reason, the bank card and password are unnecessary, and the security improves.

When signals to be exchanged between the authentication token 1 and the automatic teller machine 401 are encrypted on the transmitting side, and the encrypted data are decrypted on the receiving side, the security of the system can be improved.

In the above embodiments, cash is withdrawn on the basis of fingerprint authentication. However, cash withdrawal may be permitted by authenticating the user on the basis of biometrical information unique to the user, such as a finger size, palm shape, vein pattern, facial feature, iris, and voiceprint, or the signature (handwriting) of the user.

As described above, in the embodiments shown in Figs. 29 to 31, a biometrical information authentication automatic teller machine for providing a service to a user on the basis of authentication of user's biometrical information such as a fingerprint image has a biometrical information authentication token for authenticating the user on the basis of the biometrical information of the user. The biometrical information authentication token has a storage means for storing the biometrical information of the user, a sensor for detecting the biometrical information of the user, and a processing means for outputting control information on the basis of matching between the information detected by the sensor and that stored in the storage means. The service including cash deposit/withdrawal is provided to the user on the basis of the control information from the processing means. Since the registered fingerprint data of the user is not loaded in the machine, unlike the conventional automatic teller machine, the user need not worry about misuse of the fingerprint data by the bank. In addition, since the fingerprint sensor is not shared by a plurality of users, unlike the conventional automatic teller machine, the fingerprint remaining on the fingerprint sensor can be prevented from being illicitly used by a third party to easily forge the fingerprint.

### 18th Embodiment

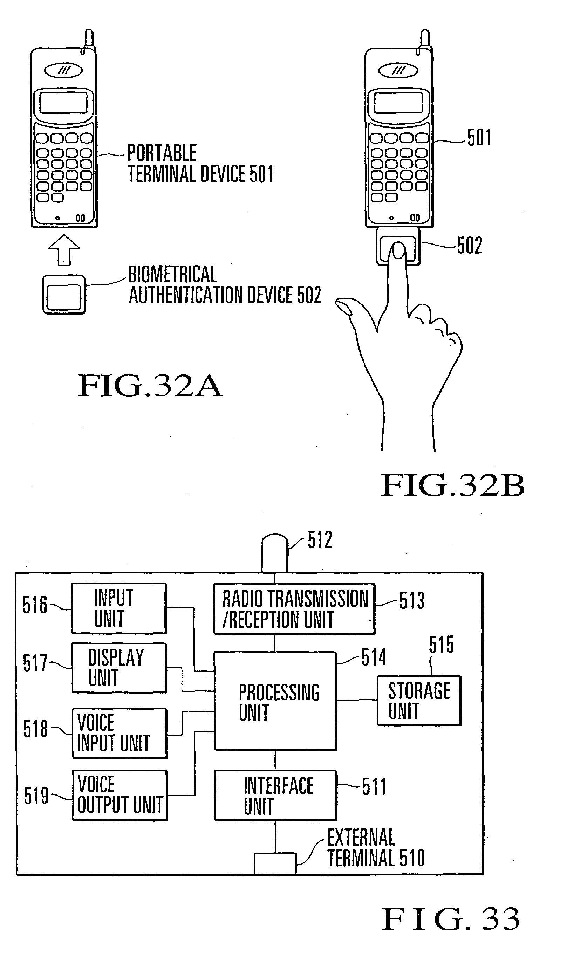

Figs. 32A and 32B show an 18th embodiment of the present invention in which the present invention is applied to a portable terminal system. This portable terminal system is constituted by a portable terminal device 501 as a system main body, and a biometrical authentication device 502 (corresponding to the authentication token 1 of the above-described embodiments). The portable terminal device 501 has a slot for receiving the biometrical authentication device 502. When the biometrical authentication device 502 is inserted into the slot to connect the portable terminal device 501 and biometrical authentication device 502, and personal authentication is performed by the biometrical authentication device 502, the user can access the portable terminal device 501. The specific arrangement of the biometrical authentication device 502 is the same as that of the above-described authentication token 1 shown in Figs. 1 and 2.

Fig. 33 shows the arrangement of the portable terminal device 501. The portable terminal device 501 has an external terminal 510 arranged at the slot to connect the device to the biometrical authentication device 502, an interface unit 511 serving as an interface to the biometrical authentication device 502, an antenna 512 for transmitting/receiving a radio wave to/from, e.g., a base station, a radio transmission/reception unit 513 serving as a communication means for transmitting/receiving voice, image, or text data through the antenna 512, a processing unit 514 for controlling the entire terminal device and processing transmission/reception data, a storage unit 515 for storing information, an input unit 516 formed from a plurality of key switches, a display unit 517 formed from a liquid crystal panel for displaying a window, a voice input unit 518 for collecting the user's voice by a microphone and converting the voice into voice data, and a voice output unit 519 for converting the received voice data into an analog voice signal and outputting the signal from a speaker.

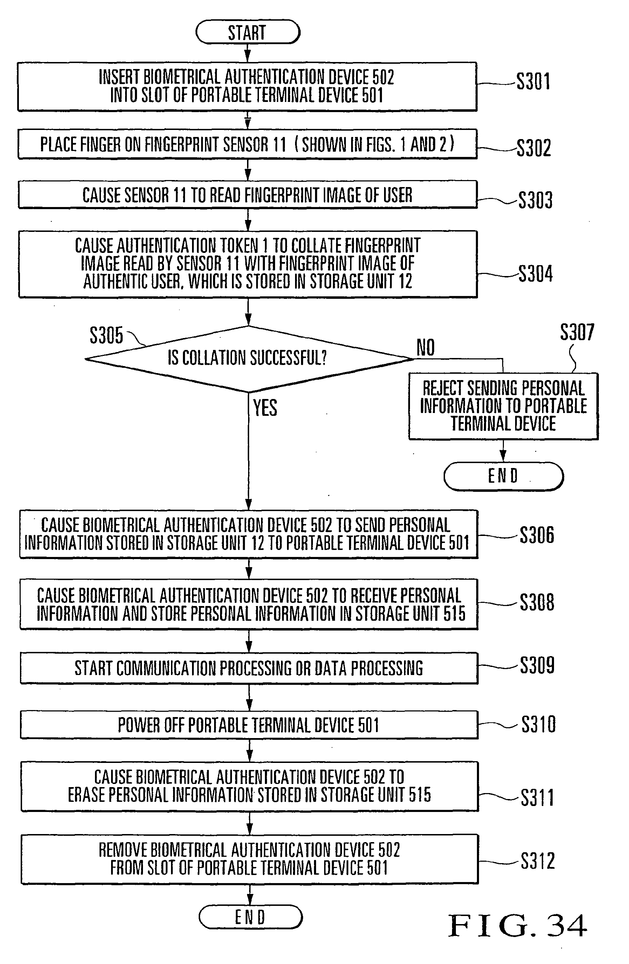

The operation of the portable terminal system will be described with reference to Fig. 34. A fingerprint is used as user's biometrical information. A user who is to make a call using the portable terminal device 501 inserts the biometrical authentication device 502 of his/her own into the slot of the portable terminal device 501 (step S301 in Fig. 34). The portable terminal device 501 and biometrical authentication device 502 are connected through the external terminal 510.

The storage unit 12 (Fig. 1) of the biometrical authentication device 502 stores in advance the fingerprint image data of the authentic user, personal information of the authentic user, including the personal identification number, name, address, year/month/day of birth, and credit card number, and service information such as telephone directory data, e-mail address book data, and password. The personal identification number is an identification number applied to the authentic user by a telecommunication carrier, and e.g., the telephone number of the authentic user. The storage unit 515 of the portable terminal device 501 stores programs necessary for the operation of the portable terminal device 501, including communication processing and data processing, though the personal information and service information are not stored.

To make the biometrical authentication device 502 perform personal authentication, the user places a finger on the sensor 11 shown in Figs. 1 and 2 (step S302). The sensor 11 reads the fingerprint image of the user (step S303). A collation circuit 13 of the biometrical authentication device 502 shown in Fig. 1 performs personal authentication by collating the fingerprint image read by the sensor 11 with the fingerprint image of the authentic user, which is registered in a storage unit 12 in advance (step S304). The biometrical authentication device 502 can employ various authentication algorithms including a feature point extraction scheme of extracting a feature point of the fingerprint image read by the sensor 11 and comparing the feature point with a feature point of the fingerprint image of the authentic user, and a pattern matching scheme of directly comparing the fingerprint image read by the sensor 11 with the fingerprint image of the authentic user.

If the fingerprint images match, and the authentication is successful (YES in step S305), the biometrical authentication device 502 determines that the user who is holding the biometrical authentication device 502 is the authentic user and permits the user to access the portable terminal device 501. More specifically, the biometrical authentication device 502 reads out, from the storage unit 12, the personal information such as the personal identification number and service information such as the telephone directory data, e-mail address book data, and password, and sends the readout personal information and service information to the portable terminal device 501 through the interface unit 511 (step S306). If the fingerprint images do not match, and the authentication fails, the biometrical authentication device 502 determines that the user who is holding the biometrical authentication device 502 is not the authentic user and rejects sending of the personal information and service information to the portable terminal device 501 (step S307).

Next, the processing unit 514 of the portable terminal device 501 receives, through the interface unit 511, the personal information and service information sent from the biometrical authentication device 502 and stores the information in the storage unit 515 (step S308). When the personal information and service information are stored in the storage unit 515, the portable terminal device 501 can be used (step S309).

In step S309, for example, when the user operates the input unit 516 to select the telephone number of the callee from the telephone directory data and presses the call origination button of the input unit 516, the processing unit 514 outputs to the radio transmission/reception unit 513 the personal identification number stored in the storage unit 515 and the selected callee telephone number. The radio transmission/reception unit 513 converts the personal identification number and callee telephone number into a radio signal and outputs the signal to the antenna 512. The antenna 512 sends the radio signal to the network (base station of the mobile network).

In response to the call origination from the portable terminal device 501, the base station calls the callee on the basis of the callee telephone number contained in the received radio signal, and when the telephone of the callee responds, connects the portable terminal device 501 to the telephone of the callee through a channel. Voice from the telephone of the callee is received by the antenna 512 as a radio signal and demodulated by the radio transmission/reception unit 513, and the demodulated voice data is converted into an analog voice signal by the voice output unit 519 and output from the speaker of the voice output unit 519, thereby reproducing the voice.

On the other hand, the user's voice from the portable terminal device 501 is collected by the microphone of the voice input unit 518, converted into voice data by the voice input unit 518, converted into a radio signal by the radio transmission/reception unit 513, and transmitted from the antenna 512. With the above operation, the portable terminal device 501 can be used as a portable telephone.

In step S309, when the user operates the input unit 516 to create e-mail, selects the e-mail address of the callee from the e-mail address book, and presses the call origination button of the input unit 516, the processing unit 514 of the portable terminal device 501 sends, to the network, the personal identification number stored in the storage unit 515 and a predetermined callee telephone number (e.g., number assigned to the mail service), as in the above voice communication.

After the portable terminal device is connected to a mail server through the network, the processing unit 514 sends to the network data containing the user's e-mail address stored in the storage unit 515, the selected e-mail address of the callee, and the created e-mail contents. On the other hand, in receiving e-mail, a radio signal received by the antenna 512 is demodulated by the radio transmission/reception unit 513, and the demodulated data is converted into character data by the processing unit 514 whereby the contents of the received e-mail are stored in the storage unit 515 and displayed on the screen of the display unit 517. With the above operation, the portable terminal device 501 can be used as a portable mail terminal device.

To use the portable terminal device 501 as a terminal device capable of image communication, the processing unit 514 sends image data stored in the storage unit 515 to the network. On the other hand, in receiving image data, a radio signal received by the antenna 512 is demodulated by the radio transmission/reception unit 513 thereby the demodulated image data is stored in the storage unit 515 and displayed on the screen of the display unit 517.

When a password is set in advance for processing such as power-on or data access, and the user requests to execute processing for which the password is set, the processing unit 514 displays a message for requesting input of the password on the display unit 517. The processing unit 514 collates the password input by the user by operating the input unit 516 with the password contained in the service information in the storage unit 515, and only when the passwords match, executes the requested processing. With this operation, the user can power on the portable terminal device 501 or browse/edit the personal information or service information. The edited personal information or service information may be sent to the biometrical authentication device 502 to update the personal information or service information stored in the biometrical authentication device 502.

After use of the portable terminal device 501, the user presses the power button of the input unit 516 to power off the portable terminal device 501 (step S310). When the device is powered off, power supply to the display unit 517 and the like is stopped. Even when the device is powered off, power supply to the processing unit 514 is continued. The processing unit 514 erases the personal information and service information stored in the storage unit 515 when the device is powered off (step S311). The personal information and service information are erased to prevent these pieces of information from remaining in the portable terminal device 501. The user removes the biometrical authentication device 502 from the slot of the portable terminal device 501 (step S312).

As described above, in this embodiment, the personal information and service information are stored in the biometrical authentication device 502, and only when the personal authentication using a fingerprint is successful, the personal information and service information are sent to the portable terminal device 501. For this reason, even when a third party other than the authentic user illicitly acquires the password, the personal information and service information which are to be sent to the portable terminal device 501 are rejected at the time of personal authentication using the fingerprint, and the third party cannot illicitly acquire the personal information and service information from the portable terminal device 501. Since any illicit access to the personal information and service information by illicit acquisition of the password can be prevented, the security can be improved.

In this embodiment, the personal identification number (telephone number) is stored in the biometrical authentication device 502, and only when the personal authentication using the fingerprint is successful, the personal identification number is sent and given to the portable terminal device 501. For this reason, the user can use a plurality of portable terminal devices 501 by a single personal identification number, and the convenience for the user can be improved.

Even when a third party other than the authentic user illicitly acquires the portable terminal device 501 and biometrical authentication device 502 of the authentic user, the personal identification number which is to be sent to the portable terminal device 501 is rejected at the time of personal authentication using the fingerprint, so the third party cannot use the portable terminal device 501. Hence, the security can be improved, and any illicit use of the portable terminal device 501 that results in charging for the authentic user can be prevented.

In this embodiment, the single authentication device 502 can be used in a plurality of portable terminal devices 501. Since the user needs to manage and edit the personal information and service information only on the biometrical authentication device 502, the convenience for the user and security can be improved.

In this embodiment, personal authentication is performed at the start of use of the portable terminal device 501, and when the personal authentication is successful, all pieces of personal information and service information are sent from the biometrical authentication device 502 to the portable terminal device 501. However, the personal authentication may be performed when certain personal information or service information (e.g., telephone directory data) becomes necessary during use of the portable terminal device 501, and when the authentication is successful, the required personal information or service information may be sent from the biometrical authentication device 502 to the portable terminal device 501.

The personal authentication may be performed at the start of use of the portable terminal device 501, and wen the personal authentication is successful, only the personal identification number may be sent from the biometrical authentication device 502 to the portable terminal device 501. Personal information or service information other than the personal identification number may be stored in the portable terminal device 501 in advance, or sent from the biometrical authentication device 502 to the portable terminal device 501 as needed, as described above.

### 19th Embodiment

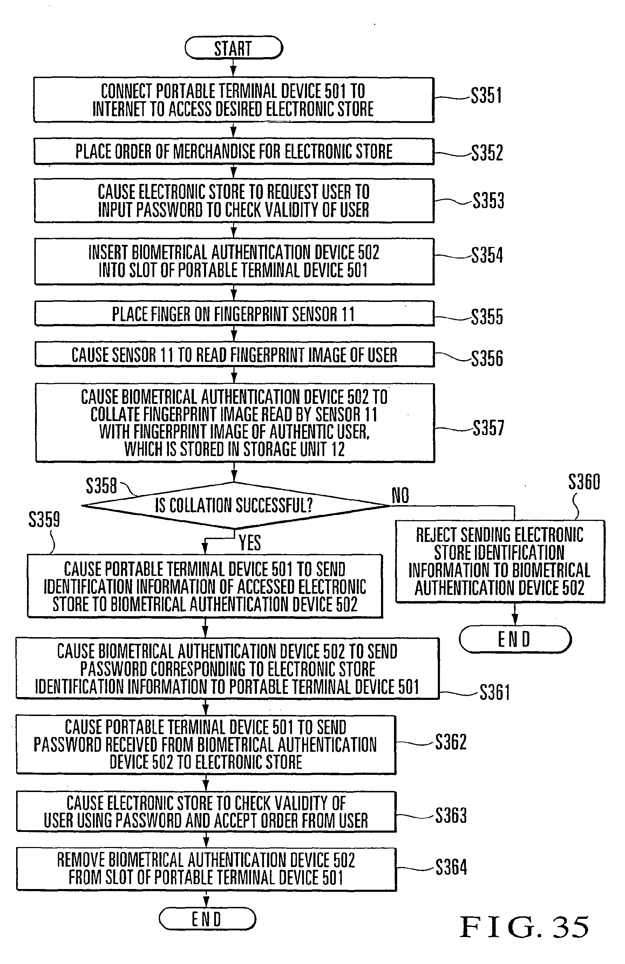

Fig. 35 shows a 19th embodiment in which the present invention is applied to a portable terminal system. The arrangement of the portable terminal system is the same as that of the 18th embodiment and therefore will be described with reference to Figs. 1, 2, 32A, 32B, and 33.

A storage unit 12 of a biometrical authentication device 502 stores the fingerprint image data of an authentic user and also, as service information, a password for user's validity determination, which is predetermined between the user and a web site (to be referred to as an electronic store hereinafter) of electronic commerce. Other pieces of personal information (e.g., the personal identification number of the authentic user) and service information (e.g., telephone directory data, e-mail address book data, and password necessary for power-on or access to the personal information) are stored in a storage unit 515 of a portable terminal device 501.

The user operates the portable terminal device 501 to connect to the Internet by the same communication processing as in the 18th embodiment, browses the web page, and accesses a desired electronic store (web server) (step S351). The web page of the electronic store is displayed on the screen of a display unit 517. Subsequently, the user looks at the displayed web page, decides to purchase merchandise presented on the web page, operates an input unit 516 to give a notification purchase of the merchandise on the web page (step S352).

Upon receiving the order of merchandise from the portable terminal device 501, the accessed server functioning as the electronic store requests the user to input the password predetermined between the electronic store and the authentic user (step S353). In response to the password input request displayed on the web page, the user inserts the biometrical authentication device 502 of his/her own into the slot of the portable terminal device 501 (step S354) and places a finger on a sensor 11 of the biometrical authentication device 502 (step S355).

The sensor 11 of the biometrical authentication device 502 reads the fingerprint image of the user (step S356). The biometrical authentication device 502 executes personal authentication by collating the fingerprint image read by the sensor 11 with the fingerprint image of the authentic user, which is registered in the storage unit 12 in advance, by a collation circuit 13 and sends the authentication result to the portable terminal device 501 (step S357).

When the authentication result received from the biometrical authentication device 502 indicates that the authentication is successful (YES in step S358), a processing unit 514 of the portable terminal device 501 sends the identification information (name or number of the electronic store) of the electronic store that is being accessed to the biometrical authentication device 502 (step S359). If the authentication result received from the biometrical authentication device 502 represents that the authentication fails, the processing unit 514 rejects electronic store identification information which is to be sent to the biometrical authentication device 502 (step S360).

When the authentication is successful, and the electronic store identification information is received from the portable terminal device 501, the collation circuit 13 of the biometrical authentication device 502 reads out a password corresponding to the electronic store identification information from the storage unit 12 and sends the readout password to the portable terminal device 501 (step S361). The processing unit 514 of the portable terminal device 501 sends the password received from the biometrical authentication device 502 to the Internet (step S362).

The accessed web server collates the password received from the portable terminal device 501 with the password of the authentic user, which is registered in advance, to check the validity of the user. If the passwords match, the web server determines that the user who has placed the purchase order is the authentic user, accepts the order from the user, and notifies the accessing portable terminal device 501 that the purchase order is accepted (step S363). The user checks that the purchase order of merchandise is accepted, and then removes the biometrical authentication device 502 from the slot of the portable terminal device 501 (step S364).

Since the password sent from the biometrical authentication device 502 may remain in the storage unit 515 of the portable terminal device 501, the password is preferably erased after use, as in the 18th embodiment.

As described above, in this embodiment, the password to be used to log in to an electronic store is stored in the biometrical authentication device 502. Only when personal authentication using the fingerprint is successful, the password is sent to the portable terminal device 501 and then to the electronic store. Even when a third party other than the authentic user operates the portable terminal device 501, the password which is to be sent to the portable terminal device 501 is rejected at the time of personal authentication using the fingerprint, so the third party cannot do the electronic commerce under the disguise of the authentic user. Hence, the security can be improved.

In this embodiment, only when the authentication is successful, the electronic store identification information is transmitted from the portable terminal device 501 to the biometrical authentication device 502. However, the electronic store identification information may be transmitted to the biometrical authentication device 502 regardless of the authentication result, and only when the authentication is successful, the password corresponding to the electronic store identification information may be transmitted from the biometrical authentication device 502 to the portable terminal device 501.

In this embodiment, only the password is sent from the biometrical authentication device 502 as service information after personal authentication. However, a credit card number or other personal information may be sent from the biometrical authentication device 502 together with the password.

Operation examples of the 18th and 19th embodiments shown in Figs. 32A to 35 have been described above. The order of operation may be changed unless it conflicts with the overall operation. In the 18th and 19th embodiments, the portable terminal device 501 has a communication means for communicating with the network. However, the portable terminal device 501 may be a portable standalone computer. Even in this case, any illicit access to personal information or service information by a third party other than the authentic user can be prevented. In the 18th and 19th embodiments, communication between the portable terminal device 501 and the network is radio communication. However, it may be wire communication. In addition, communication between the portable terminal device 501 and the biometrical authentication device 502 is wire communication. However, it may be radio communication.

In the 18th and 19th embodiments, a fingerprint is used as biometrical information. Other types of biometrical information are, e.g., user's voiceprint, iris, handwriting, palm shape, finger length, and facial feature. When the palm shape or finger length of the user is used as biometrical information, the sensor 11 of the biometrical authentication device 502 receives the image of the palm or finger of the user. The collation circuit 13 collates the received image data with the image data of the palm or finger of the authentic user, which is registered in the storage unit 12 in advance.

When the voiceprint, i.e., sound spectrogram of the user is used as biometrical information, the sensor 11 of the biometrical authentication device 502 collects user's voice and extracts the voiceprint. The collation circuit 13 collates the extracted voiceprint data with the voiceprint data of the authentic user, which is registered in the storage unit 12 in advance. When the handwriting of the user is used as biometrical information, the sensor 11 of the biometrical authentication device 502 receives the pen trail of the user. The collation circuit 13 collates the received handwriting image data with the handwriting image data of the authentic user, which is registered in the storage unit 12 in advance.

When the iris of the user is used as biometrical information, the sensor 11 of the biometrical authentication device 502 senses the iris of the user. The collation circuit 13 collates the sensed iris image data with the iris image data of the authentic user, which is registered in the storage unit 12 in advance. When the facial feature of the user is used as biometrical information, the sensor 11 of the biometrical authentication device 502 senses the face of the user and extracts the feature of the face. The collation circuit 13 collates the extracted feature data with the feature data of the authentic user, which is registered in the storage unit 12 in advance.

According to the 18th and 19th embodiments, personal information is stored in the biometrical authentication device. Only when the personal authentication using biometrical information is successful, the personal information is sent to the portable terminal device. For this reason, even when a third party other than the authentic user illicitly acquires the password, personal information which is to be sent to the portable terminal device is rejected at the time of personal authentication using the biometrical information, so the third party cannot illicitly acquire the personal information from the portable terminal device. Hence, any illicit access to the personal information by illicit acquisition of the password can be prevented, and the security can be improved. In addition, since the single biometrical authentication device can be used in a plurality of portable terminal devices, the user needs to manage and edit the personal information only on the biometrical authentication device, and the convenience for the user and security can be improved.

Additionally, service information is stored in the biometrical authentication device. Only when the personal authentication using biometrical information is successful, the service information is sent to the portable terminal device. For this reason, even when a third party other than the authentic user illicitly acquires the password, service information which is to be sent to the portable terminal device is rejected at the time of personal authentication using the biometrical information, so the third party cannot illicitly acquire the service information from the portable terminal device. Hence, any illicit access to the service information by illicit acquisition of the password can be prevented, and the security can be improved. In addition, since the single biometrical authentication device can be used in a plurality of portable terminal devices, the user needs to manage and edit the service information only on the biometrical authentication device, and the convenience for the user and security can be improved. Furthermore, since the third party cannot receive the service under the disguise of the authentic user, the security can be improved.

In the 18th and 19th embodiments, the personal identification number is stored in the biometrical authentication device, and only when the personal authentication using the biometrical information is successful, the personal identification number is sent and given to the portable terminal device. For this reason, the user can use a plurality of portable terminal devices by a single personal identification number, and the convenience for the user can be improved. Even when a third party other than the authentic user illicitly acquires the portable terminal device and biometrical authentication device of the authentic user, the personal identification number which is to be sent to the portable terminal device is rejected at the time of personal authentication using the biometrical information, so the third party cannot use the portable terminal device. Hence, the security can be improved, and any illicit use of the portable terminal device that results in charging for the authentic user can be prevented.

The password to be used to log in to a web site is stored in the biometrical authentication device. Only when personal authentication using biometrical information is successful, the password is sent to the portable terminal device and then to the web site. Even when a third party other than the authentic user operates the portable terminal device, the password which is to be sent to the portable terminal device is rejected at the time of personal authentication using the biometrical information, so the third party cannot perform electronic commerce under the disguise of the authentic user. Hence, security can be improved.

In the 19th embodiment, when an encryption unit or the like is assembled in the portable terminal device, the security can be further improved by encrypting the password or service information to be sent to the Internet.

### 20th Embodiment

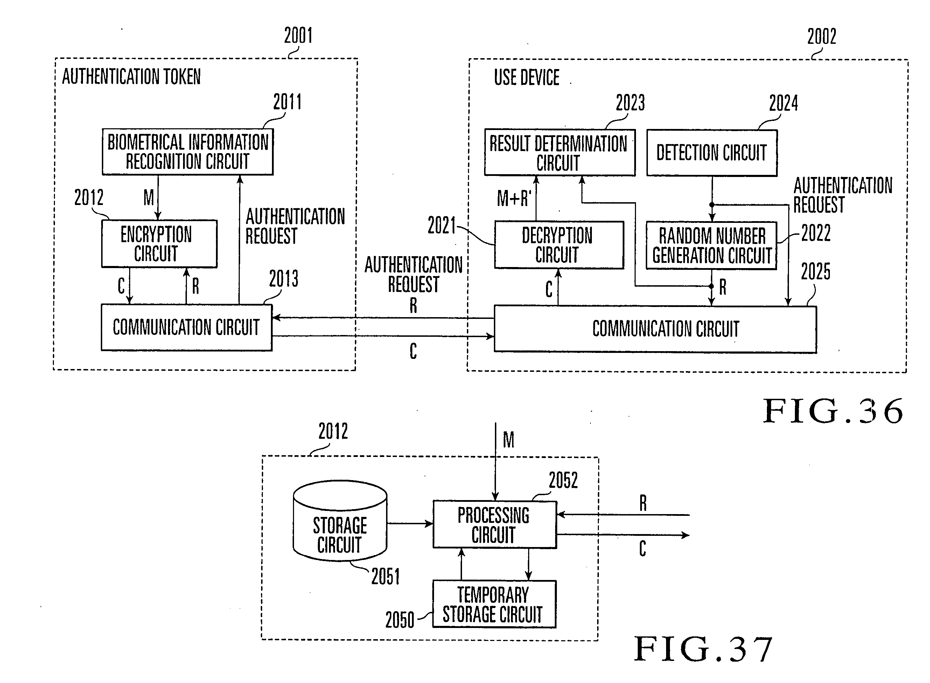

Fig. 36 shows a 20th embodiment of the present invention. A case wherein in transmitting authentication data containing a collation result from an authentication token to a use device, an encryption scheme of encrypting the authentication data is employed will be described.

This authentication system comprises an authentication token 2001 serving as an authentication device for authenticating a user, and a use device 2002 for providing a service to the user after the user authentication.

The authentication token 2001 has a biometrical information recognition circuit 2011, encryption circuit 2012, and communication circuit 2013. The biometrical information recognition circuit 2011 includes a sensor 11, collation circuit 13, and storage circuit 12. The communication circuit 2013 is identical to the communication circuit 14.

Hence, the authentication token 2001 can be regarded as a device obtained by adding the encryption circuit 2012 to the authentication token shown in Fig. 1.

The use device 2002 has a decryption circuit 2021, random number generation circuit 2022, result determination circuit 2023, detection circuit 2024, and communication circuit 2025. The decryption circuit 2021, random number generation circuit 2022, result determination circuit 2023, and detection circuit 2024 are included in the processing unit 22 shown in Fig. 1. The communication circuit 2025 is identical to the communication circuit 21 shown in Fig. 1.

Hence, the use device 2002 can be regarded as a device obtained by adding the decryption circuit 2021, random number generation circuit 2022, result determination circuit 2023, and detection circuit 2024 to the processing unit 22 of the use device 2 shown in Fig. 1.

The encryption circuit 2012 encrypts the authentication result output for the biometrical information recognition circuit 2011 and a random number transmitted from the use device 2002 by a secret key algorithm and outputs them. As the secret key algorithm, for example, DES (Data Encryption Standard) can be used. The encryption circuit 2012 encrypts data obtained by adding the authentication result to the random number. For this reason, if the random number generation circuit 2022 generates a random number having n digits, and the authentication result is data having one digit, which represents that the authentication is successful or fails, data having at least n + 1 digits is encrypted. The communication circuit 2013 is an interface means for transmitting/receiving data to/from the use device 2002 by wire or radio while establishing synchronization with the use device 2002.

The detection circuit 2024 in the use device 2002 detects a service providing request from the user to the device. When the service providing request from the user is detected by the detection circuit 2024, the random number generation circuit 2022 generates and outputs a random number having a predetermined number of digits and a value that changes every time. The decryption circuit 2021 decrypts and outputs the encrypted data transmitted from the authentication token 2001.

When the authentication result transmitted from the decryption circuit 2021 represents that the authentication fails, the result determination circuit 2023 rejects service providing to the user. When the authentication result indicates that the authentication is successful, the result determination circuit 2023 compares a numerical value obtained by removing the authentication result from the data decrypted by the decryption circuit 2021 with the random number output from the random number generation circuit 2022 and determines whether the values match or mismatch. The communication circuit 2025 is an interface means for transmitting/receiving data to/from the authentication token 2001 by wire or radio while establishing synchronization with the authentication token 2001.

Fig. 37 shows the detailed arrangement of the encryption circuit 2012 shown in Fig. 36. The encryption circuit 2012 comprises a temporary storage circuit 2050, storage circuit 2051, and processing circuit 2052 connected to the temporary storage circuit 2050 and storage circuit 2051. The temporary storage circuit 2050 temporarily stores the random number transmitted from the use device 2002. The storage circuit 2051 stores a secret key registered in advance and outputs the secret key and set data necessary for encryption calculation using the secret key.

The processing circuit 2052 encrypts data obtained by adding the authentication result output from the biometrical information recognition circuit 2011 to the random number output from the temporary storage circuit 2050, using the secret key and set data output from the storage circuit 2051. The decryption circuit 2021 can be implemented by the same arrangement as that of the encryption circuit 2012.

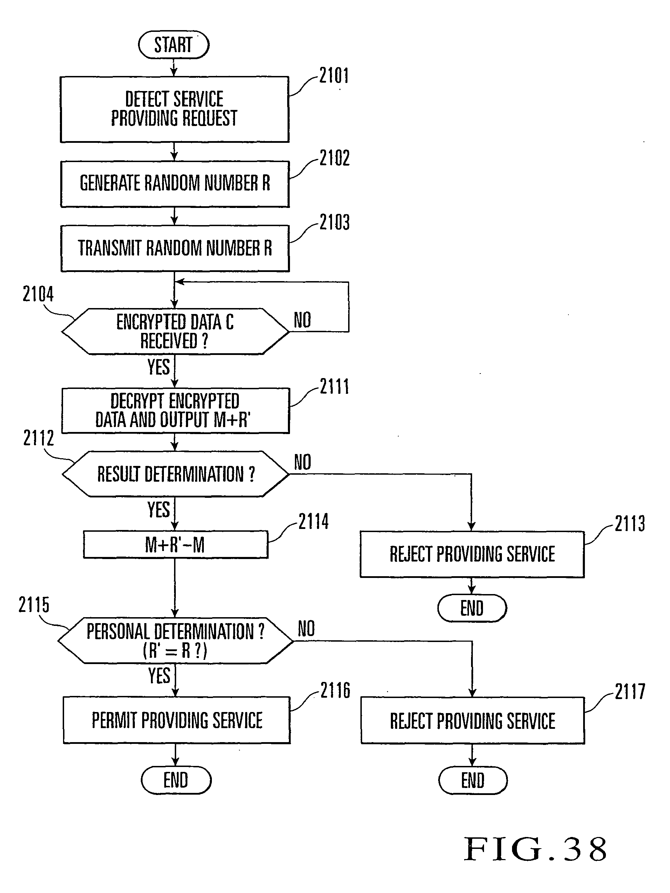

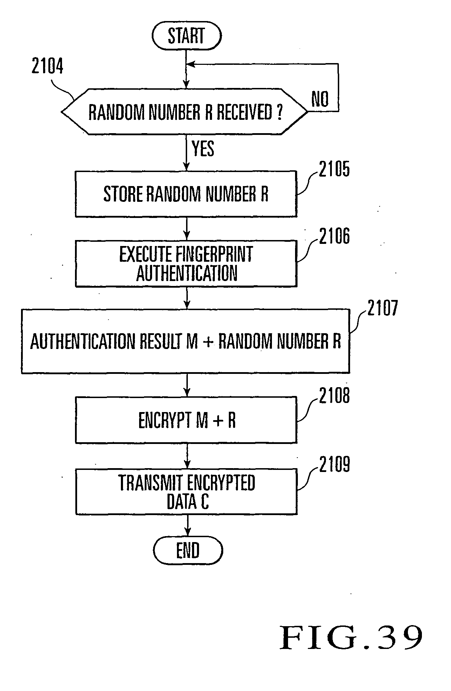

Operation of managing an access to the use device 2002 by the user authentication system of this embodiment will be described below with reference to Figs. 38 and 39. Fig. 38 shows the operation of the use device 2002. Fig. 39 shows the operation of the authentication token 2001.

As characteristic features of the 20th embodiment, the authentication token 2001 encrypts the authentication result and transmits it to the use device 2002, and the use device 2002 generates a random number and transmits it to the authentication token 2001, and after decryption of encrypted data transmitted from the authentication token 2001, determines the result. In this embodiment, a fingerprint is used as user's biometrical information.

First, a specific user who will use the use device 2002 requests the use device 2002 to provide a service. The detection circuit 2024 in the use device 2002 detects the service providing request from the user (step 2101 in Fig. 38). When the detection circuit 2024 detects the service providing request from the user, the random number generation circuit 2022 generates a random number R having a predetermined number of digits and a value that changes every time (step 2102), and transmits the random number R to the authentication token 2001 through the communication circuit 2025 to request user authentication (step 2103).

Upon receiving the random number R transmitted from the use device 2002 through the communication circuit 2013 (YES in step 2104 of Fig. 38), the encryption circuit 2012 (temporary storage circuit 2050) in the authentication token 2001 stores the random number R (step 2105).

Upon receiving the random number R, the biometrical information recognition circuit 2011 determines that the user authentication request is received from the use device 2002, executes user authentication, and outputs an authentication result M indicating that the authentication is successful or fails to the encryption circuit 2012 (step 2106).

More specifically, the biometrical information recognition circuit 2011 compares, by the authentication circuit, the fingerprint image of the specific user, which is obtained by the fingerprint sensor unit, with the fingerprint image of the authentic user, which is registered in the internal storage circuit in advance. If the fingerprint image of the specific user matches that of the authentic user, the biometrical information recognition circuit 2011 outputs the authentication result M representing that the authentication is successful. If the fingerprint images do not match, the biometrical information recognition circuit 2011 outputs the authentication result M indicating that the authentication fails.

To collate the fingerprint, the feature point of the fingerprint image of the specific user is extracted and compared with the feature point of the fingerprint image of the authentic user, or the fingerprint image of the specific user is directly collated with that of the authentic user.

The processing circuit 2052 in the encryption circuit 2012 adds the authentication result M output from the biometrical information recognition circuit 2011 to the random number R output from the temporary storage circuit 2050 (step 2107), and encrypts the data "M + R" obtained by adding the authentication result M to the random number R, using the secret key and set data output from the storage circuit 2051, thereby generating encrypted data C (step 2108).

The processing circuit 2052 transmits the encrypted data C to the use device 2002 through the communication circuit 2013 (step 2109).

Upon receiving the encrypted data C transmitted from the authentication token 2001 through the communication circuit 2025 (YES in step 2110 of Fig. 38), the decryption circuit 2021 in the use device 2002 decrypts the encrypted data C using the secret key stored in the internal storage circuit in advance (step 2111).

This secret key is the same as that stored in the storage circuit 2051 in the encryption circuit 2012.

The result determination circuit 2023 extracts the authentication result M from the data "M + R"' decrypted by the decryption circuit 2021 (step 2112), and when the authentication result M indicates that the authentication fails (NO), determines that the specific user who has issued the service providing request is not the authentic user and rejects providing the service to the specific user (step 2113).

When the authentication result M contained in the decrypted data "M + R'" represents that the authentication is successful, the result determination circuit 2023 obtains a numerical value R' by removing the authentication result M from the data "M + R"' (step 2114) and compares the numerical value R' with the random number R generated by the random number generation circuit 2022 (step 2115). When the numeral value R' matches the random number R, the result determination circuit 2023 determines that the specific user who has issued the service providing request is the authentic user and permits providing the service to the specific user (step 2116). If the numerical value R' does not match the random number R, the result determination circuit 2023 rejects providing the service to the specific user (step 2117).

As described above, in the 20th embodiment, a common encryption key (secret key) is registered in the authentication token 2001 and use device 2002 in advance. When the user request to provide a service, the random number R is transmitted from the use device 2002 to the authentication token 2001. In the authentication token 2001, data obtained by adding the authentication result M to the received random number R is encrypted using the secret key and transmitted to the use device 2002. In the use device 2002, the received encrypted data is decrypted using the secret key and permits providing the service to the user only when the authentication result M contained in the decrypted data represents that the authentication is successful, and the numerical value R' contained in the decrypted data matches the random number R generated in the use device 2002. In this embodiment, since the use device 2002 transmits a different random number every time, the encrypted data transmitted from the authentication token 2001 also has a different value every time.

Hence, even when a third party other than the authentic user could intercept the signal of encrypted data, the third party cannot act as the authentic user by using the signal. In addition, even when a third party other than the authentic user could intercept the random number output from the use device 2002, the signal of encrypted data cannot be forged because the encryption key that is held only by the authentic user is secret.

For the above reasons, a third party other than the authentic user can be prevented from acting as the authentic user, and any illicit use can be prevented.

### 21st Embodiment

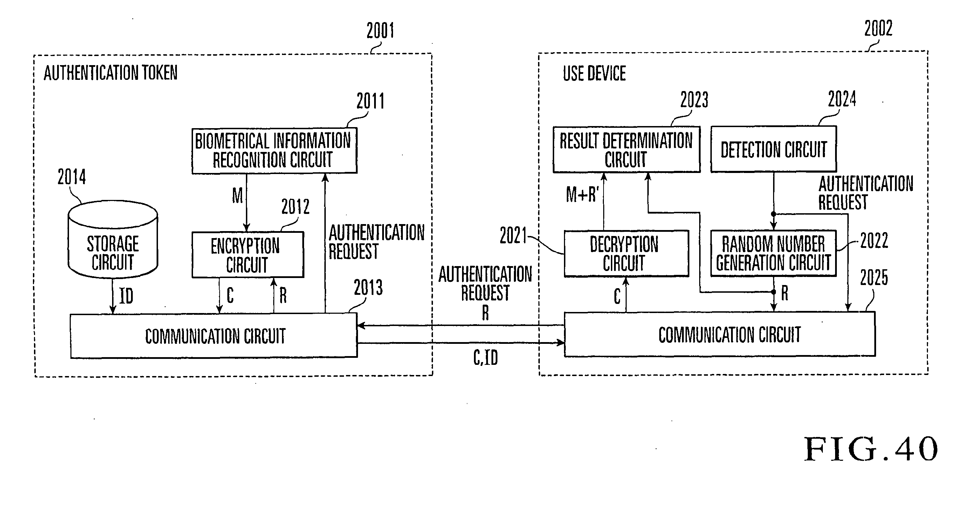

A 21st embodiment of the present invention will be described next with reference to Fig. 40.

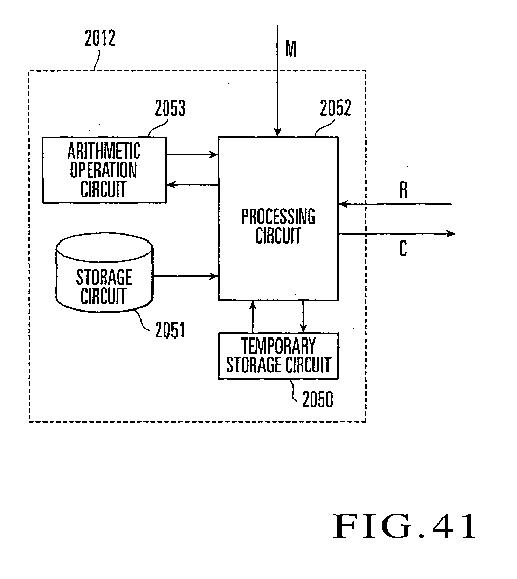

Fig. 40 shows the arrangement of an authentication system according to the 21st embodiment of the present invention. Fig. 41 shows the arrangement of an encryption circuit 2012 in the biometrical information recognition integrated circuit of this embodiment. The 21st embodiment is different from the 20th embodiment in that an authentication token 2001 has a storage circuit 2014, and the encryption circuit 2012 has an arithmetic operation circuit 2053.

The storage circuit 2014 shown in Fig. 40 stores identification information (to be referred to as an ID hereinafter) unique to the authentication token 2001. A storage circuit 2051 in the encryption circuit 2012 stores a private key registered in advance. The arithmetic operation circuit 2053 shown in Fig. 41 performs arithmetic operation such as division to perform calculation for public key encryption. The arithmetic operation circuit 2053 may be integrated with a processing circuit 2052. The arrangement of a decryption circuit 2021 is the same as that of the encryption circuit 2012. The ID of the authentication token 2001 and a public key corresponding to the ID are registered in the storage circuit in the decryption circuit 2021 for each authentication token 2001. As the public key encryption algorithm, for example, the discrete logarithm scheme can be used.

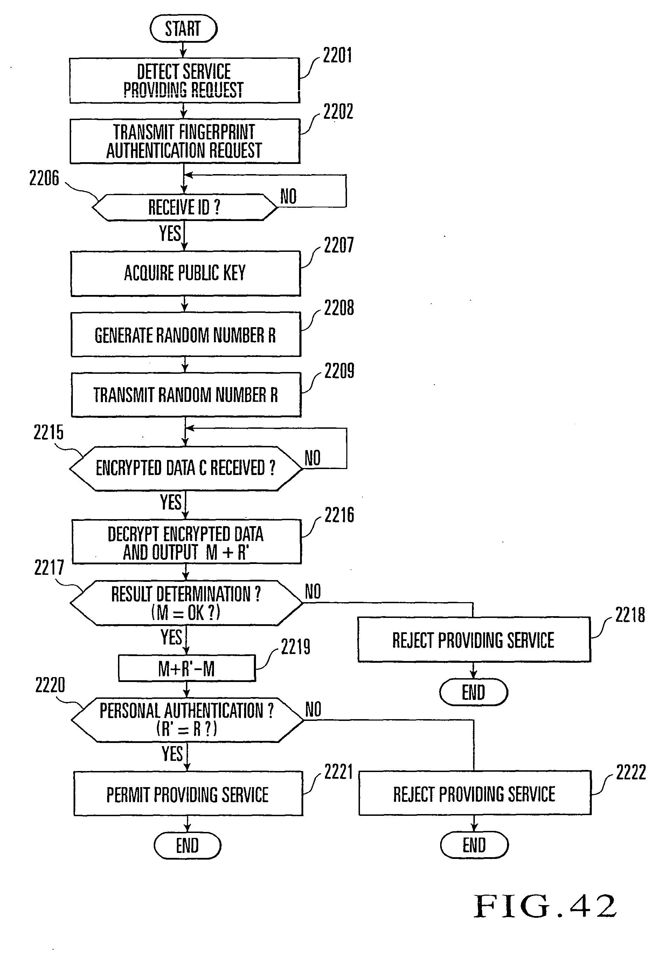

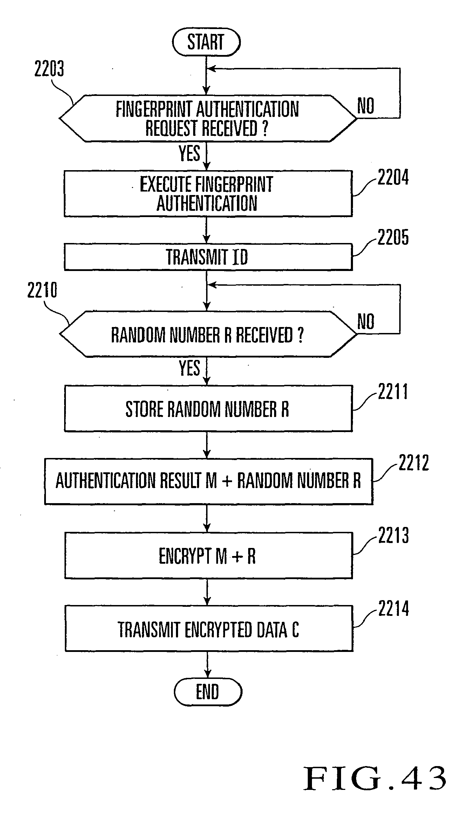

Operation of managing an access to a use device 2002 by the user authentication system of this embodiment will be described below with reference to Figs. 42 and 43. Fig. 42 shows the operation of the use device 2002. Fig. 43 shows the operation of the authentication token 2001. The 21st embodiment is different from the 20th embodiment in that the authentication token 2001 transmits the ID to the use device 2002, and a public key corresponding to the ID of the authentication token 2001 is stored in advance as an encryption key used by the use device 2002 for decryption.

First, a specific user who will use the use device 2002 requests the use device 2002 to provide a service. A detection circuit 2024 in the use device 2002 detects the service providing request from the user (step 2201 in Fig. 42) and requests, through a communication circuit 2025, the authentication token 2001 to perform user authentication (step 2202 in Fig. 42).

Upon receiving the user authentication request from the use device 2002 through a communication circuit 2013 (YES in step 2203 of Fig. 43), a biometrical information recognition circuit 2011 in the authentication token 2001 executes user authentication and outputs to the encryption circuit 2012 an authentication result M representing that the authentication is successful or fails (step 2204). The user authentication method at this time is the same as described in step 2106 of Fig. 39 of the 20th embodiment.

Subsequently, upon receiving the user authentication request, the storage circuit 2014 in the authentication token 2001 outputs the ID that is stored in advance and transmits the ID to the use device 2002 through the communication circuit 2013 (step 2205 in Fig. 43).

Upon receiving, through the communication circuit 2025, the ID transmitted from the authentication token 2001 (YES in step 2206), the decryption circuit 2021 in the use device 2002 searches the internal storage circuit on the basis of the received ID and acquires a public key corresponding to the ID from the storage circuit (step 2207 in Fig. 42).

After acquisition of the public key, a random number generation circuit 2022 generates a random number R having a predetermined number of digits and a value that changes every time (step 2208), and transmits the random number R to the authentication token 2001 through the communication circuit 2025 (step 2209).

Upon receiving the random number R transmitted from the use device 2002 through the communication circuit 2013 (YES in step 2210 of Fig. 43), the encryption circuit 2012 (temporary storage circuit 2050) in the authentication token 2001 stores the random number R (step 2211 in Fig. 43).

The processing circuit 2052 in the encryption circuit 2012 adds the authentication result M output from the biometrical information recognition circuit 2011 to the random number R output from the temporary storage circuit 2050 (step 2212), encrypts the data "M + R" obtained by adding the authentication result M to the random number R, using the private key stored in the storage circuit 2051 in advance to generate encrypted data C (step 2213), and transmits the encrypted data C to the use device 2002 through the communication circuit 2013 (step 2214).

Upon receiving the encrypted data C transmitted from the authentication token 2001 through the communication circuit 2025 (YES in step 2215 of Fig. 42), the decryption circuit 2021 in the use device 2002 decrypts the encrypted data C using the public key acquired in step 2207 (step 2216). A result determination circuit 2023 extracts the authentication result M from the data "M + R"' decrypted by the decryption circuit 2021 (step 2217), and when the authentication result M indicates that the authentication fails, rejects service providing to the specific user who has issued the service providing request (step 2218).

When the authentication result M contained in the decrypted data "M + R'" represents that the authentication is successful, the result determination circuit 2023 obtains a numerical value R' by removing the authentication result M from the data "M + R'" (step 2219) and compares the numerical value R' with the random number R generated by the random number generation circuit 2022 (step 2220). When the numeral value R' matches the random number R, the result determination circuit 2023 permits providing the service to the specific user who has issued the service providing request (step 2221). If the numerical value R' does not match the random number R, the result determination circuit 2023 rejects providing the service to the specific user (step 2222).

As described above, in the 21st embodiment, a private key is registered in the authentication token 2001 in advance, and a public key corresponding to the authentication token 2001 is published. In the authentication token 2001, data obtained by adding the authentication result M to the random number R received from the use device 2002 is encrypted using the private key and transmitted to the use device 2002. In the use device 2002, the received encrypted data is decrypted using the public key corresponding to the ID of the authentication token 2001 and permits providing the service to the user only when the authentication result M contained in the decrypted data represents that the authentication is successful, and the numerical value R' contained in the decrypted data matches the random number R generated in the use device 2002. In this embodiment, since the use device 2002 transmits a different random number every time, the encrypted data transmitted from the authentication token 2001 also has a different value every time.

Hence, even when a third party other than the authentic user could intercept the signal of encrypted data, the third party cannot act as the authentic user by using the signal. In addition, even when a third party other than the authentic user could intercept the random number output from the use device 2002, the signal of encrypted data cannot be forged because the encryption key that is held only by the authentic user is secret.

For the above reasons, a third party other than the authentic user can be prevented from acting as the authentic user, and any illicit use can be prevented.

In this embodiment, since only one private key need be registered in the authentication token 2001, the capacity of the storage circuit 2051 can be small, and the authentication token can easily cope with a plurality of unspecified use devices 2002. More specifically, in the 20th embodiment, the authentication token 2001 and use device 2002 use a single secret key. For this reason, when the authentication token 2001 is to execute user authentication for a plurality of use devices 2002, secret keys for the respective service providing apparatuses must be registered in the authentication token 2001. However, the authentication token 2001 of the 21st embodiment publishes the ID of its own and the public key. Since the authentication token can make the use device 2002 use the public key corresponding to the token, the authentication token need to store only one private key.

### 22nd Embodiment

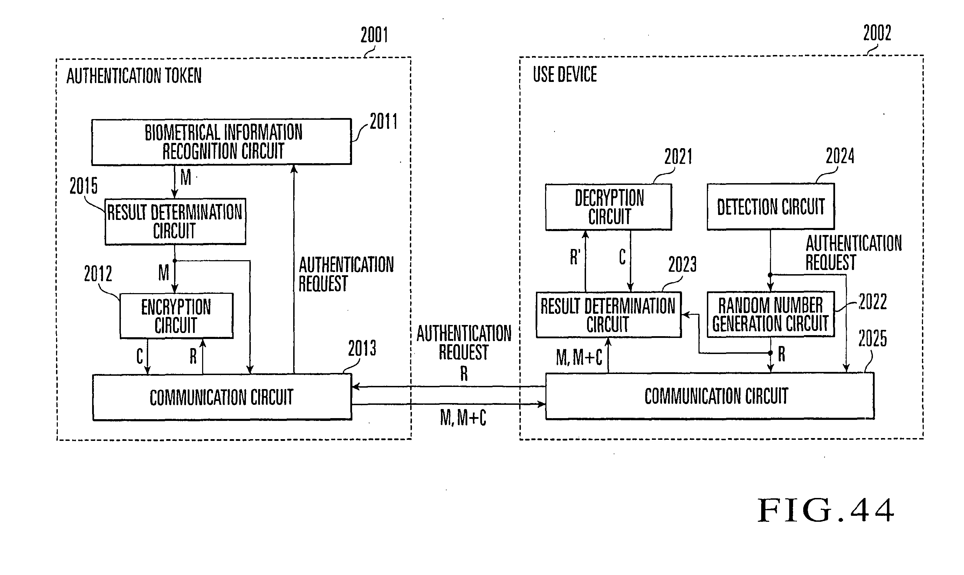

A 22nd embodiment of the present invention will be described next with reference to Fig. 44.

Fig. 44 shows the arrangement of an authentication system according to the 22nd embodiment of the present invention. The 22nd embodiment is different from the 20th embodiment in that an authentication token 2001 has a result determination circuit 2015. When the authentication is successful, the result determination circuit 2015 outputs the authentication result to an encryption circuit 2012 and prompts it to start encryption. When the authentication fails (NO), the authentication result is directly output to a communication circuit 2013. In this embodiment as well, the arrangement of the encryption circuit 2012 is the same as that of the 20th embodiment and therefore will be described using the same reference numerals as in Fig. 37.

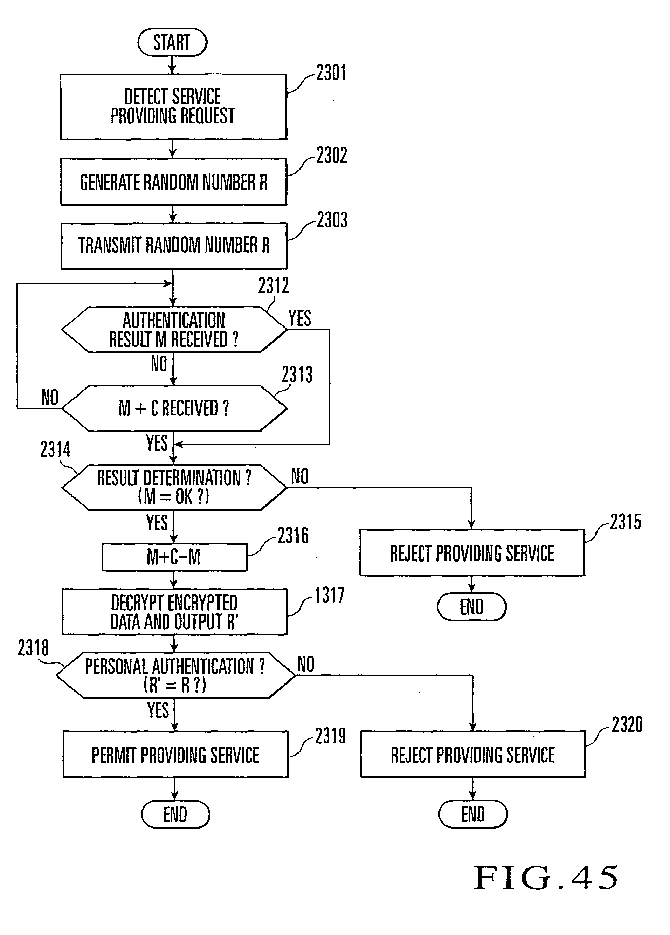

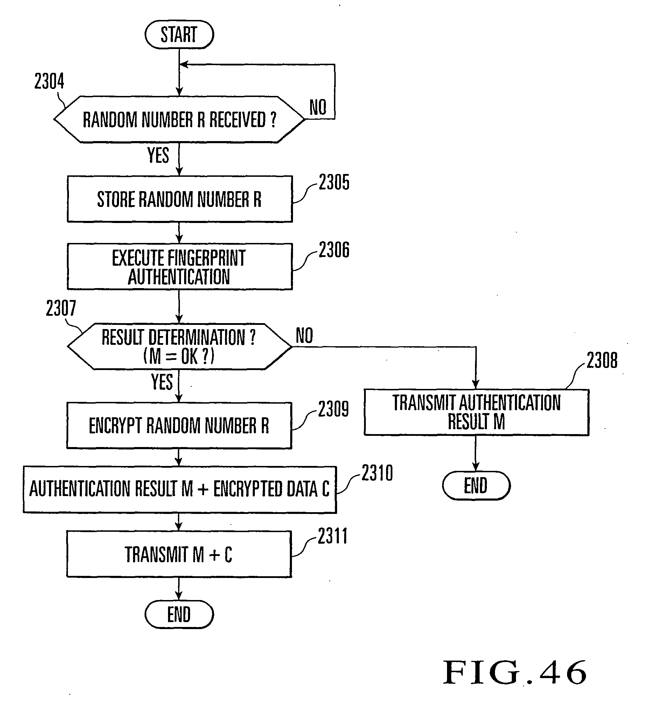

Operation of managing an access to a use device 2002 by the user authentication system of this embodiment will be described below with reference to Figs. 45 and 46. Fig. 45 shows the operation of the use device 2002. Fig. 46 shows the operation of the authentication token 2001. The 22nd embodiment is different from the 20th embodiment in that the authentication token 2001 does not encrypt data when the authentication fails, and the use device 2002 does not decrypt data, either, when the authentication fails.

First, a specific user who is to use the use device 2002 requests the use device 2002 to provide a service. A detection circuit 2024 in the use device 2002 detects the service providing request from the user (step 2301 in Fig. 45). When the detection circuit 2024 detects the service providing request from the user, a random number generation circuit 2022 generates a random number R having a predetermined number of digits and a value that changes every time (step 2302), and transmits the random number R to the authentication token 2001 through a communication circuit 2025 to request user authentication (step 2303).

Upon receiving the random number R transmitted from the use device 2002 through the communication circuit 2013 (YES in step 2304 of Fig. 46), the encryption circuit 2012 in the authentication token 2001 stores the random number R (step 2305). Upon receiving the random number R, the biometrical information recognition circuit 2011 executes user authentication and outputs an authentication result M indicating that the authentication is successful or fails to the result determination circuit 2015 (step 2306). The user authentication method at this time is the same as described in the 20th embodiment in step 2106 of Fig. 39.

The result determination circuit 2015 determines whether the authentication result M represents that the authentication is successful or fails (step 2307). If the result indicates that the authentication fails, the authentication result M is transmitted to the use device 2002 through the communication circuit 2013 (step 2308). When the authentication result M indicates that the authentication is successful, the result determination circuit 2015 outputs a signal for instructing encryption of the random number R to the encryption circuit 2012 and also outputs the authentication result M to the encryption circuit 2012.

In accordance with the instruction from the result determination circuit 2015, the encryption circuit 2012 encrypts the random number R stored in step 2305 using a secret key and set data stored in the internal storage circuit in advance to generate encrypted data C (step 2309). A processing circuit 2052 generates data M + C by adding the authentication result M to the encrypted data C (step 2310) and transmits the data M + C to the use device 2002 through the communication circuit 2013 (step 2311).

Upon receiving the authentication result M (YES in step 2312 of Fig. 45) or the data M + C obtained by adding the authentication result M to the encrypted data C (YES in step 2313), a result determination circuit 2023 in the use device 2002 determines whether the received authentication result M represents that the authentication is successful or fails (step 2314), and when authentication result M indicates that the authentication fails, rejects providing the service to the specific user who has issued the service providing request (step 2315).

When the received authentication result M indicates that the authentication is successful, the result determination circuit 2023 obtains the encrypted data C by removing the authentication result M from the received data M + C (step 2316) and transfers the encrypted data C to the decryption circuit 2021. The decryption circuit 2021 decrypts the encrypted data C received from the result determination circuit 2023 using a secret key stored in the internal storage circuit in advance (step 2317).

The result determination circuit 2023 compares a numerical value R' decrypted by the decryption circuit 2021 with the random number R generated by the random number generation circuit 2022 (step 2318). When the numerical value R' matches the random number R, the result determination circuit 2023 permits providing the service to the specific user who has issued the service providing request (step 2319). If the numerical value R' does not match the random number R, the result determination circuit 2023 rejects providing the service to the specific user (step 2320).

In the 22nd embodiment, when the result of user authentication by the authentication token 2001 indicates that the authentication fails (NO), neither encryption processing in the authentication token 2001 nor decryption processing in the use device 2002 are executed. For this reason, communication processing between the authentication token 2001 and the use device 2002 can be executed at a higher speed. The arrangement of this embodiment may be applied to the public key encryption scheme described in the 21st embodiment.

### 23rd Embodiment

A 23rd embodiment of the present invention will be described next.

When the user authentication result indicates that the authentication fails (NO), an authentication result M is transmitted from an authentication token 2001 to a use device 2002. When the user authentication result indicates that the authentication is successful, data "M + C" obtained by adding the authentication result M to encrypted data C is transmitted to the use device 2002, and the authentication result M is determined in the use device 2002. The authentication token 2001 need not always transmit the authentication result M, and the use device 2002 may perform determination on the basis of the number of characters of a text received from the authentication token 2001.

More specifically, when the authentication result M indicates that the authentication is successful in step 2307 of Fig. 46, a result determination circuit 2015 in the authentication token 2001 instructs an encryption circuit 2012 to encrypt a random number R. Upon receiving the instruction for encrypting the random number R from the result determination circuit 2015, the encryption circuit 2012 transmits only the encrypted data C obtained by encrypting the random number R to the use device 2002 (steps 2309 and 2311). If the authentication result M indicates that the authentication fails in step 2307, the result determination circuit 2015 transmits data whose number of digits is different from that of the encrypted data C to the use device 2002 (step 2308).

In determining whether the authentication result M indicates that the authentication is successful or fails in step 2314 of Fig. 45, the result determination circuit 2023 in the use device 2002 determines whether the authentication is successful or fails on the basis of the number of digits of the data received from the authentication token 2001. The remaining operations are the same as in the 22nd embodiment.

As described above, in the 23rd embodiment, the number of digits of the data representing that the authentication fails is set to be different from that of the encrypted data C. When the authentication is successful, only the encrypted data C need be transmitted, so the amount of data to be transmitted can be reduced. The arrangement of the 23rd embodiment may be applied to the public key encryption scheme described in the 21st embodiment.

An example of the use device 2002 described in the 20th to 23rd embodiments is a computer. The authentication token 2001 as an authentication device may be integrated with the use device 2002 or constructed as a separate device (e.g., terminal device held by the user). Data exchange between the authentication token 2001 and the use device 2002 is done by radio or wire communication.

In the 20th to 23rd embodiments, a fingerprint is used as biometrical information. Other types of biometrical information are, e.g., user's voiceprint, iris, handwriting, palm shape, finger length, and facial feature. When the palm shape or finger length of the user is used as biometrical information, the authentication token 2001 receives the image of the palm or finger of the user and collates the received image with the image of the palm or finger of the authentic user, which is registered in advance, thereby executing user authentication.

When the voiceprint, i.e., sound spectrogram of the user is used as biometrical information, the authentication token 2001 collects user's voice, extracts the voiceprint, and collates the extracted voiceprint data with the voiceprint data of the authentic user, which is registered in advance, thereby executing user authentication. When the handwriting of the user is used as biometrical information, the authentication token 2001 receives the pen trail of the user by a digitizer or the like or senses and receives a signature written on a paper sheet and collates the received handwriting image data with the handwriting image data of the authentic user, which is registered in advance, thereby executing user authentication.

When the iris of the user is used as biometrical information, the authentication token 2001 senses the iris of the user, collates the sensed iris image data with the iris image data of the authentic user, which is registered in advance, thereby executing user authentication. When the facial feature of the user is used as biometrical information, the authentication token 2001 senses the face of the user, extracts the feature of the face, and collates the extracted feature data with the feature data of the authentic user, which is registered in advance, thereby executing user authentication.

In the 20th and 21st embodiments shown in Figs. 36 to 43, data obtained by adding the authentication result M to the random number R is encrypted. This data may be generated from the exclusive OR of the random number R and authentication result M. That is, the encryption circuit 2012 encrypts data "MVR (V is the exclusive OR operator)" obtained by exclusively ORing the random number R and authentication result M, thereby generating the encrypted data C (steps 2107 and 2108 in Fig. 39). Similarly, the encryption circuit 2012 encrypts data "M∀R obtained by exclusively ORing the random number R and authentication result M, thereby generating the encrypted data C (steps 2212 and 2213 in Fig. 43).

As a characteristic feature of the exclusive OR, "A∀B∀A = B". With this characteristic feature, the encrypted data C is decrypted to extract the random number. To do this, in step 2115, the result determination circuit 2023 obtains the exclusive OR "R2 = M∀R'∀M'" of the data "MVR"' decrypted by the decryption circuit 2021 in step 2111 of Fig. 38 and the authentication result M' representing that the authentication is successful. When M = M', "R2 = R'". Additionally, when the encryption circuit 2012 correctly encrypts the random number R, "R2 = R".

Hence, when the numerical value R2 obtained in step 2115 matches the random number R generated by the random number generation circuit 2022, the result determination circuit 2023 of the 20th embodiment shown in Figs. 36 to 39 determines that the specific user who has issued the service providing request is the authentic user and permits providing the service to the specific user (step 2116). If the numerical value R2 does match the random number R, the result determination circuit 2023 rejects providing the service to the specific user (step 2117).

With the above determination processing, it can be checked at once that the authentication result M contained in the decrypted data "M∀R'" indicates the authentic user, and the random number R' contained in the decrypted data "M∀R'" matches the random number R generated by the random number generation circuit 2022. When the exclusive OR is used for data generation in step 2107, processing in steps 2112 to 2114 is not executed.

Similarly, in step 2220, the result determination circuit 2023 of the 21st embodiment shown in Figs. 40 to 43 obtains the exclusive OR "R2 = M∀R'VM'" of the data "M∀R'" decrypted by the decryption circuit 2021 in step 2216 of Fig. 42 and the authentication result M' representing that the authentication is successful. When the obtained numerical value R2 matches the random number R generated by the random number generation circuit 2022, the result determination circuit 2023 permits providing the service to the specific user (step 2221). If the numerical value R2 does match the random number R, the result determination circuit 2023 rejects providing the service to the specific user (step 2222 in Fig. 42). When the exclusive OR is used for data generation in step 2212 in Fig. 43, processing in steps 2217 to 2219 is not executed.

In the above-described 20th to 23rd embodiments shown in Figs. 36 to 46, a random number is used for encryption. However, the random number need not always be used.

For example, the random number generation circuit 2022 can be regarded as a kind of dynamic information generation circuit for generating dynamic information. Dynamic information here means information whose contents sequentially change every time information generation processing is executed. Specific examples of this information are a random number, date/time information, and counter.

### Examples

1. An authentication token which is normally held by a user and, when the user is to use a use device for executing predetermined processing in accordance with authentication data of the user, connected to the use device to perform user authentication on the basis of biometrical information of the user, characterized by comprising:
   a personal collation unit (15, 111) including a sensor (11) for detecting the biometrical information of the user and outputting a detection result as sensing data, a storage unit (12) which stores in advance registered data to be collated with the biometrical information of the user, and a collation unit (13) for collating the registered data stored in said storage unit (12) with the sensing data from said sensor (11) and outputting a collation result as authentication data representing a user authentication result; and
   a communication unit (14, 113) for transmitting the authentication data from said personal collation unit (15, 111) to the use device as communication data,
   wherein said personal collation unit and communication unit are integrated.
2. A token according to example 1, wherein
   said storage unit (12) further stores in advance user information unique to the user, which is to be used for processing in the use device, and
   said collation unit (13) outputs the authentication data containing the user information read out from said storage unit (12).
3. A token according to example 1, further comprising a protocol conversion unit (31, 41) for converting the communication data from said communication unit (14, 113) into a predetermined data format and transmitting the communication data to the use device.
4. A token according to example 1, further comprising a radio unit (42) for transmitting the communication data from said communication unit (14, 113) to the use device through a radio section.
5. A token according to example 3, further comprising a radio unit (42) for transmitting the communication data from said protocol conversion unit (41) to the use device through a radio section.
6. A token according to example 1, further comprising a battery (BAT1 - BAT3) for supplying power.
7. A token according to example 6, wherein said battery comprises a secondary battery charged by power supply from the use device when said authentication token is connected to the use device.
8. A token according to example 1, wherein said storage unit has, in addition to a storage area for storing the registered data, at least one storage area for storing another information.
9. A token according to example 7, wherein said at least one storage area for storing another information includes a storage area for storing personal information of the user and a storage area for storing service information.
10. An authentication system for executing user authentication, which is necessary for use of a use device (2, 102) for executing predetermined processing, by using biometrical information of a user, characterized by comprising:
   an authentication token (1, 101) which is normally held by the user and, when the user is to use said use device, connected to said use device to perform user authentication on the basis of the biometrical information of the user,
   said authentication token (1, 101) comprising a personal collation unit (15) including a sensor (11) for detecting the biometrical information of the user and outputting a detection result as sensing data, a storage unit (12) which stores in advance registered data to be collated with the biometrical information of the user, and a collation unit (13) for collating the registered data stored in said storage unit (12) with the sensing data from said sensor (11) and outputting a collation result representing a user authentication result as authentication data, and
   a first communication unit (14) for transmitting the authentication data from said personal collation unit (15) to said use device as communication data,
   said personal collation unit and communication unit being integrated, and
   said use device (2, 102) comprising
   a second communication unit (21) for receiving the communication data transmitted from said authentication token (1, 101) and outputting the data as the authentication data, and
   a processing unit (22) for executing the predetermined processing on the basis of the collation result contained in the authentication data from said second communication unit (21).
11. A system according to example 10, wherein said storage unit has a plurality of storage areas for storing not only the registered information of the user but also another information.
12. A system according to example 10, wherein
   said storage unit (12) of said authentication token (1, 101) stores in advance user information unique to the user, which is to be used for processing in said use device (2),
   said collation unit (13) of said authentication token (1, 101) outputs the authentication data containing the user information read out from said storage unit (12), and
   said processing unit (22) of said use device (2, 102) executes processing using the user information contained in the authentication data from said second communication unit (21).
13. A system according to example 10, further comprising a data conversion module (3, 41) connected to said authentication token (1, 101) to convert the communication data from said first communication unit (14) of said authentication token into a predetermined data format and transmit the communication data to said use device (2, 102).
14. A system according to example 10, wherein
   said system further comprises a radio module (4) connected to said authentication token (1, 101) to transmit the communication data from said first communication unit (14) of said authentication token (1) to said use device (2) through a radio section, and
   said use device (2, 102) comprises a radio unit (23) for receiving the communication data transmitted from said radio module (4) through the radio section and outputting the communication data to said second communication unit (21).
15. A system according to example 13, wherein
   said system further comprises a radio module (4) connected to said authentication token (1, 101) to transmit the communication data from said data conversion module (41) to said use device through a radio section, and
   said use device (2, 102) comprises a radio unit (23) for receiving the communication data transmitted from said radio module (4) through the radio section and outputting the communication data to said second communication unit (21).
16. A system according to example 10, wherein said authentication token (1, 101) further comprises a battery for supplying power into said authentication token.
17. A system according to example 13, wherein said data conversion module (3) further comprises a battery for supplying power into said data conversion module and authentication token.
18. A system according to example 14, wherein said radio module (4) further comprises a battery for supplying power into said radio module (4) and authentication token (1, 101).
19. A system according to example 16, wherein said battery comprises a secondary battery charged by power supply from said use device when said authentication token is connected to said use device.
20. A token according to example 1, wherein
   said authentication token further comprises another storage circuit (112) for storing a password of said authentication token (101) and token identification information for identifying said authentication token, and
   when the personal collation result indicates that the collation is successful, said communication unit (113) transmits the password and token identification information in said another storage circuit (112) to said service providing apparatus as the -communication data.
21. An authentication system for executing user authentication, which is necessary when a user is to use a service providing apparatus for providing a predetermined service, by using biometrical information of the user, characterized by comprising:
   an authentication token (101) which is normally held by the user and, when the user is to use said service providing apparatus, connected to said service providing apparatus (102) to perform user authentication on the basis of the biometrical information of the user,
   said authentication token (101) comprising a personal collation unit (111) for performing collation on the basis of the biometrical information detected from the user to check whether the user is an authentic user, a storage circuit (112) for storing a password of said authentication token and token identification information for identifying said authentication token, and a first communication unit (113) for, when a collation result by said personal collation unit indicates that collation is successful, transmitting the password and token identification information in said storage circuit to said service providing apparatus (102) as communication data, and
   said service providing apparatus (102) comprising a second communication unit (121) for receiving the communication data from said authentication token, a first database (122) for storing the token identification information and password of said authentication token in advance in association with each other, a collation circuit (123) for collating the password contained in the communication data with a password obtained from said first database using the token identification information as a key, and a processing unit (124) for providing the service to the user on the basis of a collation result by said collation circuit.
22. A system according to example 21, further comprising a registration apparatus (103) connected to said service providing apparatus (102) through a communication network (104) to register the token identification information and password in said database (122) in association with each other.
23. A system according to example 21, wherein
   said service providing apparatus (102) has a password generation circuit (125) for generating a new password and transmitting the new password to said authentication token through said second communication unit and updating the password stored in said first database (122), and
   said first communication unit (113) of said authentication token updates the password stored in said storage circuit (112) by the new password received from said service providing apparatus.
24. A system according to example 21, wherein
   said service providing apparatus (102) has a storage circuit (126) for storing device identification information for identifying said service providing apparatus, and said second communication unit (121) reads out the device identification information from said storage circuit (126) and transmits the identification information to said authentication token when said authentication token is connected, and
   said authentication token (101) has a second database (114) for storing the password and the device identification information for identifying the service providing apparatus (102) in association with each other, and said first communication unit (113) uses, as the password to be transmitted to said service providing apparatus, a password obtained from said second database (114) using the device identification information received from said service providing apparatus as a key.
25. An authentication method of executing user authentication, which is necessary when a user is to use a service providing apparatus for providing a predetermined service, between the service providing apparatus and an authentication token for executing the user authentication using biometrical information of the user, **characterized in that**
   the authentication token (101) stores in advance a password of the authentication token and token identification information for identifying the authentication token, performs collation on the basis of the biometrical information detected from the user to check whether the user is an authentic user, and when a collation result indicates that collation is successful, transmits the password and token identification information to the service providing apparatus (102) as communication data, and
   the service providing apparatus (102) stores the token identification information and password of the authentication token in advance in a first database (122) in association with each other, collates the password contained in the communication data received from the authentication token with a password obtained from the first database (122) using the token identification information as a key, and provides the service to the user on the basis of a collation result.
26. A method according to example 25, wherein the token identification information and password are registered in the first database (122) in association with each other from a registration apparatus (103) connected to the service providing apparatus through a communication network (104).
27. A method according to example 25, wherein
   the service providing apparatus (102) causes a password generation circuit to generate a new password, transmits the new password to the authentication token (101) through the second communication unit (121), and updates the password stored in the first database (122), and
   the authentication token (101) updates the password stored in advance by the new password received from the service providing apparatus.
28. A method according to example 25, wherein
   the service providing apparatus (102) stores device identification information for identifying the service providing apparatus in advance, and transmits the device identification information to the authentication token when the authentication token (101) is connected, and
   the authentication token (101) stores in advance the password and the device identification information for identifying the service providing apparatus (102) in a second database (114) in association with each other, and uses, as the password to be transmitted to the service providing apparatus (102), a password obtained from the second database (114) using the device identification information received from the service providing apparatus as a key.
29. A recording medium which stores a program for causing a computer to execute an authentication procedure of executing user authentication, which is necessary when a user is to use a service providing apparatus (102) for providing a predetermined service, between the service providing apparatus (102) and an authentication token for executing the user authentication using biometrical information of the user,
   said program comprising the steps of:
   in the service providing apparatus (102), storing token identification information and a password of the authentication token in a first database (122) in advance in association with each other;
   in the authentication token (101), after collation of the user based on the biometrical information detected from the user, and when a collation result indicates that collation is successful, receiving communication data containing the password of the authentication token (101) and the token identification information for identifying the authentication token, which is transmitted for the authentication token;
   collating the password contained in the communication data with a password obtained from the first database (122) using the token identification information as a key; and
   providing the service to the user on the basis of a collation result.
30. A medium according to example 29, wherein said program further comprises the step of, in the service providing apparatus (102), registering the token identification information and password in the first database (122) in association with each other from a registration apparatus (103) connected to the service providing apparatus through a communication network.
31. A medium according to example 29, wherein said program further comprises the steps of:
   in the service providing apparatus (102), causing a password generation circuit (125) to generate a new password;
   transmitting the new password to the authentication token (101) through the second communication unit so as to update the password stored in the authentication token in advance; and
   updating the password stored in the first database (122) by the new password.
32. A medium according to example 29, wherein said program further comprises the steps of:
   in the service providing apparatus (102), storing device identification information for identifying the service providing apparatus in advance; and
   transmitting the device identification information to the authentication token when the authentication token (101) is connected so as to store the password and the device identification information used to identify the service providing apparatus (102) in the authentication token in a second database (114) in association with each other, and searching the second database (114) for a password using the device identification information received from the service providing apparatus as a key as the password to be transmitted to the service providing apparatus.
33. A program for causing a computer to execute an authentication procedure of executing user authentication, which is necessary when a user is to use a service providing apparatus (102) for providing a predetermined service, between the service providing apparatus (102) and an authentication token (101) for executing the user authentication using biometrical information of the user,
   said program causing the computer to execute the steps of:
   in the service providing apparatus (102), storing token identification information and a password of the authentication token in a first database (122) in advance in association with each other;
   in the authentication token (101), after collation of the user based on the biometrical information detected from the user, and when a collation result indicates that collation is successful, receiving communication data containing the password of the authentication token and the token identification information for identifying the authentication token, which is transmitted for the authentication token;
   collating the password contained in the communication data with a password obtained from the first database using the token identification information as a key; and
   providing the service to the user on the basis of a collation result.
34. A program according to example 33, further comprising the step of, in the service providing apparatus, registering the token identification information and password in the first database in association with each other from a registration apparatus connected to the service providing apparatus through a communication network.
35. A program according to example 33, further comprising the steps of:
   in the service providing apparatus, causing a password generation circuit to generate a new password;
   transmitting the new password to the authentication token through the second communication unit so as to update the password stored in the authentication token in advance; and
   updating the password stored in the first database by the new password.
36. A program according to example 33, further comprising the steps of:
   in the service providing apparatus, storing device identification information for identifying the service providing apparatus in advance; and
   transmitting the device identification information to the authentication token when the authentication token is connected so as to store the password and the device identification information used to identify the service providing apparatus in the authentication token in a second database in association with each other, and searching the second database for a password using the device identification information received from the service providing apparatus as a key as the password to be transmitted to the service providing apparatus.
37. A biometrical information authentication storage which locks or unlocks a door of a main body in storing an article in the main body or taking out the article stored in the main body, and also unlocks the door on the basis of authentication of biometrical information of a user, characterized by comprising:
   drive means (213) for locking/unlocking the door;
   storage means (212) for storing the biometrical information of the user; and
   processing means (211) for controlling said drive means to unlock the door on the basis of matching between stored information in said storage means and detected information from a sensor for detecting the biometrical information of the user.
38. A storage according to example 37, wherein
   said storage means stores a fingerprint image of the user as the biometrical information, and
   said processing means controls said drive means to unlock the door on the basis of matching between the stored information in said storage means and the fingerprint image from a fingerprint authentication token having the sensor for detecting the fingerprint image of the user as the biometrical information.
39. A storage according to example 38, wherein
   said processing means comprises
   lock means for, when the fingerprint image of the user, which is transmitted from the fingerprint authentication token, is received in storing the article in the main body, controlling said drive means to lock the door and storing the received fingerprint image in said storage means, and
   unlock means for controlling said drive means to unlock the door when the fingerprint image of the user, which is transmitted from the fingerprint authentication token, is received in taking out the article stored in the main body, and the received fingerprint image matches the stored information in said storage means.
40. A storage according to example 38, wherein
   said processing means comprises
   lock means for, when the fingerprint authentication token is inserted into the main body in storing the article in the main body, controlling said drive means to lock the door, generating a password, storing the password in said storage means, transmitting the password to the fingerprint authentication token, and causing the fingerprint authentication token to store the password, and
   unlock means for controlling said drive means to unlock the door when a password based on matching between a registered fingerprint image and the fingerprint image detected by the sensor and output from the fingerprint authentication token is received in taking out the article stored in the main body, and the received password matches the password in said storage means.
41. A storage according to example 38, wherein
   said processing means comprises
   lock means for, when a password based on matching between a registered fingerprint image and the fingerprint image detected by the sensor and output from the fingerprint authentication token is received in storing the article in the main body, controlling said drive means to lock the door, and storing the received password in said storage means, and
   unlock means for controlling said drive means to unlock the door when the password based on matching between the registered fingerprint image and the fingerprint image detected by the sensor and output from the fingerprint authentication token is received in taking out the article stored in the main body, and the received password matches the password in said storage means.
42. A storage according to example 38, wherein
   said storage further comprises
   a plurality of storage sections capable of independently storing articles and having corresponding doors,
   designation means for designating one of the plurality of doors, and
   display means for displaying a number of the door, and
   said processing means comprises
   first display control means for, when a corresponding door is closed in storing an article in a storage section, displaying the number of the door on said display means,
   lock means for, when the door number displayed on said display means is designated by said designation means, and the fingerprint authentication token is inserted into the main body, controlling said drive means to lock the door, generating a password, storing the password and the door number in said storage means, transmitting the password and the door number to the fingerprint authentication token, and causing the fingerprint authentication token to store the password and the door number,
   second display control means for, when the fingerprint authentication token is inserted into the main body in taking out the article stored in said storage section, displaying the door number stored in the fingerprint authentication token on said display means, and
   unlock means for controlling said drive means to unlock the door when the door number displayed on said display means is designated by said designation means, and a password based on matching between a registered fingerprint image and the fingerprint image detected by the sensor and output from the fingerprint authentication token is received, and the received password matches the password in said storage means.
43. A storage according to example 37, wherein
   said storage further comprises check means for checking coins of a predetermined amount, which are put in by the user in storing the article, and
   when said check means checks that the coins of the predetermined amount are put in, said processing means controls said drive means to lock the door.
44. A lock/unlock method for a biometrical information authentication storage which locks or unlocks a door of a main body in storing an article in the main body or taking out the article stored in the main body, and also unlocks the door on the basis of authentication of biometrical information of a user, characterized by comprising:
   the first step of unlocking the door on the basis of matching between stored information stored in storage means in advance and detected information from a sensor for detecting the biometrical information of the user.
45. A method according to example 44, wherein
   the storage means stores a fingerprint image of the user as the biometrical information, and
   processing in the first step comprises the second step of unlocking the door on the basis of matching between the stored information in the storage means and the fingerprint image from a fingerprint authentication token having the sensor for detecting the fingerprint image of the user as the biometrical information.
46. A method according to example 45, wherein
   processing in the second step comprises
   the third step of, when the fingerprint image of the user, which is transmitted from the fingerprint authentication token, is received in storing the article in the main body, locking the door and storing the received fingerprint image in the storage means, and
   the fourth step of unlocking the door when the fingerprint image of the user, which is transmitted from the fingerprint authentication token, is received in taking out the article stored in the main body, and the received fingerprint image matches the stored information in the storage means.
47. A method according to example 45, wherein
   processing in the second step comprises
   the fifth step of, when the fingerprint authentication token is inserted into the main body in storing the article in the main body, locking the door, generating a password, storing the password in the storage means, transmitting the password to the fingerprint authentication token, and causing the fingerprint authentication token to store the password, and
   the sixth step of unlocking the door when a password based on matching between a registered fingerprint image and the fingerprint image detected by the sensor and output from the fingerprint authentication token is received in taking out the article stored in the main body, and the received password matches the password in the storage means.
48. A method according to example 45, wherein
   processing in the second step comprises
   the seventh step of, when a password based on matching between a registered fingerprint image and the fingerprint image detected by the sensor and output from the fingerprint authentication token is received in storing the article in the main body, locking the door, and storing the received password in the storage means, and
   the eighth step of unlocking the door when the password based on matching between the registered fingerprint image and the fingerprint image detected by the sensor and output from the fingerprint authentication token is received in taking out the article stored in the main body, and the received password matches the password in the storage means.
49. A method according to example 45, wherein
   the storage further comprises a plurality of storage sections capable of independently storing articles and having corresponding doors, and
   processing in the second step comprises
   the ninth step of, when a corresponding door is closed in storing an article in a storage section, displaying a number of the door,
   the 10th step of, when the door number displayed on the basis of processing in the ninth step is designated, and the fingerprint authentication token is inserted into the main body, locking the door, generating a password, storing the password and the door number in the storage means, transmitting the password and the door number to the fingerprint authentication token, and causing the fingerprint authentication token to store the password and the door number,
   the 11th step of, when the fingerprint authentication token is inserted into the main body in taking out the article stored in the storage section, displaying the door number stored in the fingerprint authentication token, and
   the 12th step of unlocking the door when the door number displayed on the basis of processing in the 11th step is designated, and a password based on matching between a registered fingerprint image and the fingerprint image detected by the sensor and output from the fingerprint authentication token is received, and the received password matches the password in the storage means.
50. A method according to example 45, wherein
   the method further comprises the 13th step of checking coins of a predetermined amount, which are put in by the user in storing the article, and
   processing in the first step comprises the 14th step of locking the door when that the coins of the predetermined amount are put in is checked on the basis of processing in the 13th step.
51. A gate opening/closing system for opening/closing an entrance gate for a site, characterized by comprising:
   an authentication token (306) for authenticating a user on the basis of biometrical information of the user;
   a database (302) for storing identification information of the user when the user prepays an admission to the site; and
   control means (303) for, when said authentication token authenticates that the user is an authentic user, and the identification information of the user, which is stored in said authentication token in advance, is output from said authentication token at the time of entrance of the user to the site, receiving the identification information, and when the received identification information has been stored in said database, opening the entrance gate.
52. A gate opening/closing system for opening/closing an entrance gate for a site, characterized by comprising:
   information transmission/reception means for transmitting/receiving information to/from an authentication token which stores identification information of a user;
   a database for storing the identification information of the user when the user prepays an admission to the site; and
   control means for opening the entrance gate when said authentication token authenticates that the user is an authentic user on the basis of biometrical information of the user, the identification information of the user, which is output from said authentication token, is received by said information transmission/reception means at the time of entrance of the user to the site, and the received identification information has been stored in said database.
53. A system according to example 51, wherein
   said authentication token is a fingerprint authentication token for authenticating the user on then basis of fingerprint information of the user, and comprises
   storage means for storing the fingerprint information of the user,
   a fingerprint sensor for detecting a fingerprint of the user, and
   processing means for authenticating the user as the authentic user on the basis of matching between detected information from said fingerprint sensor and stored information in said storage means.
54. A system according to example 52, wherein
   said authentication token is a fingerprint authentication token for authenticating the user on the basis of fingerprint information of the user, and comprises
   storage means for storing the fingerprint information of the user,
   a fingerprint sensor for detecting a fingerprint of the user, and
   processing means for authenticating the user as the authentic user on the basis of matching between detected information from said fingerprint sensor and stored information in said storage means.
55. A system according to example 51, further comprising identification information assignment means for, when said fingerprint authentication token is inserted, and the user prepays the admission to the site, generating a password and causing said fingerprint authentication token to store the password as the identification information, and transmitting the password to said database and causing said database to store the password as the identification information of the user.
56. A system according to example 52, further comprising identification information assignment means for, when said fingerprint authentication token is inserted, and the user prepays the admission to the site, generating a password and causing said fingerprint authentication token to store the password as the identification information, and transmitting the password to said database and causing said database to store the password as the identification information of the user.
57. A system according to example 51, wherein
   said fingerprint authentication token stores an identification number of the user as the identification information in advance, and
   said system further comprises identification information assignment means for, when said fingerprint authentication token is inserted, and the user prepays the admission to the site, reading the identification information from the fingerprint authentication token, transmitting the identification information to said database, and causing said database to store the identification information as the identification information of the user.
58. A system according to example 52, wherein
   said fingerprint authentication token stores an identification number of the user as the identification information in advance, and
   said system further comprises identification information assignment means for, when said fingerprint authentication token is inserted, and the user prepays the admission to the site, reading the identification information from the fingerprint authentication token, transmitting the identification information to said database, and causing said database to store the identification information as the identification information of the user.
59. A system according to example 51, further comprising
   transmission means for converting identification information added to said authentication token and output from said authentication token into a radio signal or infrared signal and transmitting the signal, and
   reception means, arranged near the entrance gate, for, upon receiving the radio signal or infrared signal transmitted by said transmission means, sending the identification information contained in the received radio signal or infrared signal to said control means.
60. A system according to example 52, further comprising
   transmission means for converting identification information added to said authentication token and output from said authentication token into a radio signal or infrared signal and transmitting the signal, and
   reception means, arranged near the entrance gate, for, upon receiving the radio signal or infrared signal transmitted by said transmission means, sending the identification information contained in the received radio signal or infrared signal to said control means.
61. A biometrical information authentication automatic teller machine for providing, to a user, a service including deposit/withdrawal of cash for the user on the basis of authentication of biometrical information of the user, characterized by comprising:
   a biometrical information authentication token for authenticating the user on the basis of the biometrical information of the user,
   said biometrical information authentication token (1) comprising
   storage means (12) for storing the biometrical information of the user,
   a sensor (11) for detecting the biometrical information of the user, and
   processing means (13) for outputting control information on the basis of matching between detected information from said sensor and stored information in said storage means, and
   said biometrical information authentication automatic teller machine (401) comprising service providing means for providing the service to the user on the basis of the control information from said processing means.
62. A machine according to example 61, wherein
   said machine further comprises a database (410) which stores an outstanding balance corresponding to an account number of the user in advance,
   said storage means of said biometrical information authentication token stores the account number of the user,
   said processing means outputs the account number in said storage means as the control information on the basis of matching between the detected information from said sensor and the stored information in said storage means, and
   said service providing means comprises
   acquisition means for, upon receiving the account number from said processing means, acquiring the outstanding balance corresponding to the received account number from said database,
   withdrawal means for withdrawing cash corresponding to predetermined operation by the user from the outstanding balance acquired by said acquisition means, and
   outstanding balance recording means for subtracting an amount withdrawn by said withdrawal means from the outstanding balance acquired by said acquisition means and storing a new outstanding balance in said database.
63. A machine according to example 61, wherein
   said machine further comprises a database which stores an outstanding balance corresponding to an account number of the user in advance,
   said storage means of said biometrical information authentication token stores the account number of the user,
   said processing means outputs the account number in said storage means as the control information on the basis of matching between the detected information from said sensor and the stored information in said storage means, and
   said service providing means comprises
   acquisition means for, upon receiving the account number from said processing means, acquiring the outstanding balance corresponding to the received account number from said database, and
   outstanding balance recording means for adding an amount deposited by the user to the outstanding balance acquired by said acquisition means and storing a new outstanding balance in said database.
64. A biometrical information authentication automatic teller machine for providing, to a user, a service including deposit/withdrawal of cash for the user on the basis of authentication of biometrical information of the user, characterized by comprising:
   information transmission/reception means for transmitting/receiving information to/from a biometrical information authentication token for authenticating the user on the basis of comparison/collation between biometrical information stored in storage means and the biometrical information of the user, which is detected by a sensor; and
   service providing means for, when said information transmission/reception means receives control information output from the biometrical information authentication token on the basis of matching between detected information from the sensor and the biometrical information in the storage means, providing the service to the user on the basis of the received control information.
65. A machine according to example 64, wherein
   said machine further comprises a database which stores an outstanding balance corresponding to an account number of the user in advance,
   the storage means of the biometrical information authentication token stores the account number of the user, and
   said service providing means comprises acquisition means for, when said information transmission/reception means receives the account number output from the biometrical information authentication token as the control information on the basis of matching between the detected information from the sensor and the biometrical information in the storage means, acquiring the outstanding balance corresponding to the received account number from said database,
   withdrawal means for withdrawing cash corresponding to predetermined operation by the user from the outstanding balance acquired by said acquisition means, and
   outstanding balance recording means for subtracting an amount withdrawn by said withdrawal means from the outstanding balance acquired by said acquisition means and storing a new outstanding balance in said database.
66. A machine according to example 4, wherein
   said machine further comprises a database which stores an outstanding balance corresponding to an account number of the user in advance,
   the storage means of the biometrical information authentication token stores the account number of the user, and
   said service providing means comprises
   acquisition means for, when said information transmission/reception means receives the account number output from the biometrical information authentication token as the control information on the basis of matching between the detected information from the sensor and the biometrical information in the storage means, acquiring the outstanding balance corresponding to the received account number from said database, and
   outstanding balance recording means for adding an amount deposited by the user to the outstanding balance acquired by said acquisition means and storing a new outstanding balance in said database.
67. A machine according to example 61, wherein
   when a passbook of the user is inserted, said outstanding balance recording means records information including the outstanding balance on the passbook.
68. A machine according to example 64, wherein
   when a passbook of the user is inserted, said outstanding balance recording means records information including the outstanding balance on the passbook.
69. A machine according to example 61, wherein
   said storage means stores a fingerprint image of the user as the biometrical information,
   said sensor detects the fingerprint image of the user as the biometrical information, and
   said processing means or biometrical information authentication token outputs the control information on the basis of matching between the fingerprint image detected by said sensor and the fingerprint image in said storage means.
70. A machine according to example 69, wherein
   the storage means stores a fingerprint image of the user as the biometrical information,
   the sensor detects the fingerprint image of the user as the biometrical information, and
   said processing means or biometrical information authentication token outputs the control information on the basis of matching between the fingerprint image detected by the sensor and the fingerprint image in the storage means.
71. A portable terminal system comprising a portable terminal device (501) and a biometrical authentication device (502), **characterized in that**
   said biometrical authentication device (502) comprises
   biometrical information read means (11) for reading biometrical information of a user who holds said biometrical authentication device,
   first storage means (12) for storing biometrical information of an authentic user registered in advance and personal information of the authentic user, and
   a first processing unit (13, 14) for performing personal authentication by collating the biometrical information read by said biometrical information read means (11) with the biometrical information of the authentic user stored in said first storage means (12), and only when an authentication result represents that collation is successful, transmitting the personal information stored in said first storage means to said portable terminal device, and
   said portable terminal device (501) comprises
   second storage means (515) for storing the personal information transmitted from said biometrical authentication device (502), and
   second processing means (514) for executing communication processing or data processing using the personal information stored in said second storage means.
72. A portable terminal system comprising a portable terminal device (501) and a biometrical authentication device (502), **characterized in that**
   said biometrical authentication device (502) comprises
   biometrical information read means (11) for reading biometrical information of a user who holds said biometrical authentication device,
   first storage means (12) for storing biometrical information of an authentic user registered in advance and service information necessary for the authentic user to receive a service, and
   a first processing unit (13, 14) for performing personal authentication by collating the biometrical information read by said biometrical information read means with the biometrical information of the authentic user stored in said first storage means, and only when an authentication result represents that collation is successful, transmitting the service information stored in said first storage means to said portable terminal device, and
   said portable terminal device (501) comprises
   second storage means (515) for storing the service information transmitted from said biometrical authentication device (502), and
   second processing means (514) for executing communication processing or data processing using the service information stored in said second storage means.
73. A system according to example 71, wherein
   the personal information contains a personal identification number of the authentic user, and
   after the personal information is stored in said second storage means, said second processing means of said portable terminal device is connected to a network using the personal identification number contained in the personal information.
74. A system according to example 72, wherein
   the service information contains a password used to log in to a web site, and
   after the service information is stored in said second storage means, said second processing means of said portable terminal device acquires, from the service information, a password corresponding to a web site accessed through a network and transmits the acquired password to the accessed web site.
75. A biometrical authentication device characterized by comprising:
   biometrical information read means for reading biometrical information of a user who holds said device;
   storage means for storing biometrical information of an authentic user registered in advance and personal information of the authentic user; and
   a processing unit for performing personal authentication by collating the biometrical information read by said biometrical information read means with the biometrical information of the authentic user stored in said storage means, and only when an authentication result represents that collation is successful, transmitting the personal information stored in said storage means to a portable terminal device,
   wherein only when the authentication result represents that the collation is successful, the personal information is transmitted to the portable terminal device which does not hold the personal information, thereby allowing communication processing or data processing using the personal information.
76. A biometrical authentication device characterized by comprising:
   biometrical information read means for reading biometrical information of a user who holds said device;
   storage means for storing biometrical information of an authentic user registered in advance and service information necessary for the authentic user to receive a service; and
   a processing unit for performing personal authentication by collating the biometrical information read by said biometrical information read means with the biometrical information of the authentic user stored in said storage means, and only when an authentication result represents that collation is successful, transmitting the service information stored in said storage means to a portable terminal device,
   wherein only when the authentication result represents that the collation is successful, the service information is transmitted to the portable terminal device which does not hold the service information, thereby allowing communication processing or data processing using the service information.
77. A device according to example 75, wherein the personal information contains a personal identification number of the authentic user, which is necessary to connect the portable terminal device to a network.
78. A device according to example 76, wherein the service information contains a password used to log in to a web site from the portable terminal device through a network.
79. A portable terminal device characterized by comprising:
   storage means for receiving personal information of an authentic user from a biometrical authentication device and storing the personal information, the biometrical authentication device executing personal authentication using biometrical information of a user, and transmitting the personal information of the authentic user only when an authentication result indicates that collation is successful; and
   processing means for executing communication processing or data processing using the personal information stored in said storage means,
   wherein the communication processing or data processing using the personal information is executed only when the personal information stored in the biometrical authentication device is received.
80. A portable terminal device characterized by comprising:
   storage means for receiving service information necessary for an authentic user to receive a service from a biometrical authentication device and storing the service information, the biometrical authentication device executing personal authentication using biometrical information of a user, and transmitting the service information only when an authentication result indicates that collation is successful; and
   processing means for executing communication processing or data processing using the service information stored in said storage means,
   wherein the communication processing or data processing using the service information is executed only when the service information stored in the biometrical authentication device is received.
81. A device according to example 79, wherein
   the personal information contains a personal identification number of the authentic user, and
   after the personal information is stored in said storage means, said processing means of said portable terminal device is connected to a network using the personal identification number contained in the personal information.
82. A device according to example 80, wherein
   the service information contains a password used to log in to a web site, and
   after the service information is stored in said storage means, said processing means of said portable terminal device acquires, from the service information, a password corresponding to a web site accessed through a network and transmits the acquired password to the accessed web site.
83. A token according to example 1, wherein
   said token further comprises an encryption circuit for encrypting data generated from the authentication data and dynamic information generated by the use device and transmitted using a key registered in advance, and
   said communication circuit transmits to the use device encrypted data generated by said encryption circuit.
84. A token according to example 1, wherein
   said token further comprises
   a result determination circuit for, when the collation result indicates that the authentication is successful, outputting the authentication data to said encryption circuit, and when the collation result indicates that the authentication fails, outputting the authentication data to said first communication circuit, and
   an encryption circuit for, in accordance with the authentication data from said result determination circuit, encrypting dynamic information transmitted from the use device using a key registered in advance, adding obtained encrypted data to the authentication data, and outputting the encrypted data, and
   said communication circuit transmits to the use device the authentication data with the encrypted data from said encryption circuit or the authentication data from said result determination circuit.
85. A token according to example 1, wherein
   said token further comprises
   an encryption circuit for encrypting dynamic information transmitted from the use device using a key registered in advance and outputting obtained encrypted data to said first communication circuit as data, and
   a first result determination circuit for, when the collation result indicates that the authentication is successful, instructing said encryption circuit to generate the encrypted data, and when the collation result indicates that the authentication fails, outputting data whose number of digits is different from that of the encrypted data to said first communication circuit, and
   said first communication circuit transmits to the use device the data from said encryption circuit or the data from said first result determination circuit.
86. A token according to example 84, wherein
   said token further comprises an ID storage circuit for storing identification information of said authentication token registered in advance, and
   said first communication circuit transmits to the use device the identification information stored in said ID storage circuit.
87. A system according to example 10, wherein said storage circuit stores, as the user information, personal information of the user and service information related to the service provided by the use device, and stores the personal information, service information, and registered information in separate storage areas.
88. A system according to example 10, wherein
   said authentication token further comprises an encryption circuit for encrypting dynamic information transmitted from the use device and data generated from the authentication data using' a key registered in advance,
   said first communication circuit transmits to the use device encrypted data generated by said encryption circuit, and
   said processing unit comprises a dynamic information generation circuit for generating the dynamic information to be transmitted to said authentication token, a decryption circuit for decrypting the encrypted data transmitted from said authentication token using a key corresponding to the key, and a result determination circuit for executing the predetermined processing only when a collation result of the authentication data contained in the data decrypted by said decryption circuit indicates that the authentication is successful, and the dynamic information contained in the data matches the dynamic information generated by said dynamic information generation circuit and transmitted to said authentication token.
89. A system according to example 10, wherein
   said authentication token further comprises a first result determination circuit for, when the collation result indicates that the authentication is successful, outputting the authentication data to said encryption circuit, and when the collation result indicates that the authentication fails, outputting the authentication data to said first communication circuit, and an encryption circuit for, in accordance with the authentication data from said first result determination circuit, encrypting dynamic information transmitted from the use device using a key registered in advance, adding obtained encrypted data to the authentication data, and outputting the encrypted data,
   said first communication circuit transmits to the use device the authentication data with the encrypted data from said encryption circuit or the authentication data from said first result determination circuit, and
   said processing unit comprises a dynamic information generation circuit for generating the dynamic information to be transmitted to said authentication token, a decryption circuit for decrypting the encrypted data transmitted from said authentication token using a key corresponding to the key, and a second result determination circuit for causing said decryption circuit to decrypt the encrypted data added to the authentication data only when an authentication result of the authentication data from said authentication token, which is received by said second communication circuit, indicates that the authentication is successful, and executing the predetermined processing only when the obtained dynamic information matches the dynamic information generated by said dynamic information generation circuit and transmitted to said authentication token.
90. A system according to example 10, wherein
   said authentication token further comprises an encryption circuit for encrypting dynamic information transmitted from the use device using a key registered in advance and outputting obtained encrypted data to said first communication circuit as data, and a first result determination circuit for, when the collation result indicates that the authentication is successful, instructing said encryption circuit to generate the encrypted data, and when the collation result indicates that the authentication fails, outputting data whose number of digits is different from that of the encrypted data to said first communication circuit,
   said first communication circuit transmits to the use device the data from said encryption circuit or the data from said first result determination circuit, and
   said processing unit comprises a dynamic information generation circuit for generating the dynamic information to be transmitted to said authentication token, a decryption circuit for decrypting the encrypted data transmitted from said authentication token using a key corresponding to the key, and a second result determination circuit for causing said decryption circuit to decrypt the encrypted data added to the data only when the number of digits of the data from said authentication token, which is received by said second communication circuit, indicates the number of digits when the authentication is successful, and executing the predetermined processing only when the obtained dynamic information matches the dynamic information generated by said dynamic information generation circuit and transmitted to said authentication token.
91. A system according to example88, wherein
   said authentication token further comprises an ID storage circuit for storing identification information of said authentication token registered in advance,
   said first communication circuit transmits to the use device the identification information stored in said ID storage circuit, and
   said decryption circuit decrypts the encrypted data from said authentication token using a key corresponding to the identification information transmitted from said authentication token.
92. A system according to example 89, wherein
   said authentication token further comprises an ID storage circuit for storing identification information of said authentication token registered in advance,
   said first communication circuit transmits to the use device the identification information stored in said ID storage circuit, and
   said decryption circuit decrypts the encrypted data from said authentication token using a key corresponding to the identification information transmitted from said authentication token.
93. A system according to example 90, wherein
   said authentication token further comprises an ID storage circuit for storing identification information of said authentication token registered in advance,
   said first communication circuit transmits to the use device the identification information stored in said ID storage circuit, and
   said decryption circuit decrypts the encrypted data from said authentication token using a key corresponding to the identification information transmitted from said authentication token.

## Claims

1. An authentication system for executing user authentication, which is necessary when a user is to use a service providing apparatus (102) for providing a predetermined service, by using biometrical information of a user, said system comprising:
an authentication token (101) which is normally held by a user and, when the user is to use said service providing apparatus, connected to said service providing apparatus (102) to perform user authentication on the basis of biometrical information of the user, said authentication token (101) comprising:
a personal collation unit (111) for performing collation on the basis of the biometrical information detected from the user to check whether the user is an authentic user,
a storage circuit (112) for storing a password of said authentication token (101) and token identification information for identifying said authentication token and
a first communication unit (113) for transmitting data from said storage circuit (112) to the service providing apparatus (102) as communication data,
wherein said personal collation unit (111) and first communication unit (113) are integrated,
**characterized in that**
when the personal collation result indicates that the collation is successful, said communication unit (113) transmits the password and token identification information in said storage circuit (112) to said service providing apparatus (102) as the communication data, and
the service providing apparatus (102) comprises a second communication unit (121) for receiving the password and token identification information, a database (122) for having the received password registered by being associated with the received token identification information; a collation circuit (123) for collating the received password and token identification information and their corresponding password in the database, and a processing unit (124) for executing predetermined processing when the collation by the collation circuit is successful thereby providing a service to the user and that
the token further comprises a detachably attachable protocol conversion unit (31, 41) for converting the communication data from said first communication unit (14, 113) into a data format receivable and decodable by the service providing apparatus and transmitting the communication data to the service providing apparatus.

2. A system according to claim 1, the token further comprising a radio unit (42) for transmitting the communication data from said communication unit (14, 113) to the service providing apparatus through a radio section.

3. A system according to claim 1, the token further comprising a radio unit (42) for transmitting the communication data from said protocol conversion unit (41) to the service providing apparatus through a radio section.

4. A system according to claim 1, the token further comprising a battery (BAT1 - BAT3) for supplying power.

5. A system according to claim 4, wherein said battery (BAT1 - BAT3) comprises a secondary battery charged by power supply from the use device when said authentication token is connected to the service providing apparatus.

6. A system according to claim 1, wherein
said token further comprises an encryption circuit (2012) for encrypting data generated from the authentication data and dynamic information generated by the service providing apparatus and transmitted using a key registered in advance, and
said communication unit transmits to the service providing apparatus encrypted data generated by said encryption circuit.

7. A system according to claim 1, wherein
said token further comprises
a result determination circuit (2015) and an encryption circuit (2012), wherein said result determination circuit (2015) is adapted for, when the collation result indicates that the authentication is successful, outputting the authentication data to said encryption circuit, and when the collation result indicates that the authentication fails, outputting the authentication data to said communication unit, and
said encryption circuit (2012) is adapted for, in accordance with the authentication data from said result determination circuit, encrypting dynamic information transmitted from the use device using a key registered in advance, adding obtained encrypted data to the authentication data, and outputting the encrypted data, and
said communication unit transmits to the use device the authentication data with the encrypted data from said encryption circuit or the authentication data from said result determination circuit.

8. A system according to claim 7, wherein
said token further comprises an ID storage circuit for storing identification information of said authentication token registered in advance, and
said communication unit transmits to the service providing apparatus the identification information stored in said ID storage circuit.

9. A system according to claim 1, wherein
said token further comprises
an encryption circuit for encrypting dynamic information transmitted from the service providing apparatus using a key registered in advance and outputting obtained encrypted data to said communication unit as data, and
a first result determination circuit for, when the collation result indicates that the authentication is successful, instructing said encryption circuit to generate the encrypted data, and when the collation result indicates that the authentication fails, outputting data whose number of digits is different from that of the encrypted data to said communication unit, and
said communication unit transmits to the service providing apparatus the data from said encryption circuit or the data from said first result determination circuit.

10. A system according to claim 1, further comprising a registration apparatus (103) connected to said service providing apparatus (102) through a communication network (104) to register the token identification information and password in said database (122) in association with each other.

11. A system according to claim 1, wherein
said service providing apparatus (102) has a password generation circuit (125) for generating a new password and transmitting the new password to said authentication token through said second communication unit and updating the password stored in said first database (122), and
said first communication unit (113) of said authentication token updates the password stored in said storage circuit (112) by the new password received from said service providing apparatus.

12. A system according to claim 1, wherein
said service providing apparatus (102) has a storage circuit (126) for storing device identification information for identifying said service providing apparatus, and said second communication unit (121) reads out the device identification information from said storage circuit (126) and transmits the identification information to said authentication token when said authentication token is connected, and
said authentication token (101) has a second database (114) for storing the password and the device identification information for identifying the service providing apparatus (102) in association with each other, and said first communication unit (113) uses, as the password to be transmitted to said service providing apparatus, a password obtained from said second database (114) using the device identification information received from said service providing apparatus as a key.
